# EUROPEAN PATENT SPECIFICATION

(11) **EP 2 693 837 B1**
(45) Date of publication and mention of the grant of the patent: **16.12.2015**
(21) Application number: 12763923.5
(22) Date of filing: 13.03.2012
(51) Int. Cl.: H05B 6/12, H05B 6/06

(54) **INDUCTION HEATING COOKWARE**
INDUKTIONSKOCHGERÄT
DISPOSITIF DE CUISSON À CHAUFFAGE PAR INDUCTION

(30) Priority: 29.03.2011 JP 2011072336
(43) Date of publication of application: 05.02.2014
(73) Proprietor: Mitsubishi Electric Corporation, Tokyo 100-8310 (JP); Mitsubishi Electric Home Appliance Co., Ltd., Fukaya-shi, Saitama 369-1295 (JP)
(72) Inventor: MASUDA, Ichirou, Saitama, 369-1295 (JP); KAWATA, Yukio, Saitama, 369-1295 (JP); KAWAMURA, Takeshi, Tokyo 102-0073 (JP)
(74) Representative: Pfenning, Meinig & Partner GbR
(86) International application number: PCT/JP2012/001728
(87) International publication number: WO 2012/132274

(56) References cited:
- WO-A1-2010/041354
- WO-A1-2010/101135
- WO-A1-2010/101135
- WO-A1-2010/101202
- WO-A1-2010/137271
- JP-A- 2008 140 762
- JP-A- 2009 054 338
- JP-A- 2009 152 101
- JP-A- 2009 224 251
- JP-A- 2010 033 885
- JP-A- 2010 282 782

## Description

### Technical Field

The present invention relates to an induction heating cooker configured to heat a heating target, such as a metallic pan in which a cooking target is stored, and which is placed on a top plate, from below the top plate of the heating cooker.

### Background Art

Heating cookers configured to inductively heat a heating target, such as a metallic pan or the like, using a heating coil, have gradually become widespread in recent years, due to their excellent features including safety, cleanliness, and high efficiency being recognized by consumers.

Such induction heating cookers are generally classified according to installation modes into a stationary type to be used by being disposed on a top face of a sink or the like, and a built-in (embedded) type to be set in an installation space within kitchen furniture such as a sink or the like. In either types, substantially the entirety of the top face is covered with a top plate (also referred to as top panel) formed of heat-resistant glass or the like, and one or multiple induction heat sources are disposed therebelow. As the induction heat sources, multiple heating coils are employed that have different diameters disposed concentrically and substantially on the same plane, and a high-frequency power generating circuit (also referred to as inverter circuit) configured to supply high-frequency power to each of the heating coils (e.g., see Patent Literature 1). According to such a configuration, output control of high-frequency power for the multiple heating coils having different diameters may individually be performed, and therefore, various heating patterns may be achieved.

In another known induction heating cooker, a circular heating coil is disposed in the center, multiple side heating coils are disposed so as to be adjacent to both sides of the central heating coil thereof, and the central heating coil and the side heating coils are driven by separate high-frequency generating power circuits. In this configuration, applications are made possible for heating a wide plane region at the same time, by taking into consideration the direction of high-frequency current flowing into the multiple side heating coils and the central heating coil so as to cancel induced electromotive force caused between the side heating coils and the central heating coil (e.g., see Patent Literature 2).

Yet another induction heating cooker are proposed in which, in order to avoide uneven heat distribution at the time of heating a large pan having a greater bottom size than the outer diameter size of one heating coil, and to heat a pan without adversely affecting cooking performance, the following elements are provided: a first heating coil, multiple heating coil groups disposed close to the first heating coil in which the minimum outer diameter of the heating coils is shorter than the minimum outer diameter of the first heating coil and that also have at least one circle center different from that of the first heating coil, and a controller configured to control output of a first inverter circuit configured to drive the first heating coil and a second inverter circuit configured to drive the multiple heating coil groups (e.g., see Patent Literature 3).

As still another induction heating cooker, there has been proposed an induction heating cooker including multiple toric heating coils disposed on substantially the same plane below a top plate and having a different circle center, an inverter circuit configured to supply induction heating electric power to the multiple heating coils, a controller configured to control output of the inverter circuit, and an operating unit configured to instruct the controller to start/stop heating, perform setting of heating, and so forth, so that the controller enables a cooking target within a heating target to generate convection by performing control so as to supply induction heating electric power to the heating coils of which number is equal to or greater than a half of, but less than, the total number of the multiple heating coils, and so as not to supply induction heating electric power to the remaining heating coils, in accordance with the instructions of the operating unit (e.g., see Patent Literature 4).

Similarly, in order to cause a cooking target to generate convection, there has been proposed an induction heating cooker including multiple toric heating coils disposed on substantially the same plane below a top plate, and having a different circle center, the induction heating cooker performing control so as to supply an amount of induction heating electric power to the heating coils of which number is equal to or greater than a half of, but less than, the total of the multiple heating coils thereof, in which the amount of induction heating electric power is larger than the amount of induction heating electric power to be supplied to the remainder of the heating coils (e.g., see Patent Literature 5).
WO2010101135 A1 discloses an induction cooking device which is provided with a center coil wound in a planar shape, a plurality of peripheral coils adjacent to and wound around the periphery of the center coil, and a high-frequency power supply for supplying high-frequency current independently to the center coil and each peripheral coil. The high-frequency power supply supplies high-frequency current essentially flowing in the same direction to the regions where the center coil and the peripheral coils are mutually adjacent.
WO2010137271 A1 discloses an induction cooking device equipped with a plurality of induction heating coils and with which it is possible to suppress the noise during operation, to mount the plurality of induction heating coils with a high space efficiency, and to prevent an increase in cost. The device comprises: a top plate on which an object to be heated is placed; a plurality of induction heating coils, which are provided below the top plate so that the center positions thereof differ from each other when viewed from above; a cooling fan that supplies cool air for cooling the induction heating coils; a plurality of coil holding members for holding the plurality of induction heating coils; and a support means for supporting the coil holding members. A single coil holding body is configured by integrally forming or affixing the plurality of coil holding members.

### Citation List

### Patent Literature

Patent Literature 1: Japanese Patent No. 2978069 (pp. 1-2, Fig. 1)
Patent Literature 2: Japanese Patent No. 3725249 (pp. 1-2, Fig. 3)
Patent Literature 3: Japanese Unexamined Patent Application Publication No. 2010-73384 (pp. 2, 7, Fig. 3)
Patent Literature 4: Japanese Unexamined Patent Application Publication No. 2010-165656 (pp. 1-2, Fig. 1 and Fig. 2)
Patent Literature 5: Japanese Unexamined Patent Application Publication No. 2010-146882 (pp. 1-2, Fig. 1 and Fig. 2)

### Summary of Invention

### Technical Problem

However, conventional techniques have disadvantages encountered when manufacturing certain types of heating cookers. One such heating cooker may include two types of induction heat soruces on the same cooker and independently control both. One of the heat sources is configured to heat the entire bottom face of a heating target such as a metal pan or the like by simultaneously driving a circular coil (central coil) and (non-circular) side coils disposed therearound. The other is of a type for example, made up solely of an annular induction heating coil. In this case, there are restrictions on the outer dimension of the cooker main unit, and particularly on the storage space of the induction heating coil(s). Accordingly, any one or both of functions of these heating sources may not sufficiently be exhibited. In particular, a built-in (embedded) type is, with regard to the Japanese sink specifications, roughly classified into two types, lateral widths of 75 cm or 60 cm, which entail limitation to the effective area of the storage space in which to insall the induction heating coil, causing problems as follows: that is, even when a large-diameter induction heating coil is prepared so as to heat a large heating target, other heating units have to be sacrificed thereby in assembling the cooker including the coils into the storage space, and so forth.

The present invention has been made in light of the above problems, and one principal object thereof is to provide a user-friendly induction heating cooker including a heating unit configured to simultaneously heat one heating target using a central coil and side coils disposed therearound, and a heating unit configured of a central coil alone, in which the heating units may be installed side by side. Solution to Problem

An induction heating cooker according to a first invention is an induction heating cooker including: a main unit having, on a top face thereof, a top plate on which a heating target such as a pan into which a cooking target is put, is placed; a first induction heating unit and a second induction heating unit which are adjacently disposed below the top plate; an inverter circuit configured to supply induction heating electric power to an induction heating coil of each of the induction heating units; a controller configured to control output of the inverter circuit; and an operating unit configured to instruct the controller to start heating or perform setting of heating power, and so forth, in which an oblong rectangular storage space configured to store the respective induction heating coils of the first and second heating units is provided inside the main unit below the top plate; the first heating unit includes a circular central heating coil, and multiple elongated side heating coils disposed around the central heating coil; the second heating unit includes a circular heating coil having a diameter smaller than a diameter of the first heating unit and greater than an outer diameter of the central heating coil; and the first heating unit is configured to allow automatic or manual switching of its operation between induction heating by the central heating coil alone, and cooperative heating by the central heating coil and the side heating coils, depending on a size of the heating target; and the side heating coils of the first induction heating unit includes four or more sub heating coils each having a flat shape, disposed close to both sides of the central heating coil and having a lateral width smaller than a radius of the central heating coil; and the sub heating coils are divided into a first group made up of adjacent sub heating coils of which number is equal to or greater than a half and less than the total, and a second group made up of the remainder of the sub heating coils; and the controller supplies, to the second group of the sub heating coils, a total sum of the power being greater than a total sum of induction heating electric power supplied from the inverter circuit to the first group of the sub heating coils then reduces the total sum of the induction heating electric power supplied to the second group of the sub heating coils, and supplies, from the inverter circuit to the first group of the sub heating coils, a total sum of power being greater than the said total sum; and the controller repeats the energizing switching operation for the first and second groups of the sub heating coils a plurality of number of time Thus, it is possible on the top plate having a limited area to select from three types of heating, that is, heating by the central coil alone, cooperative heating by the central coil and side coils, and heating by the second heating unit alone, and to handle a wider range of heating targets than those handled with a conventional two-burner type cooker merely having two types of circular heating coils, improving user-friendliness.

An induction heating cooker according to a second aspect of the invention futher includes: a third induction heating unit which is adjacently disposed below the top plate; in which the storage space is configured to store the respective induction heating coils of the first, second, and third heating units inside the main unit below the top plate; the third heating unit includes a circular heating coil having a diameter smaller than the outer diameter of the heating coil of the second heating unit. Thus, it is possible on the top plate having a limited area to select from four types of heating, that is, heating by the central coil alone, cooperative heating by the central coil and side coils, heating by the second heating unit alone, and heating by the third heating unit alone, and to handle a wider range of heating targets than those handled with a conventional two-burner type cooker merely having three types of circular heating coils, improving user-friendliness.

An induction heating cooker according to a third aspect of the invention futher includes: the first induction heating unit and the second induction heating unit are disposed adjacently arrayed in a lateral direction below the top plate; and a distance between the heating coils of the first and second heating units is set greater than distances between both wall faces of the storage space and the heating coils of the first and second heating units. Thus, it is possible on the top plate having a limited area to select from three types of heating of the central coil alone, cooperative heating of the central coil and side coils, and the second heating unit alone, and to handle a wider range of heating targets than those handled with a conventional two-burner type cooker simply having two types of circular heating coils, imporving user-friendliness. Even in the case where the first and second heating units have been driven at the same time, space distance between both heating units is set great, and accordingly, it may be expected that interference noise occurrence is suppressed.

An induction heating cooker according to a fourth aspect of the invention futher includes: a third induction heating unit which is adjacently disposed below the top plate; in which the storage space is configured to store the respective induction heating coils of the first, second, and third heating units is provided inside the main unit below the top plate; the third heating unit includes a circular heating coil having a diameter smaller than the outer diameter of the heating coil of the second heating unit; a maximum heating power of the third heating unit is set smaller than maximum heating powers of the first and second heating units; and a mutual distance between the heating coils of the first and second heating units is set greater than the distances between the heating coil of the third heating unit and the heating coils of the first and second heating units. Thus, it is possible to select on the top plate having a limited area from four types of heating of the central coil alone, cooperative heating of the central coil and side coils, the second heating unit alone, and the third heating unit alone, and to handle a wider range of heating targets than those handled with a conventional two-burner type cooker merely having three types of circular heating coils, and user-friendliness may be improved. Even in the case where greater heating power than the third heating unit having driven the first and second heating units into heating operation simultaneously, space distance between the first and second heating units is set great, and accordingly, it may be expected that interference noise occurrence is suppressed.

An induction heating cooker according to a fifth aspect of the invention futher includes: the lateral width of the top plate being set greater than a maximum lateral width of the storage space so as to protrude in the left and right directions further than the lateral width of the storage space. Thus, even with the storage space of the limited lateral width, on the top plate protruding in both of left and right sides as compared thereto, there may be selected three types of heating of the central coil alone, cooperative heating of the central coil and side coils, and the second heating unit alone, a wider range of heating targets than those handled with a conventional two-burner type cooker simply having two types of circular heating coils may be handled, and user-friendliness may be improved.

An induction heating cooker according to a sixth aspect of the invention futher includes: a third induction heating unit which is adjacently disposed below the top plate; in which the storage space is configured to store the respective induction heating coils of the first, second, and third heating units is provided inside the main unit below the top plate; there is provided a heating coil of the third heating unit having the same outer diameter as that of the central heating coil of the first heating unit; the third heating unit includes a circular heating coil having a diameter smaller than the outer diameter of the heating coil of the second heating unit. Thus, it is possible on the top plate having a limited area to select from four types of heating, that is, heating by the central coil alone, cooperative heating by the central coil and side coils, heating by the second heating unit alone, and heating by the third heating unit alone, and to handle a wider range of heating targets than those handled with a conventional two-burner type cooker simply having three types of circular heating coils, improving user-friendliness. The size of the heating coil of the third heating unit is set equal to the central coil of the first heating unit, and accordingly, it is not necessary to provide unnecessarily increased number of coils having different outer diameters, which is advantageous in light of manufacturing costs and management. Advantageous Effects of Invention

According to the present invention, a heating unit which enables heating a heating target by simultaneously using a circular central coil, and side coils disposed therearound, and a heating unit in which a circular coil alone is provided are installed in the lower space of a top plate side by side. Accordingly, a user-friendly induction heating cooking is provided.

### Brief Description of Drawings

[Fig. 1] Fig. 1 is a block diagram illustrating a basic configuration of the whole of a built-in type induction heating cooker according to Embodiment 1 of the present invention.
[Fig. 2] Fig. 2 is a plan view of a built-in type induction heating cooker main unit according to Embodiment 1 of the present invention.
[Fig. 3] Fig. 3 is a plan view of induction heating coils of the built-in type induction heating cooker main unit according to Embodiment 1 of the present invention.
[Fig. 4] Fig. 4 is an explanatory diagram 1 illustrating a heating operation by induction heating coils in the built-in type induction heating cooker according to Embodiment 1 of the present invention.
[Fig. 5] Fig. 5 is an energizing timing diagram 1 of the induction heating coils in the built-in type induction heating cooker according to Embodiment 1 of the present invention.
[Fig. 6] Fig. 6 is an explanatory diagram of a control process, illustrating basic heating operation of the whole of the built-in type induction heating cooker according to Embodiment 1 of the present invention.
[Fig. 7] Fig. 7 is a plan view illustrating a modification of the induction heating coils in the built-in type induction heating cooker according to Embodiment 1 of the present invention.
[Fig. 8] Fig. 8 is an energizing timing diagram 2 of the induction heating coils in the built-in type induction heating cooker according to Embodiment 1 of the present invention.
[Fig. 9] Fig. 9 is an energizing timing diagram 3 of the induction heating coils in the built-in type induction heating cooker according to Embodiment 1 of the present invention.
[Fig. 10] Fig. 10 is an explanatory diagram 2 illustrating a heating operation by the induction heating coils in the built-in type induction heating cooker according to Embodiment 1 of the present invention.
[Fig. 11] Fig. 11 is a perspective view with a partial exproded perspective view illustrating the whole of a built-in type induction heating cooker according to Embodiment 2 of the present invention.
[Fig. 12] Fig. 12 is a perspective view illustrating the whole of a main unit in a state in which the top panel of the built-in type induction heating cooker according to Embodiment 2 of the present invention has been removed.
[Fig. 13] Fig. 13 is a plan view illustrating the whole of the main unit of the built-in type induction heating cooker according to Embodiment 2 of the present invention.
[Fig. 14] Fig. 14 is an exploded perspective view of a state in which principal components such as a vertical partition plate and so forth of the built-in type induction heating cooker according to Embodiment 2 of the present invention have been removed.
[Fig. 15] Fig. 15 is a cross-sectional view taken alongvertical cross-section taken along a line D1-D1 in Fig. 11.
[Fig. 16] Fig. 16 is a cross-sectional view taken alongvertical cross-section taken along a line D2-D2 in Fig. 11.
[Fig. 17] Fig. 17 is a perspective view of principal portions with a partially cut-away component case and a cooling duct of the built-in type induction heating cooker according to Embodiment 2 of the present invention.
[Fig. 18] Fig. 18 is a plan view for describing positioning of heating coils of the built-in type induction heating cooker according to Embodiment 2 of the present invention.
[Fig. 19] Fig. 19 is a plan view illustrating an induction heat source on the left side of the built-in type induction heating cooker according to Embodiment 2 of the present invention.
[Fig. 20] Fig. 20 is a wiring diagram of a main heating coil of the induction heat source on the left side of the built-in type induction heating cooker according to Embodiment 2 of the present invention.
[Fig. 21] Fig. 21 is an enlarged illustrative partial plan view of the induction heat source on the left side of the built-in type induction heating cooker according to Embodiment 2 of the present invention.
[Fig. 22] Fig. 22 is a plan view of a coil support member for the main heating coil of the induction heat source on the left side of the built-in type induction heating cooker according to Embodiment 2 of the present invention.
[Fig. 23] Fig. 23 is an overall view of a control circuit of the built-in type induction heating cooker according to Embodiment 2 of the present invention.
[Fig. 24] Fig. 24 is a diagram of a full bridge circuit serving as principal portions of a control circuit of the built-in type induction heating cooker according to Embodiment 2 of the present invention.
[Fig. 25] Fig. 25 is a simplified diagram of the full bridge circuit serving as principal portions of the control circuit of the built-in type induction heating cooker according to Embodiment 2 of the present invention.
[Fig. 26] Fig. 26 is a vertical cross-sectional view in the case of performing heating operation by putting a large-diameter pan above the induction heat source on the left side of the built-in type induction heating cooker according to Embodiment 2 of the present invention.
[Fig. 27] Fig. 27 is a vertical cross-sectional view illustrating the induction heat source portion on the left side of the built-in type induction heating cooker according to Embodiment 2 of the present invention.
[Fig. 28] Fig. 28 is a plan view illustrating integrated display means of the built-in type induction heating cooker according to Embodiment 2 of the present invention.
[Fig. 29] Fig. 29 is a plan view illustrating an exemplary display screen of the integrated display means in the case of using a left IH heat source alone of the built-in type induction heating cooker according to Embodiment 2 of the present invention.
[Fig. 30] Fig. 30 is a plan view illustrating an exemplary display screen of the integrated display means in the case of using the left IH heat source alone of the built-in type induction heating cooker according to Embodiment 2 of the present invention.
[Fig. 31] Fig. 31 is a plan view illustrating an exemplary display screen of the integrated display means in the case of performing rapid-heating cook using the left IH heat source of the built-in type induction heating cooker according to Embodiment 2 of the present invention.
[Fig. 32] Fig. 32 is an explanatory diagram of a control process, illustrating basic heating operation of the whole of the built-in type induction heating cooker according to Embodiment 2 of the present invention.
[Fig. 33] Fig. 33 is a flowchart 1 of control operation of the built-in type induction heating cooker according to Embodiment 2 of the present invention.
[Fig. 34] Fig. 34 is a flowchart 2 of the control operation of the built-in type induction heating cooker according to Embodiment 2 of the present invention.
[Fig. 35] Fig. 35 is a flowchart 3 illustrating control operation in the case of changing the heating power of the built-in type induction heating cooker according to Embodiment 2 of the present invention.
[Fig. 36] Fig. 36 is a diagram indicating the heating power values (heating electric power) of the main heating coil and sub heating coils in the case where the heating power is 3000 W or 1500 W, of the built-in type induction heating cooker according to Embodiment 2 of the present invention.
[Fig. 37] Fig. 37 is a diagram indicating the heating power values (heating electric power) of the main heating coil MC and sub heating coils in the case where the heating power of the the built-in type induction heating cooker is 500 W according to Embodiment 2 of the present invention.
[Fig. 38] Fig. 38 is a perspective plan view of an induction heating cooker according to Embodiment 3 of the present invention.
[Fig. 39] Fig. 39 is a plan view in a state in which a top plate 21 has been removed in the induction heating cooker according to Embodiment 3 of the present invention.
[Fig. 40] Fig. 40 is a cross-sectional view taken along a line D3-D3 in Fig. 38, illustrating the induction heating cooker according to Embodiment 3 of the present invention.
[Fig. 41] Fig. 41 is an explanatory diagram illustrating dimension of heating coils of a left-side induction heat source of the induction heating cooker according to Embodiment 3 of the present invention.
[Fig. 42] Fig. 42 is an explanatory enlarged view illustrating dimension of a sub heating coil of the induction heating cooker according to Embodiment 3 of the present invention.
[Fig. 43] Fig. 43 is a plan view in a state in which a top plate 21 of an induction heating cooker according to Embodiment 4 of the present invention has been removed.
[Fig. 44] Fig. 44 is an explanatory diagram illustrating a relation of heating coils of a right induction heat source and inverter circuits of the induction heating cooker according to Embodiment 4 of the present invention.
[Fig. 45] Fig. 45 is a simplified perspective view of the whole of an induction heating cooker according to Embodiment 5 of the present invention.
[Fig. 46] Fig. 46 is a plan view where the whole of the induction heating cooker according to Embodiment 5 of the present invention is viewed from above.
[Fig. 47] Fig. 47 is a plan view illustrating an example of induction heating operation of the induction heating cooker according to Embodiment 5 of the present invention.
[Fig. 48] Fig. 48 is a plan view illustrating another example of induction heating operation of the induction heating cooker according to Embodiment 5 of the present invention.
[Fig. 49] Fig. 49 is a plan view where the whole of the top plate is viewed from above, which illustrates a modification of an operating unit and a display unit of the induction heating cooker according to Embodiment 5 of the present invention. Description of Embodiments

### Embodiment 1

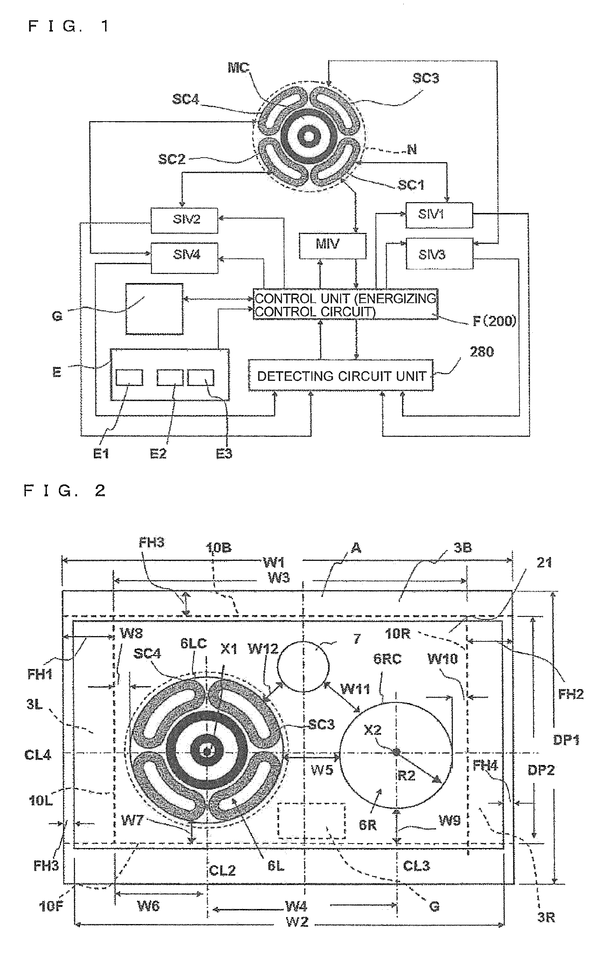

Fig. 1 to Fig. 9 illustrate an induction heating cooker according to Embodiment 1 of the present invention, and illustrates an example of a built-in (embedded) type induction heating cooker.
Fig. 1 is a block diagram illustrating a basic configuration of the whole of the built-in type induction heating cooker according to Embodiment 1 of the present invention.
Fig. 2 is a plan view of a built-in type induction heating cooker main unit according to Embodiment 1 of the present invention.

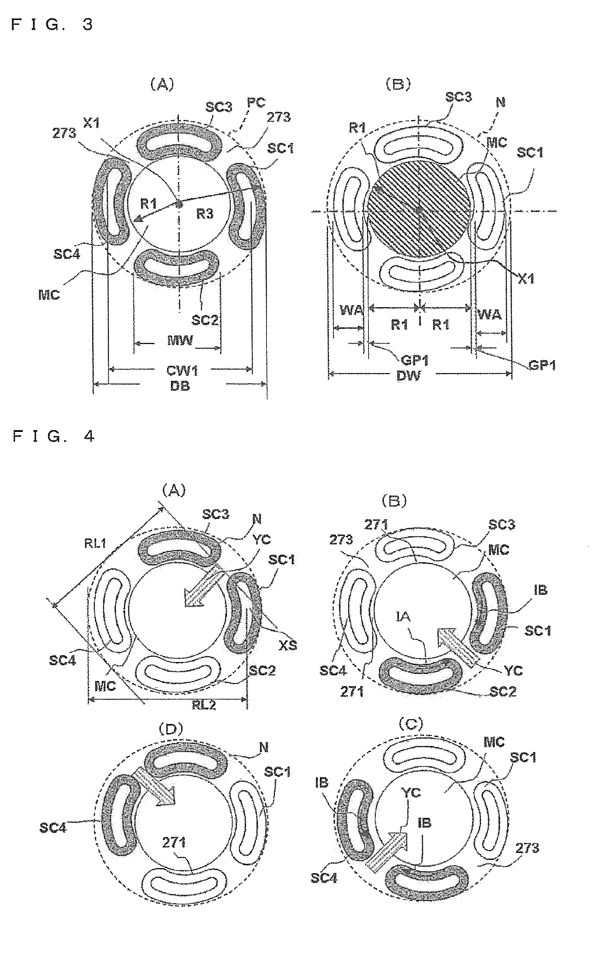

Fig. 3 is a plan view of induction heating coils of the built-in type induction heating cooker main unit according to Embodiment 1 of the present invention.
Fig. 4 is an explanatory diagram 1 illustrating a heating operation by induction heating coils in the built-in type induction heating cooker according to Embodiment 1 of the present invention.

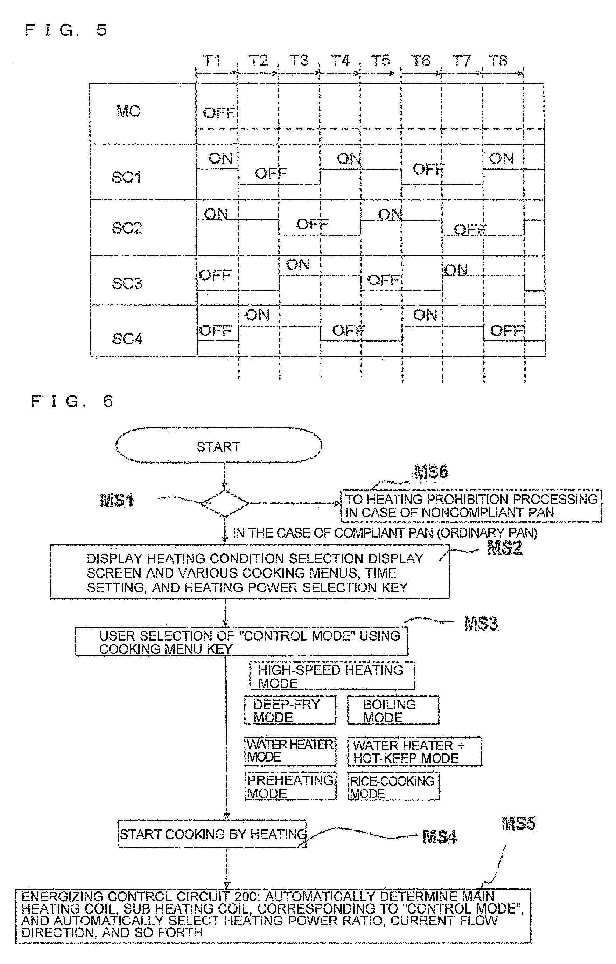

Fig. 5 is an energizing timing diagram 1 of the induction heating coils in the built-in type induction heating cooker according to Embodiment 1 of the present invention.
Fig. 6 is an explanatory diagram of a control process, illustrating basic heating operation of the whole of the built-in type induction heating cooker according to Embodiment 1 of the present invention.

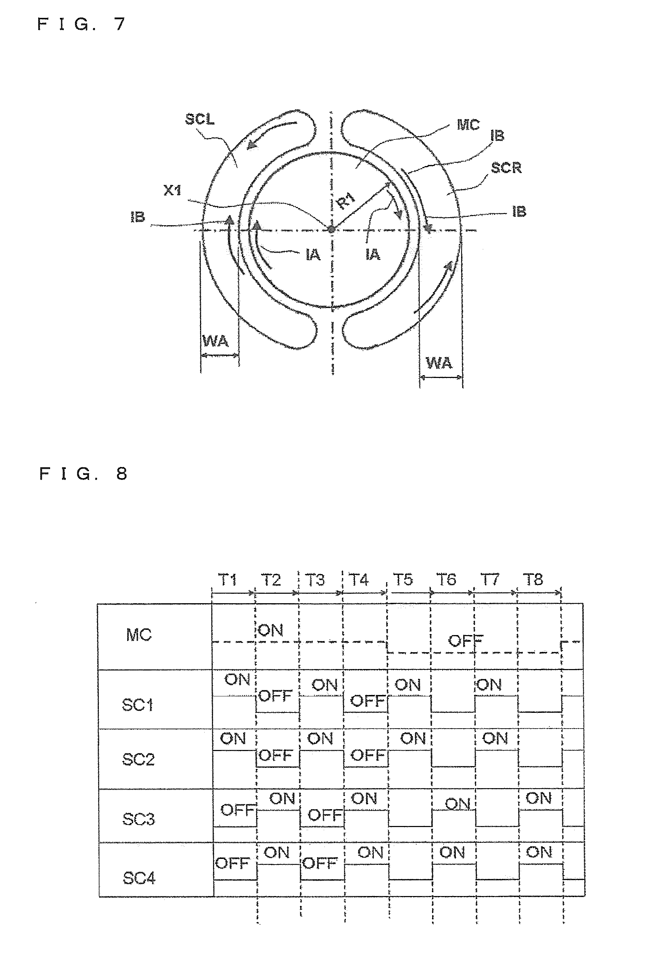

Fig. 7 is a plan view illustrating a modification of the induction heating coils in the built-in type induction heating cooker according to Embodiment 1 of the present invention.
Fig. 8 is an energizing timing diagram 2 of the induction heating coils in the built-in type induction heating cooker according to Embodiment 1 of the present invention.

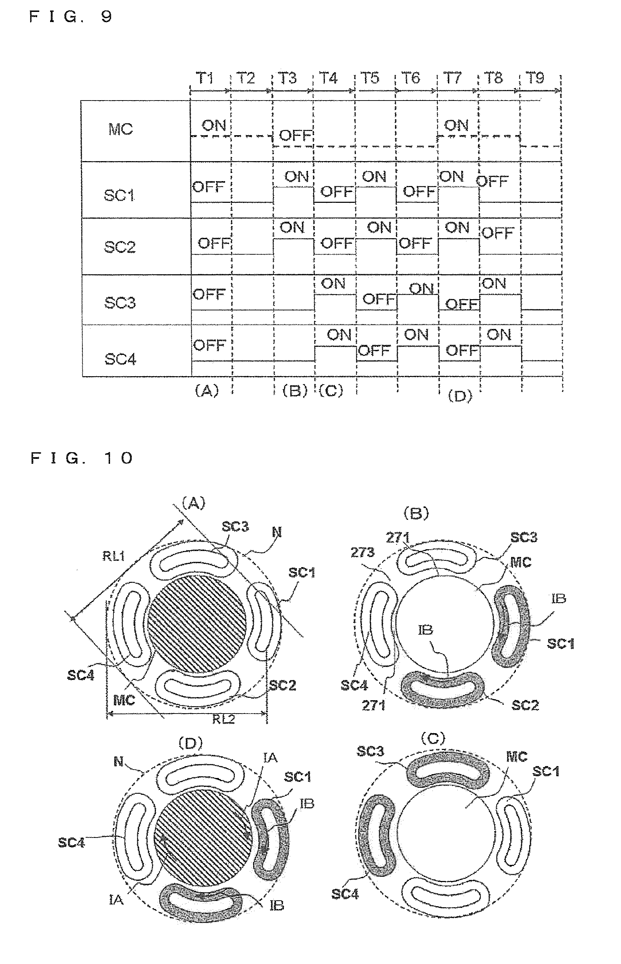

Fig. 9 is an energizing timing diagram 3 of the induction heating coils in the built-in type induction heating cooker according to Embodiment 1 of the present invention.
Fig. 10 is an explanatory diagram 2 illustrating a heating operation by the induction heating coils in the built-in type induction heating cooker according to Embodiment 1 of the present invention.

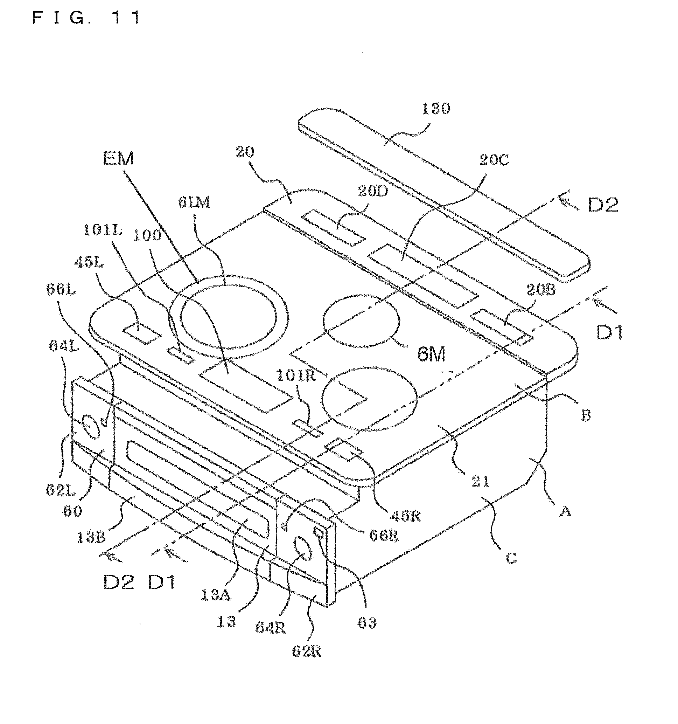

Fig. 11 is a heating operation explanatory diagram 2 of the induction heating coil in the built-in type induction heating cooker according to Embodiment 2 of the present invention. Note that the same portions or corresponding portions are denoted with the same reference numerals throughout the drawings.

Each of terms used for Embodiment of the present invention will be defined. "Operation conditions" of heating means D refers to electrical and/or physical conditions for heating, and is a general term referring to energizing time, energizing amount (heating power), heating temperature, energizing pattern (consecutive energizing, intermittent energizing, etc.), and so forth. That is, this means energizing conditions of the heating means D.

"Display" refers to operation to visually inform a user of relevant information (including those of a purpose for attracting attention to abnormal use, and a purpose for informing occurrence of an abnormal running state; hereinafter, this is simply referred to as "cooking-related information") that will be reference on operation conditions of a cooker and cooking, and uses change of characters, a symbol, an illustration, a color, luminescence presence, luminescent brightness, or the like. However, "display" in the case where later-described "wide-area light-emitting unit" or "individual light-emitting unit" performs displaying by emitting light or by lighting up, and "display" in the context of mentioning "first display" and "second display" simply refer to outputting light of a predetermined color by emitting light or lighting up; and it may be expressed that display is "changed" or "switched", or the like for change of a lighting mode or visual effects such as the color of light, brightness, consecutive lighting, a blink state, or the like,. Also, "luminescence" and "lighting" have the same meaning, but since it is often the case that light emission by a light-emitting element itself such as a light-emitting diode or the like is called luminescence, and a light emission by a lamp is called lighting. Accordingly, in this manner, these may be described together in the following description. Note that, even when light is electrically or physically emitted or the light emitting element is on, in the case where only weak light that the user cannot visually confirm reaches the user, the user cannot confirm a result of "luminescence" or "lighting"; this case does not correspond to "luminescence" or "lighting" unless otherwise stated. For example, a later-described top plate is not generally colorless and transparent, and its material itself has a faint color before the surface is coated with paint or the like, and accordingly, the permeability of a visible ray is not 100%. Therefore, for example, in the case where the light of a light-emitting diode is weak, it may happen that the user cannot visually recognize light thereof from above the top plate.

As "display means" of the display unit, unless otherwise stated, a liquid crystal (LCD), various light-emitting elements (there are two types of LED (Light Emitting Diode) and LD (Laser Diode) as an example of a semiconductor light-emitting element), organic electroluminescence (Electro Luminescence: EL) elements, and so forth are included. Therefore, the display means include display screens such as liquid crystal screens, EL screens, and so forth. However, the display means of later-described "wide-area light-emitting unit" and "individual light-emitting unit" may be light-emitting means such as a simple lamp, LED, or the like.

"Informing" refers to operation for informing the user of operation conditions of control means and cooking-related information using display or electric audio (which means audio electrically created or synthesized) in order to have the user recognize these.

"Informing means" refers to, unless otherwise stated, informing means using audible sound such as a buzzer, speaker, or the like, and informing means using characters, a symbol, an illustration, animation, or visible light.

"Cooperative heating" refers to operation to induction-heat the same heating target by supplying power to each of two or more heating coils serving as induction heat sources.

Hereinafter, Embodiment 1 of an induction heating cooker according to the present invention will be described in detail with reference to Fig. 1 to Fig. 10.

In Fig. 1 and Fig. 2, the induction heating cooker of the present invention includes a main unit A having an oblong rectangle shape in plan view. This main unit A includes a top plate portion B in which the whole of the top face of the main unit A is covered by a top plate 21, a casing C (not illustrated in the drawing) making up circumference (outer hull) excluding the top face of the main unit A, heating means D (later-described left-side induction heat source 6L or the like) configured to heat a pan or food or the like using electric energy or the like, operating means E to be operated by the user, control means F configured to control the heating means in response to a signal from the operating means E, and display means G configured to display operation conditions of the heating means.

Some of the known devices include, as heating means D, electric heating means called a grille oven or roaster though not used in Embodiment 1. In Fig. 1, E1 is a first selection unit situated at the operating means E provided in the front part of the upper face of the main unit A, to be input-operated by a touch-type key configured to detect whether there is input, by using change in electrostatic capacitance, or pressing-type key including a mechanical electric contact, or the like. Similarly, E2 is a second selection unit, and E3 is similarly a third selection unit, and the user can select later-described various cooking menus by operating these selection units. The functional features of the selection units E1 to E3 will be described later in detail.

In Fig. 1 and Fig. 2, MC is a main heating coil of a left-side induction heat source, and is disposed close to below the top plate (not illustrated in the drawings) where a heating target N is placed. In the drawings, illustrated with a dashed-line circle is the outline of the heating target N such as a pan or the like. Note that the left-side induction heat source is equivalent to "first induction heating unit" as used in the present invention.

This main heating coil is finally formed into a disc shape so that the outline shape becomes a circle with a center point X1 as a base point, by bundling 19 (or a double or quadruple of 19) thin wires of around 0.1 mm to 0.3 mm into a circular shape, and winding this one or multiple bundles (hereinafter, referred to as group wires) while twisting these. The diameter (maximum outer diameter) of the main heating coil MC is, as illustrated in Fig. 3, around 128 mm, and a radius R1 is around 64 mm. Note that each dimension described below is an example, and an around numeric value. In Embodiment 1, this main heating coil MC has capability with the maximum consumption power (maximum heating power) of 1500 W.

SC1 to SC4 are four elongated sub heating coils (also referred to as side coils) symmetrically disposed back and front and left and right of a center point X1 of the main heating coil MC as a base point and with an equidistance from one another, and transverse dimension as viewed from the center point X1 in the radial direction, that is, "minor axis" (also referred to as "thickness" or "lateral width") WA is smaller than the radius R1 of the main heating coil MC.

### First Exemplary Dimension

With the examples in Fig. 1 and Fig. 2, there is used the WA set to 30 mm. A major axis MW is around quadruple of the minor axis, and specifically, around 120 mm (in the case of the minor axis of 30 mm with the major axis of 120 mm, the ratio of both becomes 4:1).

A gap GP1 between the outermost portion of the main heating coil MC and the side coils SC1 to SC4 is 10 mm. Note that the coil width is 15 mm.

### Second Exemplary Dimension

The WA is 40 mm. The major axis MW is around 3.5 times of the minor axis, and specifically, around 150 mm (ratio between the major axis and minor axis is 3.5:1). The gap GP1 between the outermost portion of the main heating coil MC and the side coils SC1 to SC4 is 7 mm. Note that the coil width is 15 mm.

Note that, in Fig. 3 to Fig. 10, in the case of describing a dimension relation of the components, description will be made with the first Exemplary Dimension as a reference.

The "side" of the main heating coil MC include, unless there is some particular contradiction with other descriptions, not only the right side and left side but also the upper side and lower side (front side) in Fig. 2, "both sides" refers not only to both of the left and right but also diagonal and longitudinal directions.

The four sub heating coils SC1 to SC4 are disposed while keeping predetermined space 271 on the outer circumferential face of the main heating coil MC. This space 271 is the same as GP1 in Fig. 3. The sub heating coils SC1 to SC4 mutually have a substantially equal interval (mutually keep the space 273). The sub heating coils SC1 to SC4 are also formed by the one or multiple group wires being wound while being twisted, the group wires being rolled in a predetermined direction so that the outer shape becomes an oval or elliptical shape, the group wires being partially restricted with a binding tool, or being fixed with a heat resistant resin or the like. The four sub heating coils SC1 to SC4 are the same in a planar shape, and all of the vertical, lateral, and height (thickness) dimensions are the same. Accordingly, four same sub heating coils have been manufactured, and have been disposed in four locations.

The tangent directions of these four sub heating coils SC1 to SC4, as illustrated in Fig. 3, at circumference of the main heating coil MC of the radius R1 from the center point X1, just agree with the center line in the longitudinal direction of each of the sub heating coils SC1 to SC4, in other words, agree with the major axis direction thereof.

In the sub heating coils SC1 to SC4, each group wire extends while curving in an oval shape to electrically make up one closed circuit. The vertical dimension (also referred to as height or thickness) of the main heating coil MC and the vertical dimension of each of the sub heating coils SC1 to SC4 are the same, and moreover, the sub heating coils SC1 to SC4 are installed horizontally and fixed so that the distance between the upper faces thereof and the lower face of the top plate become the same dimension.

In Fig. 3, DW denotes the maximum outer diameter of the heating target N such as a metallic pan or the like which may be induction-heated by the left-side induction heat source. From the diameter of the main heating coil MC and the thickness WA of the sub heating coils SC1 to SC4 as described above, with the example in Fig. 3, the heating target N with the outline dimension DW of the bottom being around 250 mm may be induction-heated. This maximum outer diameter is larger than the diameter of a circle PC illustrated in (A) in Fig. 3 by around 40 to 50 mm.

Fig. 1 is a circuit block diagram of a power supply device housed in the induction heating cooker 1. A power supply device according to the present invention in this application schematically includes a converter (e.g., also referred to as a diode bridge circuit or a rectification bridge circuit) configured to convert three-phase AC power supply to DC current, a smoothing capacitor connected to the output edge of the converter, a main inverter circuit (power supply circuit unit) MIV for the main heating coil MC connected to this smoothing capacitor in parallel, and sub inverter circuits (power supply circuit units) SIV1 to SIV4 for the sub heating coils SC1 to SC4 similarly connected to the smoothing capacitor in parallel. Note that, in this drawing, later-described right-side induction heat source 6R and radiation type central electric heat source 7 are not described.

The main inverter circuit MC and sub inverter circuits SIV1 to SIV4 convert the DC current from the converter into a high-frequency current, and (mutually) independently supply the high-frequency current to each of the main heating coil MC and sub heating coils SC1 to SC4.

In general, the impedance of an induction heating coil is changed depending on presence or absence and size (area) of the heating target N placed above the induction heating coil. Therefore, accompanied with this, the amount of current to flow into the main inverter circuit MIV and sub inverter circuits SIV1 to SIV4 is also changed. The power supply device of the present invention includes a current detecting unit (detecting means) 280 configured to detect the amount of each current to flow into the main heating coil MC and sub heating coils SC1 to SC4. This current detecting unit is one kind of a later-described heating target placement determining unit.

According to the present invention, the amount of current to flow into the main heating coil MC and sub heating coils SC1 to SC4 is detected using the current detecting unit 280, and accordingly, estimation is made regarding whether the heating target N is placed above each of the coils, or whether or not the bottom area of the heating target N is greater than a predetermined value. Then the estimation result is transmitted to the controller (hereinafter, referred to as "energizing control circuit") 200. Accordingly, it is possible to detect the conditions on the relative position of the heating target N with sufficient precision.

Note that, as a unit configured to detect the conditions on the relative position of the heating target N, the current detecting unit 280 configured to detect the amount of current flowing into the main inverter circuit MIV and sub inverter circuits SIV1 to SIV4 has been employed, but the detecting means are not restricted to this, the conditions on the relative position of the heating target N may be detected using another optional sensor such as a mechanical sensor, an optical sensor, or the like.

The energizing control circuit 200 of the power supply device of the present invention is, as illustrated in the drawing, connected to the current detecting unit 280, and provides a control signal to the main inverter circuit MIV and sub inverter circuits SIV1 to SIV4 according to the conditions on the relative position of the heating target N. Specifically, the energizing control circuit 200 receives a signal (data indicating the conditions on the relative position of the heating target N) relating to the amount of current flowing into the main heating coil MC and sub heating coils SC1 to SC4 detected by the current detecting unit 280, and in the case where it is determined that the heating target N is not placed or that the diameter of the heating target N is smaller than a predetermined value (e.g., 120 mm), selectively controls the main inverter circuit MIV and sub inverter circuits SIV1 to SIV4 so as to prohibit supply of the high-frequency current to the main heating coil MC and sub heating coils SC1 to SC4 or stop (supply thereof in the case where supply has already been started).

According to the present invention, the energizing control circuit 200 supplies a control signal according to the conditions on the relative position of the heating target N to the main inverter circuit MIV and sub inverter circuits SIV1 to SIV4, and accordingly, power supply to the main heating coil MC and sub heating coils SC1 to SC4 may mutually independently be controlled. A cooking method may be realized such that only the surface of a pan (side face of a pan) such as a frying pan or the like is preheated by not driving the main heating coil MC located in the center (set to an off state), but by driving all of the sub heating coils SC1 to SC4 being driven (set to an on state).

Note that, in the operating means E, there are provided the first selection unit E1, second selection unit E2, and third selection unit E3, but there may further be provided a switch for the user optionally prohibiting cooperative heating operation of the left-side induction heat source 6L, that is, simultaneous heating by the main heating coil MC and sub heating coils SC. Thus, in the case of heating a pan of which the diameter is obviously small using the left-side induction heat source 6L, the user can select heating by the main heating coil MC alone instated of cooperative heating. Specifically, the amount of current flowing into the main heating coil MC and sub heating coils SC1 to SC4 is detected by the current detecting unit 280, the energizing control circuit 200 does not have to perform estimation and/or processing regarding whether or not the heating target N is placed above each of the coils, or whether or not the bottom area of the heating target N is greater than a predetermined value.

Next, description will be made regarding "heating power" to determine the amount of heating in the case of performing cooking using the right-side induction heat source 6R, left-side induction heat source 6L, and radiation type central electric heat source 7.

The adjustment range of heating power has been determined by the energizing control circuit 200 in the manner as follows, and the user can arbitrally select desired heating power out of these heating power values using the operating means E.

Left-side induction heat source 6L: rated maximum heating power of 3000 W, rated minimum heating power of 150 W

The heating power values comprise nine levels of 150 W, 300 W, 500 W, 750 W, 1000 W, 1500 W, 2000 W, 2500 W, and 3000 W.

Right-side induction heat source 6R: rated maximum heating power of 3000 W, rated minimum heating power of 150 W

The heating power values comprise nine levels of 150 W, 300 W, 500 W, 750 W, 1000 W, 1500 W, 2000 W, 2500 W, and 3000 W.

Radiation type central electric heat source 7: rated maximum heating power of 1500 W, rated minimum heating power of 200 W

The heating power values are fourteen levels from 200 W to 1500 W for each 100 W.

In Fig. 2,

### (Main Unit A)

With the main unit A, as illustrated in Fig. 2, the whole of the top face is covered with a later-described top panel B, and the outer shape of this main unit A is formed in a substantially regular square in accordance with size and space for covering an installation opening formed in kitchen furniture (not illustrated in the drawing) such as a sink or the like.

The upper portion of a main unit case 2 formed of a metallic thin plate forming the outline of the main unit A is designed as a box shape having inner side dimension in which lateral width W3 is 540 mm, and depth DP2 is 402 mm. The left-side induction heating unit 6L is installed in this main unit case. Reference numeral 6R denotes a right-side induction heating unit, and includes an induction heating coil 6RC wound in a planar disk shape.

As illustrated in Fig. 2, three portions of the rear edge portion, right edge portion, and left edge portion of the top face opening of the main unit case 2 each include a flange formed by being integrally folded back into a L-letter shape, the rear flange 3B, left-side flange 3L, right-flange 3R, and a front flange plate 2B are placed on the top face of the installation portion of the kitchen furniture, thereby supporting the placement and weight of the heating cooker.

With regard to the main unit case 2, on the standard of Japanese sinks, there are two types of which the lateral widths W1 are 75 cm and 60 cm, but the 75-cm type is designed with the lateral wide W1 of around 750 mm and depth DP1 of 508 mm to 510 mm.

The top plate 21 is installed so as to cover the top face of the main unit case 2, the heating target N (hereinafter, may simply referred to as pan), for example, such as a pan made up of metal, having magnetism, is placed above this top plate, and is heated by the induction heat source 6L and 6R installed therebelow. A heat-resisting reinforced glass plate which makes up the top plate 21 is configured, as illustrated in Fig. 2, in which the lateral width W2 is 728 mm, the depth is the size of DP3 substantially equivalent to the depth DP2. In Fig. 2, FH1 to FH3 indicate, in the case of viewing the main unit case 2 from above, the widths of plan face portions remaining around the top plate 21 thereof, and FH1 and FH2 are around 10 mm, and FH3 is around 50 to 80 mm. With the top plate portion B, there are the plan face portions FH3 and FH4 having a predetermined plan width around the top plate 21, but the widths of these plan face portions are each around 10 mm.

Reference numeral 7 detnoes a radiation type central electric heat source, and is disposed in a position on a lateral center line CL1 of the top plate 21 and also close to the rear portion of the top plate 21. The radiation type central electric heat source 7 heats the heating target N such as a pan or the like through the top plate 21 from therebelow by an electric heater (e.g., nichrome wire, halogen heater, radiant heater) of a type to perform heating by radiation being used.

The radiation type central electric heat source 7 has a circular container shape with the whole of the top face being opened, in which the maximum outer diameter is around 130 mm, and the height (thickness) is 15 mm. The distance W12 of this central electric heat source 7 and the side coil SC3 of the left-side induction heat source 6L is set to around 45 to 50 mm, and the distance W11 with the heating coil of the right induction heat source 6R is set to around 40 mm.

Later-described control means F configured to control the cooking conditions of the left and right induction heat sources 6L and 6R and central electric heat source 7 is housed in the main unit case 2, and later-described operating means E for inputting the cooking conditions to this control means is disposed on the top face in the front of the main unit case 2.

Reference sign G denotes display means configured to display the cooking conditions input by the operating means, for example, heating power, heating time, and so forth, and is a liquid crystal display screen for example, and is, so as to be seen through this screen from the top face of the top plate 21, installed therebelow.

Though not illustrated in the drawing, an air-sending device configured to cool an inverter circuit board configured to supply high-frequency power to the induction heat source 6L and 6R, and heating coils making up the induction heat sources 6L and 6R are housed in the main unit case 2.

The outer shape of the heating coil 6RC of the right-side induction heat source 6R is a circle, and the radius R2 thereof is around 90 mm, that is, the outer diameter is around 180 mm. Note that the maximum outer diameter may be changed to 200 mm. The center of this heating coil 6RC is positioned in an intersecting point (center point X2) between the straight line CL4 and a straight line CL3 orthogonal thereto.

A distance W4 between the intersecting points X1 and X2 is set to a suitable interval out of 300 mm to 350 mm.

The left-side induction heat source 6L and right-side induction heat source 6R are in a state adjacent to each other below the top plate 21, but a predetermined dimension is secured as a distance W5 between both so as not mutually have an unfavarouble influence at the time of induction heating. At least 8 to 9 cm or more is desirable as a predetermined dimension.

Note that this distance W5 is an interval between the outer circumference of a perfect circle whose center point is in the X1, and the left-edge face of the heating coil 6RC, including the four side coils SC1 to SC4. The radius R3 of the perfect circle PC whose center point is in the X1, including the four side coils SC1 to SC4, is around 104 mm.

Reference numeral 10 detnotes a component storage room of which the planar shape is a rectangle, and is formed within the main unit case 2 surrounded by four faces of a front wall 10F, a right wall 10R, a left wall 10L, and a rear wall 10B which make up the main unit case 2. Note that an interval between the left and right walls 10R and 10L is W3, depth of the component storage room 10 formed by the front wall 10F and right wall 10R is the DP2.

Note that, in Fig. 3, CW1 indicates a dimension of a distance between center points in latidudinal direction of two side coils which mutually face, for example, the side coils SC1 and SC4. With the example in Fig. 3, this dimension is around 178 mm. This dimension is obtained from computation of "CW1 = R1 + R1 + GP1 + GP1 + 15mm + 15mm = 64mm + 64mm + 10mm + 15mm + 10mm + 15mm".

Next, description will be made regarding specific operation of the left-side induction heat source 6L which is characteristic of the present invention. First, description will be made regarding a principal cooking menu which can be executed by the energizing control circuit 200 which makes up the core of the control means F described in the present invention.

### High-speed heating mode (cooking menu where heating speed is prioritized, selected by the first selection unit E1)

The user can manually set heating power to be applied to the heating target N.

Total heating power of the main heating coil MC and the sub heating coils is, as described above, , selected by the user sets one level out of the nine levels in a range from 150 W to 3.0 kW.

A heating power ratio between the main heating coil MC and the sub heating coils SC1 to SC4 (hereinafter, referred to as "main-sub heating ratio") is automatically determined by the energizing control circuit 200 so as not to exceed the total heating power set by the user and also so as to bewithin a predetermined range of heating power ratio, and the user cannot arbitralily set the heating ratio. For example, the main-sub heating ratio is 2:3 (at the time of large heating power) to 1:1 (at the time of small heating power).

The main heating coil MC and sub heating coils SC1 to SC4 are driven at the same time, but in this case, control is performed so as to obtain the same direction of high-frequency current in regions in which the both are adjacent to each other.

Deep-fry mode (automatic) (cooking menu where heating speed and hot-keep function are required, selected by the third selection unit E3)

The heating target N (deep fryer or the like) in which frying oil is put is heated to a predetermined temperature (first process), and then, the energizing control circuit 200 automatically adjusts heating power so as to keep the temperature of the heating target N in a predetermined range (second process).

### First Process: The heating target N is rapidly heated to a predetermined temperature (e.g., 180 degrees centigrade).

The heating power of the main heating coil is 2.5 kW.

Second Process: Here, deep frying is implemented, and ingredient materials for deep-fried food, and so forth are placed in the heating target N. This process runs for a maximum of 30 minutes. With this process, (optional) heating power setting by the heating power setting unit is prohibited. After a lapse of 30 minutes, the heating operation is automatically ended (instructions for extension may also be performed).

The main-to-sub heating ratio is automatically determined so that the first process and second process are both included in a predetermined range, and the user cannot arbitralilly set the heating power ratio between the main heating coil and sub heating coils. For example, the main-sub heating ratio automatically changes from 2:3 (at the time of large heating power) to 1:1 (at the time of small heating power).

The main and sub heating coils are simultaneously driven at the first process, and the flows of high-frequency current at the coils in mutually adjacent ranges agree. This is because the heating target N is rapidly heated to a predetermined temperature. At the second process as well, similarly, the main and sub heating coils are simultaneously driven, and the directions of flows of current agree. However, in the case where the change in temperature is continuously small partway through deep frying, the apparatus reverses the direction of current for uniformity of heating.

Preheating mode (cooking menu where uniformity of heating is prioritized, selected by the second selection unit E2) A first preheating process heating the heating target N with a predetermined heating power with prohibiting setting or modification of heating power is performed, and after the first preheating process ends, a hot-keep process for keeping the heating target N in a predetermined temperature range is performed (using a detected temperature signal from a temperature sensor).

Preheating Process:
Main heating coil: 1000 W (fixed)
Sub heating coil: 1500 W (fixed)
Hot-keep process: five minutes at the maximum. In the case where optional setting of heating power is not performed during this, the heating operation is automatically ended after a lapse of five minutes.
Main heating coil: 300 W to 100 W (this cannot be set by the user)
Sub heating coil: 300 W to 100 W (this cannot be set by the user)

These become the same as with high-speed heating in the case where optional setting of heating power is performed during the hot-keep process.

With regard to arbitrary setting of heating power, the user can select one level out of the nine levels, as described above, in a range of 150 W to 3000 W which is the total heating power of the main heating coil MC and sub heating coils.

In this case, the main-to-sub heating power ratio is automatically determined by the energizing control circuit 200 so as to be included in a predetermined range of heating power ratio, and the user cannot arbitrally set. For example, the main-sub heating power ratio is 2:3 (at the time of large heating power) to 1:1 (at the time of small heating power).

Though the main and sub heating coils are driven at the preheating process at the same time, the flows of high-frequency currents in mutually adjacent regions at this time have the complete opposite direction. This is because uniformity of heating intensity is prioritized by causing magnetic fluxes generated from both heating coils in the adjacent regions to interfere with each other. With the hot-keep process as well, the heating coils are driven at the same time, but the directions of high-frequency currents in mutually adjacent regions are opposite. This is for uniformity of the entire temperature distribution.

Note that, with the hot-keep process, convection promotion control will be started at boiling and thereafter based on the user's instructions. This convection promotion control will be described later.

### Water heater mode (cooking menu where heating speed is prioritized, selected by the first selection unit E1)

The user starts heating of the water in the heating target N using optional heating power, the water is boiled, and when the energizing control circuit 200 determines that the water is in a boiled state from information of the temperature of the heating target N, change in a temperature rise degree, and so forth using the temperature sensor, the energizing control circuit 200 informs the user of the effect thereof using the display means G. Thereafter, heating power is automatically set, and the boiled state is kept for only two minutes without change.

### Water heater process:

The total heating power of the main heating coil and sub heating coils is 150 W to 3000 W (this is arbitrally set out of nine levels from heating power 1 to heating power 9. The default setting value is heating power 7 = 2000 W).

The main-sub heating ratio is automatically determined by the energizing control circuit 200 so as not to exceed the total heating power selected by the user and also so as to be included in a predetermined range of heating power ratio, and the user cannot arbitrally set the heating ratio. For example, the main-sub heating ratio is 2:3 (at the time of large heating power) to 1:1 (at the time of small heating power).
Hot-keep process: two minutes at the maximum. The heating operation is automatically ended after a lapse of two minutes.
Main heating coil: 1000 W or less (this cannot be set by the user)
Sub heating coil: 1500 W or less (this cannot be set by the user)

These become the same as with high-speed heating in the case where the user has set optional heating power during this period. With regard to heating power as well, one may arbitrally be selected out of the nine levels in a range of 150 W to 3000 W.

Up to boiling, the main heating coil MC and sub heating coils SC1 to SC4 are driven at the same time, and at that time, control is performed so that the directions of high-frequency currents in mutually adjacent regions agree. After boiling, the directions of currents become opposite.

Rice cooking mode (cooking menu where uniformity of heating is prioritized, selected by the second selection unit E2) The user sets a container serving as the heating target N into which a proper quantity of rice and water have been put, and the apparatus heats the container thereof in accordance with a predetermined rice cooking program (a series of programs such as a water absorption process, heating process, boiling process, steaming process, and so forth), and rice cooking is automatically performed.

Water absorption process and rice cooking process:
Main heating coil: 600 W or less (this cannot be set by the user, and the value is automatically changed according to progress of the process)
Sub heating coil: 700 W or less (this cannot be set by the user, and the value is automatically changed according to progress of the process)
Steaming process: five minutes
Main coil: heating zero (heating power: 0 W)
Hot-keep process: five minutes at the maximum
Main heating coil: 200 W or less (this cannot be set by the user)
Sub heating coil: 200 W or less (this cannot be set by the user)

Though the main and sub heating coils are driven at the same time, control is performed so that the flows of the high-frequency currents in mutually adjacent regions become the opposite directions. This is because uniformity of heating intensity is prioritized is prioritized by causing mutual interference of magnetic fluxes generated from both heating coils in the adjacent regions.

Note that, after completion of the rice-cooking process, in the case where it is detected by the detecting circuit unit (heating target placement detecting unit) 280 that the heating target N is not put above the main and sub heating coils, or in the case where in either the steaming process or the hot-keep process, it is detected by the heating target placement detecting unit that the heating target N is not put above the main and sub heating coils at the same time, the main and sub heating coils immediately stop the heating operation.

### Boiling mode (cooking menu where heating speed is prioritized, selected by the first selection unit E1)

Heating process (up to boiling):
Heating power to be applied to the heating target N may manually be set.

With regard to total heating power of the main heating coil MC and sub heating coils, the user selects one level out of the nine levels in a range of 150 W to 3000 W.

The default value is 2000 W (when the user does not select heating power, heating is started at 2000 W). The main-sub heating power ratio is automatically determined by the energizing control circuit 200 so as to be included in a predetermined range of heating power ratio, and the user cannot arbitrally set this. For example, the main-sub heating ratio is 2:3 (at the time of large heating power) to 1:1 (at the time of small heating power).

### Boiling and thereafter:

When the water is boiled (the controller estimates the boiled state from information such as the temperature of the heating target N and change in temperature rise degree and so forth using the temperature sensor), the user is informed of the water boiling.

Thereafter, for consecutive 30 minutes (extendable), the heating operation is automatically continued with the default value (600 W) so as to keep the boiled state, but the user may arbitrarily select heating power after boiling.

Over all of the heating processes up to boiling, the main heating coil MC and sub heating coils SC1 to SC4 are simultaneously driven, and control is performed so that the directions of high-frequency currents in mutually adjacent regions agree. At boiling and thereafter, convection promotion control is started based on the user's operations. This convection promotion control will be described later.

### Water heater + Hot-keep mode (cooking menu where heating speed and uniformity are prioritized, selected by the third selection unit E3)

The user starts to heat the water in the heating target N using optional heating power, and at the time when the water is boiled (the controller estimates the boiled state from information such as the temperature of the heating target N, change in temperature rise degree, and so forth using the temperature sensor), the user is informed of the water boiling by the display unit G. Thereafter, heating power is automatically set, and the boiled state is kept for only two minutes without change.

Water heater process:
Total heating power of the main heating coil and sub heating coils is 150 W to 3000 W (arbitrally set out of nine levels from heating power 1 to heating power 9, the default set value is heating power 7 = 2000 W).

The main-sub heating power ratio is automatically determined by the energizing control circuit 200 so as not to exceed the total heating power selected by the user and also so as to be within a predetermined range of heating power ratio, and the user cannot arbitrally set the heating ratio. For example, the main-sub heating ratio is 2:3 (at the time of large heating power) to 1:1 (at the time of small heating power).
Hot-keep process: 10 minutes at the maximum. The heating is automatically ended after a lapse of 10 minutes.
Main heating coil: 1000 W or less (this cannot be set by the user)
Sub heating coil: 1500 W or less (this cannot be set by the user)

Up to boiling, control is performed so that the directions of high-frequency currents in adjacent regions of the main heating coil MC and sub heating coils SC1 through SC4 agree. The directions of the currents after boiling become the opposite. With boiling and thereafter, convection promotion control is started based on the user's operations. This convection promotion control will be described later.

Hereinafter, the basic operation of the induction heating cooker according to the present invention will be described with reference to Fig. 6. First, in the case where the user has turned on the main power and has instructed heating preparation operation using an operating unit (not illustrated in the drawing), , it is determined whether or not the heating target N is placed above each of the coils, or whether or not the bottom area of the heating target N is greater than a predetermined value, by detecting the amount of current flowing into the main heating coil MC and sub heating coils SC1 to SC4 using the current detecting unit 280. This result is transmitted to the energizing control circuit 200 serving as the controller (step MS1).

In the case of an adapted pan, the energizing control circuit 200 displays display for prompting the user to select a desired cooking menu, for example, on a liquid crystal display of the operating unit E or the display means G installed nearby (MS2). In the case of a nonconforming deformed pan (with a recessed bottom or the like), or a very small pan, or the like, heating prohibition processing is performed (MS6).

In the case where the user has selected or input a cooking menu, heating power, cooking time, or the like using the operating unit, the heating operation is started in full scale (MS4).

As cooking menus to be displayed on the display means G, there are seven menus of the "high-speed heating mode", "deep-fry mode", "water heater mode", "preheating mode", "rice-cooking mode", "boiling mode", and "water heater + hot-keep mode". In the following description, the wording of "mode" might be omitted. For example, "high-speed heating mode" may be referred to as "high-speed heating".

In the case where the user has selected optional one out of these seven cooking menus, the control mode corresponding to the selected menu is automatically selected by a built-in program of the energizing control circuit 200, and whether to be energized, energizing quantity (heating power), energizing time, and so forth of each of the main heating coil MC and sub heating coils SC1 to SC4 are set. Display for prompting the user to set optional heating power or energizing time or the like is performed on the display unit depending on cooking menus (MS5).

Note that, while there are three selection units in total, that is, the first, second, and third selection units E1, E2, and E3, there are seven cooking menus in total to be displayed on the display means G. Actually, however, there are three selectable keys of "high-speed heating", "water heater", and "boiling" included in the E1, for example. Similarly, there are two keys of "preheating" and "rice-cooking" included in the selection unit E2, and there are two keys of "water heater + hot-keep" and "deep-fry" included in the selection unit E3.

### (Convection Promotion Control)

Next, in connection with the left-side induction heat source 6L of the present invention, convection promotion control that is a characteristic of the heating mode will be described. The convection promotion control is principally divided into three types. Note that, with boiling and thereafter, or immediately before boiling, for example, in the case where the temperature sensor has detected that the temperature of the heating target N rises to 98 degrees centigrade, or in the case where the energizing control circuit 200 has determined that this state is close to a boiling state based on elapsed time since start of cooking, or the like, it is desirable that at the time when the user arbitrarily performs instruction thereafter, for example, immediately after operations, the convection promotion control is started, but in the case of a particular cooking menu, the control may automatically proceed to the convection promotion control when it becomes a boiling state, unless the user prohibits heating or stops heating in the middle of the apparatus operation.. This convection promotion control will be described later.

### (First Convection Promotion Control)

This control is to heat the heating target N using the sub heating coils SC1 to SC4 during a period of time during which the main heating coil MC is not driven.

(A) in Fig. 3 illustrates a state in which a high-frequency current is supplied from the inverter circuits SIV1 to SIV4 to the four sub heating coils SC1 to SC4, respectively.

Similarly, (B) in Fig. 3 illustrates a state in which no high-frequency current is supplied to the four sub heating coils SC1 to SC4, and the heating operation is stopped, and on the other hand, high-frequency current from the main inverter circuit MIV is supplied to the main heating coil MC alone, and heating is driven. Note that, in the case where the main heating coil MC is subjected to hatching, this indicates an energized state. In the case where the four sub heating coils SC1 to SC4 are displayed in black as well, these indicate an energized state. However, in later-described second convection control and third convection control, the energized states of the four sub heating coils SC1 to SC4 may not be displayed with hatching or coloring.

(A) in Fig. 4 illustrates a state in which of the four sub heating coils SC1 to SC4, high-frequency current is individually and also simultaneously supplied from the inverter circuits SIV1 and SIV3 to a mutually adjacent set (hereinafter, also referred to as "group") of the two sub heating coils SC1 and SC3, respectively. In this case, a heat-generating portion of the heating target N becomes a strip-shaped portion extending across positions directly above the two adjacent sub heating coils SC1 and SC3 and between both. Accordingly, with the heat-generating portion as a reference, cooking targets stored in the heating target N, for example, miso soup or stew or the like are heated by the strip-shaped portion extending across positions directly above the two sub heating coils SC1 and SC3 and between both, and an upward flow occurs. Accordingly, in the case where this state is continued, as illustrated with an arrow YC in (A) in Fig. 4, a long convection toward the opposite side of and furthest from the sub heating coils SC1 and SC3 may be generated. A reflux flow isreadily generated which becomes a down flow on the opposite side, flows horizontally on the bottom of the cooking targets, and return to the sub heating coils SC1 and SC3 again.

In other words, the length of a series of paths (also referred to as cyclic path or convection loop) may be increased where liquid cooking targets which naturally rise when temperature rises, and returns again when temperature drops.

RL1 indicates the length of a long convection path where the liquid of the risen cooking targets moves to the opposite side and changes to a down flow. The starting point of the RL1 is center points XS of the sub heating coils SC1 to SC4. RL2 indicates length from the one sub heating coil SC1 to the wall face on the opposite side such as a pan or the like which is the heating target N. As can be understood from (A) in Fig. 4, the RL1 and RL2 are the same (RL1 = RL2).

Next, as in (B) in Fig. 4, a state is illustrated in which, of the four sub heating coils SC1 to SC4, high-frequency current IB is individually and simultaneously supplied from the inverter circuits SIV1 and SIV2 to the mutually adjacent two sub heating coils SC1 and SC2. The directions of the currents IB flowing into the sub heating coils SC1 and SC2 are mutually opposed directions. In this case, a heat-generating portion of the heating target N corresponds to a strip-shaped portion extending across positions directly above the adjacent two sub heating coils SC1 and SC2 and between both, and accordingly, the direction of convection to be generated becomes as illustrated with the arrow YC in (B) in Fig. 4.

Similarly, as in (C) in Fig. 4, a state is illustrated in which, of the four sub heating coils SC1 to SC4, high-frequency current IB is individually and simultaneously supplied from the inverter circuits SIV2 and SIV4 to a group of the mutually adjacent two sub heating coils SC2 and SC4. In this case, a heat-generating portion of the heating target N corresponds to a strip-shaped portion extending across positions directly above the adjacent two sub heating coils SC2 and SC4 and between both, and accordingly, the direction of convection to be generated becomes, as illustrated with an arrow YC in (C) in Fig. 4, the opposite direction as compared with the state illustrated in (A) in Fig. 4.

As described in the above of Embodiment 1, the first convection promotion control is a method for performing principal heating using a group of adjacent two sub heating coils of the four sub heating coils SC1 to SC4. In other words, this is a method for simultaneously driving a half or more but less than the total of the four sub heating coils SC1 to SC4. This first convection promotion control is not only realized in the case of the four sub heating coils SC1 to SC4, but also, for example, in the case of employing six sub heating coils, in which case three or four sub heating coils are driven at the same time. That is to say, three or four sub heating coils are treated as one group, and heating is driven in the units of the groups.

According to this first convection promotion control, across the entire lateral width of the pan, a flow can be induced for promoting convection so as to move from one side thereof to the facing opposite side, and conversely, so as to return from the opposite side to the one side. Even when convection is not generated, a position to be heated of the pan by the sub heating coils SC1 to SC4 is changed on the outer circumference side of the main heating coil MC, and accordingly, in particular, at the time of heating of thick highly-viscous cooking liquid, the water may be prevented from evaporating due to heat being concentrated on one location alone and locally burning.

Preferable timing for sequentially switching from (A) to (B), and (C) in Fig. 4 is not uniform and it depends on cooking targets, but switching is started at least after the temperature of the cooking targets is boiled, or from a state near 100 degrees centigrade immediately before boiling, and hereinafter, switching is performed with a 10 to 15-second interval, for example.

Or, in the case where cooking by boiling or stewing for 30 minutes has been set, the convection promotion control may be started five minutes before cooking is ended, and over five minutes until end of cooking. In order to facilitate broth soup to be absorbed by ingredients such as vegetables and meat and so forth, switching to and from the convection control for 30 seconds may repeatedly be performed several times. In reality, even with heating driving of the same sub heating coil with the same heating power, the intensity of convection to be generated is greatly influenced by the viscosity of the liquid of cooking targets, and accordingly, it is desirable to select the heating power, energizing interval, order, and so forth of the four sub heating coils SC1 through SC4, based on various cooking experimental results.

According to this first convection promotion control, a cooking method (heating method) such as preheating a pan surface (the side face of a pan) such as a frying pan or the like may be realized by driving (turning on) the four sub heating coils SC1 to SC4 (disposed on the same circumference with a predetermined interval) corresponding to the circumferential portion of the heating target N.

Fig. 5 is an explanatory diagram illustrating timing of current flowing into the main heating coil MC and sub heating coils SC1 to SC4, and an on state in which high-frequency current to be heated and driven is applied is displayed as "ON", and an off state in which the high frequency current is not applied is displayed as "OFF".

In this Fig. 5, as illustrated with a dashed line, the main heating coil MC is not energized, but during a non-energizing period of time thereof, induction heating is performed by one group of sub heating coil groups made up of a half or more of, but less than the total number of, the sub heating coils, in this example, adjacent two sub heating coils.

As is apparent from this Fig. 5, with multiple sections configured of a predetermined time interval (hereinafter, simply referred to as "sections"), at the first section T1 thereof, the sub heating coils SC1 and SC2 are ON, and at the next section T2, the sub heating coil SC1 becomes OFF, and the SC2 continues to be ON. The SC3 becomes ON.

At the next section T3, the sub heating coil SC1 continues to be OFF, and the SC2 becomes OFF. The SC3 continues to be ON, and the SC4 newly becomes ON. At the next section T4, the SC3 becomes OFF. The SC4 continues to be ON, and the SC1 newly becomes ON. The sections T1 to T8 illustrated in this drawing may be around 10 to 15 seconds as described above. Hereinafter, in this manner, current flowing into the sub heating coils SC1 to SC4 is turned ON and OFF at a predetermined interval.

### (Modification of Group of Sub Heating Coils)

Note that, in this Embodiment 1, the configurations of the sub heating coils making up one group are changed for each section (T1, T2, T3, or the like), but may be fixed unchangeably. For example, an arrangement may be made in which the sub heating coils are divided into a group of SC1 and SC2, and a group of SC3 and SC4, the two groups are alternately energized so that while one group is ON, the other group becomes OFF. In the case of changing the configurations of the sub heating coil group as well, energizing order may be changed, as illustrated in Fig. 5, when the first group to be driven in a heating operation go around from the section T1 to T4 in which they are to be energized as described above. For example, a case is considered in which the first group at the section T1 comprises the sub heating coils SC1 and SC2 as illustrated in (B) in Fig. 4, the combination at the section T2 comprises SC2 and SC4 as illustrated in (C) in Fig. 4, and the combination at the section T5 again become the combination of the sub heating coils SC1 and SC2 as illustrated in (B) in Fig. 4. In this case the first group to be driven in a heating operation sequentially changes in clockwise direction, but this may be changed in counterclockwise direction. In this change in the counterclockwise direction, an arrangement may be made with two rotations of the energizing sections T1 to T4, and T5 to T8 may be such that, the sub heating coils to be driven are changed in clockwise direction, as illustrated in Fig. 4, and are conversely changed in counterclockwise direction after entering the third round from the section T4. Speed for moving a portion to be heated using a sub heating coil, that is, an energizing switching interval (the energizing sections T1, T2, T3 to T8, etc.) may be changed each time go-round is repeated. Such a change mode may also be applied to later-described second and third convection promotion control.

### (Modification of Sub Heating Coils)

As illustrated in Fig. 7, the number of sub heating coils SC1 to SC4, having been described as four, may be two. Specifically, a sub heating coil SCR on the right side illustrated in Fig. 7 is like the two sub heating coils SC1 and SC2 illustrated in Fig. 1 to Fig. 4 being connected, and the entirety is curved so as to be along substantially the entirety of the right-side outer circumference edge of the main heating coil MC. The left-side sub heating coil SCL has a shape in which the entirety is curved so as to be along substantially the entirety of the left-side outer circumference edge of the main heating coil MC, and is a symmetrical shape sandwiching the center point X1 of the main heating coil MC.

The right-side sub heating coil SCR and left-side sub heating coil SCL are completely the same, and may be interchangeable only by being installed after changing the orientations thereof. With the two sub heating coils SCR and SCL, the lateral widths thereof are around a half of the radius of the main heating coil MC, and in the case where the main heating coil MC has a diameter of around 180 to 200 mm, lateral widths WA of the sub heating coils SCR and SCL each become around 30 to 50 mm. In order to make a further long and slender shape by increasing the degree of flatness, there are various technical restrictions such as how to wind upgroup wires, and so forth.

In this modification, in the case of alternately applying high-frequency current from the inverter circuit to each of the right-side sub heating coil SCR and left-side heating coil SC at a predetermined interval (may not be a fixed interval), with the heating target N, the right-side outer circumferential edge portion and left-side outer circumferential edge portion are alternately subjected to induction heating in a concentrated manner, and accordingly, convection is alternately generated from the left and right in the cooking targets. In this case as well, it is effective to set a greater heating power for the time when heating is performed by the right-side sub heating coil SCR alone, or the left-side sub heating coil SCL alone, in the convection promotion mode, than the heating power at the time when heating is performed with the maximum heating power by the right-side sub heating coil SCR and the left-side sub heating coil SCL in which the right and left-side sub heating coils SCR and SCL are set to an on state at the same time. Note that an arrow IA of the main heating coil MC indicates the direction of high-frequency current IA flowing into the main heating coil MC at the time of driving the main heating coil MC.

In the case where either one or both of the right-side sub heating coil SCR and left-side sub heating coil SCL is driven in a heating operation at the same time, it is desirable in consideration of heating efficiency that the directions of the high-frequency current IA flowing into the main heating coil MC, and the high-frequency current IB flowing into each of the left and right sub heating coils SCR and SCL become the same direction on the adjacent sides as illustrated with a solid line in Fig. 7 (Fig. 7 illustrates a case where clockwise at the main heating coil MC, and counterclockwise at the left and right sub heating coils SCR and SCL). This is because, in the case where, with adjacent regions of two independent coils, currents flow in the same direction, magnetic fluxes generated by the currents thereof are enhanced by each other, magnetic flux density for interlinking the heating target N is increased, and many eddy currents are generated on the bottom of the heating target, and accordingly, induction heating may be performed in an effective manner.

In the case where heating power at the time of heating one pan simultaneously using three of the right-side heating coil SCR, left-side sub heating coil SCL, and main heating coil MC is 3000 W, and the right-side heating coil SCR heats the pan with 1 kW, the left-side sub heating coil SCL also heats the pan with 1000 W, and the main heating coil MC also heats the pan with 1000 W, with the convection promotion mode, for example, the right-side sub heating coil SCR and left-side sub heating coil SCL are also alternately turned to an on state at 1500 W. Note that, in this manner, in the case of employing only the two sub heating coils, the number of inverter circuits to be driven may be decreased, and advantages may be expected such as reduction in costs due to decrease in the circuit configuration, and reduction in size due to decrease in the area of the circuit board, and so forth.

As is apparent from the modification in Fig. 7, the first convection promotion control includes means including a top plate on which a heating target such as a pan into which cooking targets are put or the like is placed, an annular main heating coil MC disposed below the top plate, a first sub heating coil SCR and a second heating coil SCL having a flat shape having a smaller lateral width than the radius of the main heating coil, disposed near both sides of the main heating coil, an inverter circuit configured to supply induction heating electric power to each of the main heating coil MC, first sub heating coil SCR, and second sub heating coil SCL, a controller configured to control output of the inverter circuit, and an operating unit configured to instruct the controller to perform starting of heating, setting of heating power, and so forth, in which the controller sets a period of time during which induction heating electric power is not supplied to the first sub heating coil, and supplies induction heating electric power from the inverter circuit to the second sub heating coil during this period, and thereafter, sets a period of time during which supply of induction heating electric power to the second sub heating coil is stopped, supplies induction heating electric power from the inverter circuit to the first sub heating coil during this period, and the controller repeats energizing switching operation for the first and second sub heating coils multiple times.

As described above, according to Embodiment 1, the selection keys E1, E2, and E3 serving as the first, second, and third selection units are displayed on the display means E configured to display heating conditions in a state in which they are selectable by the user's operations, in a form of an electrostatic capacitance type switch key or the like, and accordingly, the user can readily select a desired cooking menu. A heating drive pattern adapted to selection thereof is automatically determined by the controller, and accordingly, heating may be executed in a heating coil driving mode according to the user's purpose and wish such as prioritization on heating time, prioritizationon temperature uniformity, or the like. In this manner, a selection key of a cooking menu can be operated on the display unit, and accordingly, there are also advantages in resolving user misuse, alleviation of mental burden, and so forth may be realized.

As an application of this modification, in the case of alternately performing energizing of the main heating coil MC of the center portion, and energizing of the right-side sub heating coil SCR and left-side heating coil SCL, another convection path can be generated. For example, first, the right-side sub heating coil SCR is driven with heating power of 1 kW for 15 seconds. Next, the left-side sub heating coil SCL is driven with heating power of 1 kW for 15 seconds. These steps are repeated twice, following which the main heating coil MC alone is driven with 1 kW for 15 seconds. In this way, a convection can be generated which rises from directly above the main heating coil MC and then radially extends on the outer circumference edge side of the pan. Thus, in addition to convection with a long path according to heating from the outer portion of the bottom of the pan using the left and right sub heating coils SCR and SCL, two types of convections are formed, advantages may be expected such as churning effects of the whole of the cooking targets within the pan, temperature uniformity, prevention of boiling over, and so forth.

### (Second Convection Promotion Control)

This control is for establishing a difference of driving power between a group of sub heating coils at the time of heating the heating target N using adjacent multiple sets (also referred to as groups) of sub heating coils of the sub heating coils SC1 to SC4 within a period of time during which the main heating coil MC is not driven. Specifically, this is characterized by supplying electric power greater than induction heating electric power supplied to the first heating coil group to the second sub heating coil group, and then reducing induction heating electric power supplied to the first group of sub heating coil group, and supplying electric power greater than this electric power to the second group of sub heating coil group, and repeating these operations multiple times. In other words, according to a method for driving a group made up of a half or more of but less than the total of the four sub heating coils at the same time, difference of driving electric power is established between remaining individual sub heating coils or a group thereof, and total sum of heating power of a group made up of sub heating coils of a number of half or more but less than the total is set greater than the heating power operation for a remaining individual sub heating coil or a group thereof.

Hereinafter, description will be made specifically.

As illustrated in (B) in Fig. 4, high-frequency current is supplied to the adjacent two sub heating coils SC1 and SC2 of the four sub heating coils SC1 to SC4 from the inverter circuits SIV1 and SIV2, respectively. In this case, heating power (second heating power) of 1.0 kW is set to each of the two sub heating coils SC1 and SC2. In this case, each of the two sub heating coils SC4 and SC3 positioned in a position symmetric, with respect to the center point X1, to the two sub heating coils SC1 and SC2 is driven by heating power of 500 W (first heating power).

Next, similarly, as illustrated in (C) in Fig. 4, in a state in which the heating power of the SC1 of the two sub heating coils SC1 and SC2 is reduced to 500 W (first heating power), and the SC2 is kept at the heating power as it is, the sub heating coils SC4 adjacent to the SC2 is driven with 1000 W (second heating power). The SC3 is kept at 500 W (first heating power).

Next, similarly, as illustrated in (D) in Fig. 4, in a state in which, the heating power of the SC2 of the two sub heating coils SC2 and SC4 is reduced to 500 W, and the SC4 is kept at heating power as it is, the sub heating coils SC3 adjacent to the SC4 is driven with 1000 W. The SC1 is kept at 500 W.

As apparent from the above description, this control is characterized by driving a group of adjacent two sub heating coils with large heating power, driving a group of the remaining two sub heating coils with smaller heating power than that, and switching these large heating power group and smaller heating power group, thereby positionally changing a portion to be strongly heated.

According to this control, a cooking method and a heating method may be realized in which the pan surface (side face of the pan) is effectively preheated while heating the center portion of a frying pan or the like. With the pan, the center area to be heated by the sub heating coils SC1 to SC4 is changed around the main heating coil MC, and accordingly, it may also be prevented that the pan is locally burnt at the time of heating a cooking liquid with high viscosity having thickness.

Accordingly, the second convection promotion control is a method for performing principal heating using a group of adjacent two sub heating coils of the four sub heating coils SC1 to SC4. In other words, a half or more but less than the total of the four sub heating coils are driven at the same time, and difference of driving heating power is established between this group and a group of the remaining one or multiple sub heating coils. This second convection promotion control is not realized only in the case of just the four sub heating coils SC1 to SC4, for example, but in the case of employing six sub heating coils, in which case three or four sub heating coils have to be driven at the same time. Note that although it is desirable that the second heating power is twice or more of the first heating power, this may be 1.5 times or more. In a method for performing driving by dividing four or more sub heating coils into a first group of adjacent two sub heating coils and another group (second group), it is desirable that total sum of the second heating power of the first group of sub heating coils is twice or more of the total sum of the second heating power, but may be 1.5 times or more.

As a modification of sub heating coils, description has been made regarding the four sub heating coils SC1 to SC4 being reduced to two as illustrated in Fig. 7, but the modification thereof may also be applied to this second convection promotion control. Specifically, this may be realized by a configuration comprising a top plate on which a heating target such as a pan into which cooking targets are put or the like is placed, an annular main heating coil MC disposed below this top plate, a first sub heating coil SCR and a second heating coil SCL having a flat shape having a smaller lateral width than the radius of the main heating coil, disposed near both sides of the main heating coil, an inverter circuit configured to supply induction heating electric power to each of the main heating coil MC, first sub heating coil SCR, and second sub heating coil SCL, a controller configured to control output of this inverter circuit, and an operating unit configured to instruct the controller to perform starting of heating, setting of heating power, and so forth, in which the controller supplies greater electric power than induction heating electric power supplied from the inverter circuit to the first sub heating coil SCR to the second sub heating coil SCL, then decreases induction heating electric power supplied to the second sub heating coil SCL, supplies greater electric power than this power from the inverter circuit to the first sub heating coil SCR, and the controller repeats energizing switching operation for the first and second sub heating coils SCR and SCL multiple times.

### (Third Convection Promotion Control)

This control is for heating the heating target N using the sub heating coils SC1 to SC4 while driving the main heating coil MC, at the same time as a driving period of time of the main heating coil MC, or during a period of time during which driving is stopped. Specifically, this control is realized by a configuration in which multiple sub heating coils each having a flat shape having a smaller lateral width than the radius of the main heating coil are divided into a first group and a second group, these groups are disposed on both sides of the main heating coils respectively, and in a state in which induction heating electric power for the first group is stopped during a period of time during which induction heating electric power is consecutively or intermittently supplied to the main heating coil using first heating power, second heating power greater than the first heating power is supplied to the second group from the inverter circuit, and then, induction heating electric power for the first group is stopped, third heating power greater than the first heating power is supplied to the second group from the inverter circuit, and these operations are repeated, thereby generating convection with a long path for the cooking targets within the heating target. Thus, even when convection is not generated, with the pan, the center area to be heated by the sub heating coils SC1 to SC4 is changed at a position outer than the main heating coil MC, and accordingly, it may also be prevented that the pan is locally burnt at the time of heating cooking liquid with high viscosity including thickness.

Fig. 8 is a diagram illustrating timing of current flowing into the main heating coil MC and sub heating coils SC1 to SC4. An on state in which high-frequency current to be driven in a heating operation is applied is displayed as "ON", and an off state in which the high frequency current is not applied is displayed as "OFF".

As illustrated with a dashed line in this Fig. 8, the main heating coil MC is consecutively energized from the first section T1 to T4, but the next four sections become non-energizing period of time. During this energizing and non-energizing period of time, induction heating is performed by a group of sub heating coil groups made up of a half or more but less than the total (two in this example). It is a characteristic that a total sum of heating power at the time of this induction heating is set grater than the heating power of the main heating coil (first heating power) "at the time of driving for non-convection promotion control".

Here, "at the time of driving for non-convection promotion control" includes each of the following two cases. However, in the case of performing control, the first heating power may be set to satisfy either one case instead of determining the first heating power with a condition satisfying both of the following two cases.
(1) When driving the main heating coil MC and all of the sub heating coils at the same time, and performing cooking by normal operation so as to exert the maximum heating amount: For example, in the case where the main heating coil MC and all of the sub heating coils are driven at the same time, the maximum heating power setting is 3 kW, and at the time of this 3 kW heating, a heating power ratio distributed to the main heating coil is 1 kW, this 1 kW serves as the heating power of the main heating coil "at the time of driving for non-convection promotion control".
(2) When performing operation with the maximum heating power setting in the case of the main heating coil MC alone being normally driven in a heating operation to perform cooking: For example, in the case where the maximum heating power at the main heating coil MC alone is 1.2 kW, this 1.2 kW serves as the heating power of the main heating coil "at the time of driving for non-convection promotion control".

As apparent from Fig. 8, across all of the sections, a group of a half or more but less than the total number of sub heating coils (first group) are configured of two of the sub heating coils SC1 and SC2, and a second group comprises two of the SC3 and SC4. At the first section T1, the first group is ON, and the second group is OFF. At the next section T2, the first group turns OFF, and the second group turns ON.

At the next section T3, the first group turns ON again, and the second group turns OFF. The sections T1 to T4 illustrated in this drawing may be around 10 to 15 seconds, for example. Hereinafter, in this manner, current flowing into the sub heating coil groups of the first group and second group is alternately turned ON and OFF with a predetermined interval.

### (Modification of Third Convection Promotion Control)

Fig. 9 is a diagram illustrating timing of current flowing into the main heating coil MC and sub heating coils SC1 to SC4, an on state in which high-frequency current by which a coil is to be driven in a heating operation is applied is displayed as "ON", and an off state in which the high frequency current is not applied is displayed as "OFF". The sub heating coils make up a group of a half or more but less than the total number of sub heating coils (first group), and are made up of two of the sub heating coils SC1 and SC2. On the other hand, the second group is made up of two of the remaining SC3 and SC4. The configurations of the groups are not changed during cooking, and the first group is fixed so as to constantly become two of the sub heating coils SC1 and SC2.

As illustrated with a dashed line in this Fig. 9, the main heating coil MC is consecutively energized from the first section T1 to T2 (at the first heating power), but the next four sections (T3 to T6) become non-energizing period of time. During the induction heating period of time (at the first heating power) of the main heating coil MC in this first two sections, the driving of all of the four sub heating coils SC1 to SC4 are all suspended.

Next, when the section T3 comes, energizing of the main heating coil MC is suspended. Instead, in the section T3, a group of the sub heating coils is in induction-heating. Total sum of heating power at the time of induction heating is (the second) heating power (e.g., 1500 W or 2000 W) greater than the first heating power (e.g., 1000 W) of the main heating coil. The second group of the sub heating coils are not driven in a heating operation.

Next, when the section T4 comes, energizing of the main heating coil MC is still suspended, but at this section T4, the heating by the first group of the sub heating coils are suspended. Instead of this, the sub heating coils SC3 and SC4 of the second group are driven in a heating operation. Total sum of heating power at the time of this induction heating is (the third) heating power (e.g., 1500 W or 2000 W) greater than the first heating power (1000 W) of the main heating coil. Note that the third heating power and the second heating power are the same heating power, but these may not be the same as long as these are greater than the first heating power (1000 W).

Next, when the section T5 comes, energizing of the main heating coil MC is still suspended, but at this section T5, the first group of the sub heating coils are driven in a heating operation again. Total sum of the driving heating power of the two sub heating coils SC1 and SC2 in this case is the second heating power (e.g., 1500 W or 2000 W) greater than the first heating power. At this section V, the heating by the sub heating coils SC3 and SC4 of the second group are suspended.

Next, when the section T6 comes, energizing of the main heating coil MC is still suspended, but at this section T6, the heating by the first group of the sub heating coils are suspended again, and instead of this, the second group is driven in a heating operation. Total sum of the driving heating power of the two sub heating coils SC3 and SC4 of the second group in this case is the third heating power greater than the first heating power.

Next, when the section T7 comes, energizing of the main heating coil MC is resumed. Heating power at this time is the first heating power. At this section T7, the fist group of the sub heating coils are driven in a heating operation again. Total sum of the driving heating power of the two sub heating coils SC1 and SC2 of the first group in this case is the second heating power greater than the first heating power. The heating by the second group is stopped

Next, when the section T8 comes, energizing of the main heating coil MC is kept with the heating power 1, but the heating by SC1 and SC2 of the first group of the sub heating coils are suspended. Instead of this, the second group of the sub heating coils are driven in a heating operation again, and the heating power level in this case is the third heating power.

As described above, the main heating coil MC is driven in a heating operation at the two sections, and heating thereby is suspended at the four sections. Hereinafter, these operations are repeated. On the other hand, the heating by the first and second groups of the sub heating coils have a pattern of being suspended at the four sections, and then alternately driven in a heating operation for each section. Note that in Fig. 9 there have been appended a reference symbol (A) to the section T1, (B) to the section T3, (C) to the section T4, and (D) to section T7, these sections (A), (B), (C), and (D) correspond to (A), (B), (C), and (D) in Fig. 10, and a scene where the driving period of time is sequentially switched in Fig. 10 is understood. In this manner, there are five types of energizing patterns in total.

Note that preferable timing for energizing switching, that is, the sections (T1 to T9 and so forth) are not even, depending on cooking targets, but switching is started at least after the temperature of the cooking targets is of its boiling, or from a state near 100 degrees centigrade immediately before boiling, and hereinafter, switching is performed at a 10 to 15-second interval, for example. Or, in the case where food cooked by boiling or stewing for 30 minutes has been set, an arrangement may be made in which switching is started five minutes before cooking is ended, and switching is implemented over five minutes until end of cooking.

In reality, even when the main heating coil MC and sub heating coils are driven in a heating operation by the first and second heating power, difference in the first, second, and third heating power, and power of convection generated by the absolute values of the first, second, and third heating power are greatly affected by the viscosity of liquid of the cooking targets, and accordingly, it is desirable to select the heating power value, energizing interval, order, and so forth, based on various cooking experimental results.

Hereinafter, description will be made regarding a specific example in the case where energizing switching has been applied to an actual cooking menu.

For example, description will be made regarding a case where "boiling" cooking menu is performed at 2000 W.

First, even when 2000 W is not input first at a heating power setting unit not illustrated in the drawing, the default value is 2000 W as described above, and accordingly, heating is started at 2000 W from the beginning. In this case, the main-sub heating power ratio is automatically determined by the energizing control circuit 200, and the user does not have to arbitrally set this, and for example, the heating power of the main heating coil MC is set to 800 W, and the total heating power of the four sub heating coils is set to 1200 W (greater than the "first heating power").

The heating target N is heated at 2000 W, and at the time when the water is boiled (at the time when the controller estimates this to be a boiled state from information such as the temperature and change in the degree of the temperature rise of the heating target N), the energizing control circuit 200 outputs a notification signal, displays this as characters or light using the display means G configured to display the operation conditions of the heating means, and informs the user of the boiling. At this time, in the case where heating power is not set again, the energizing control circuit 200 informs the user of automatically decreasing heating power.

In the case where the user has operated nothing, when a boiled state is reached, the energizing control circuit 200 outputs a command signal for decreasing heating power to the main inverter circuit MIV and sub inverter circuits SIV1 to SIV4, and for example, the heating power of the main heating coil MC is set to 300 W, and the total heating power of the four sub heating coils is set to 300 W.

This state continues for 30 minutes at the maximum, and in the case where no operation has been performed, driving of all of the induction heat sources are automatically suspended. With the process up to this boiling, control is performed so that the directions of the high-frequency currents in adjacent regions of the main heating coil MC and sub heating coils SC1 to SC4 agree.

On the other hand, in the case where the user has set heating power again after boiling, the third convection promotion control is automatically implemented.

For example, in the case where the user has increased heating power to 2000 W after boiling instead of keeping the default value (600 W), the energizing control circuit 200 sets the heating power (first heating power) of the main heating coil MC to 500 W (first heating power), sets the total heating power of the mutually adjacent two sub heating coils to 1500 W, and sets the total heating power (third heating power) of another group of the sub heating coils to 1500 W.

During a period of time during which the main heating coil MC is continuously driven at 500 W, the energizing control circuit 200 divides the four adjacent sub heating coils into a group of two of the SC1 and SC2, and a group of two of the SC3 and SC4, and alternately drives these two groups in a heating operation for 15 seconds at a time, each at 1500 W in total at a time (heating power of 750 W is input to one sub heating coils).

In the case where the user has increased heating power to 3000 W serving as the maximum heating power immediately after boiling instead of 2000 W, the energizing control circuit 200 sets the heating power (first heating power) of the main heating coil MC to 1000 W (first heating power), sets the total heating power of the mutually adjacent two sub heating coils to 2000 W, and sets the total heating power (third heating power) of another group of the sub heating coils to 2000 W.

Control has been performed up to the boiling process so as to output high heating power by making the directions of the high-frequency currents in adjacent regions of the main heating coil MC and sub heating coils SC1 to SC4 to agree with one another, but after boiling, the directions of the currents are switched to be the opposite, and for example, the high-frequency current is fed so as to have the opposite direction between the adjacent regions of the main heating coil MC and sub heating coil SC1, and between the adjacent regions of the main heating coil MC and sub heating coil SC2.

Note that, in the above description, a method has been employed in which in the case where the heating power after boiling has been set to 2000 W, the main heating coil MC is intermittently driven at 500 W, but this may consecutively be driven. In either case, many more convections are generated by at least adjacent two sub heating coils. Specifically, a position as close to the circumferential edge portion of the heating target N as possible is alternately induction-heated by the two groups of the sub heating coil groups, and accordingly, relative density becomes light at the outer circumferential edge portion of the cooking targets, and a flow to rise out of the cooking target is naturally created. Note that the present invention is not restricted to the examples of the heating power of the main heating coil MC and the total heating power on the sub heating coils side as described above at all.

In order to improve convection promotion effects, it is desirable to set heating at the outer circumferential edge portion of the heating target N higher than the center portion. Therefore, even if 1500 W is the first heating power of the main heating coil MC , and 1.5 kW is the total heating power of adjacent multiple sub heating coils out of the sub heating coils SC1 to SC4 (as the second heating power), when the energizing ratio at the time of boiling and thereafter is set to 50% by constantly controoing the energizing ratio of the main heating coil MC, heating power equivalent to real 750 W is obtained, and accordingly, the convection promotion effects of the present invention may be obtained even in such a case.

"Time-selective" energizing switching control of the sub heating coils SC1 to SC4 as illustrated in Fig. 4 also serves as suppression of boiling over in the case of cooking of stewed objects and boiled objects. Specifically, when a boiling cooking stage after boiling is reached, such as the "water heater + hot-keep mode", in a cooking menu where heating speed and uniformity are prioritized, if the energizing switching control of the sub heating coils SC1 to SC4 as illustrated in Fig. 4 is performed, a state in which the center or a particular portion of the pan is strongly heated may be avoided, and this takes a form in which a portion to be induction-heated for the bottom of the pan is sequentially moved.

The pan is heated at an energized sub heating coil portion, and on the other hand, the bottom of the pan of a non-energized sub heating coil portion located in a portion apart therefrom is not heated, heat from the portion to be heated is propagated to the pan, and the pan is consequently preheated, and an advantage may be expected in which heat is evenly circulated around the entirety of non-cooking targets with the pan by these. The "time-selectively" mentioned here may mean not only a fixed cycle (e.g., for every 30 seconds) but also changing the first and second switching cycle within the same cooking menu, or changing the cycle and number of times of repeating by the type of cooking menu or cooking targets.

In this manner, the third convection promotion control is a method for heating a peripheral portion by a group of adjacent two sub heating coils of the four sub heating coils SC1 to SC4, while heating the middle portion with the main heating coil. In other words, this is a method for driving a half or more but less than the total number of sub heating coils of the four sub heating coils at the same time, and establishing a difference of driving heating power between them and the remaining one or a group of multiple sub heating coils. This second convection promotion control is not only realized in the case of the four sub heating coils SC1 to SC4 alone, but for example, in the case of employing six sub heating coils, in which case three or four sub heating coils may be driven at the same time.

### (Modification of Group of Sub Heating Coils)

Note that, in Embodiment 1, sub heating coils making a group of sub heating coils are fixed unchangeably through all of the sections (T1, T2, T3, etc.), and are divided into a group of the SC1 and SC2 and a group of the SC3 and SC4, but this may be changed at a predetermined time interval. For example, as illustrated in Fig. 5, this may be changed for each section.

As a modification of sub heating coils, with the first convection promotion control, two sub heating coils integrated from the four sub heating coils SC1 to SC4 have been illustrated (see Fig. 6), but this modification may be applied to this third convection promotion control.

Specifically, the third convection promotion control in the case of employing the first and second sub heating coils SCR and SCL may be realized by a configuration including the heating target N such as a pan into which cooking targets are put, a top plate on which this heating target is placed, an annular main heating coil MC disposed below this top plate, a first sub heating coil SCR and a second sub heating coil SCL having a flat shape having a smaller lateral width than the radius of the main heating coil, each disposed near a single side of this main heating coil, an inverter circuit configured to supply induction heating electric power to each of the main heating coil MC, first and second sub heating coils SCR and SCL, a controller configured to control output of the inverter circuit, and an operating unit configured to instruct the controller to perform starting of heating, setting of heating power, and so forth, in which the controller supplies induction heating electric power at second heating power (e.g., 1.2 kW) greater than the first heating power from the inverter circuit to the first sub heating coil SCR during a period of time during which the controller is supplying induction heating electric power at the first heating power (e.g., 800 W) to the main heating coil MC, then stopping induction heating electric power to the first sub heating coil SCR, supplying induction heating electric power at third heating power (e.g., 1200 W) greater than the first heating power from the inverter circuit to the second sub heating coil SCL, and the controller repeates the energizing switching operation for the first and second sub heating coils SCR and SCL multiple times.

During a period of time during which the main heating coil MC, and the right-side sub heating coil SCR or left-side sub heating coil SCL are driven in a heating operation at the same time, as described above, it is desirable from a viewpoint of heating efficiency to set the directions of high-frequency current IA flowing into the main heating coil MC and high-frequency current IB flowing into each of the left and right sub heating coils SCR and SCL to the same direction on adjacent sides as illustrated with a solid line arrow in Fig. 7. Accordingly, with the convection promotion mode, in this manner, if control is performed so as to flow current in the same direction in adjacent regions of two independent coils, magnetic fluxes generated by the currents thereof are enhanced by each other, density of magnetic flux interlinking the heating target N is increased, and many eddy currents are generated on the bottom of the heating target, induction heating may be performed efficiently, and accordingly, heating for generating convection may be performed in an effective manner.

As described above, the induction heating cooker according to Embodiment 1 has a configuration of a first invention. Specifically, the induction heating cooker according to Embodiment 1 includes a main unit A having a top plate 21 on a top face thereof on which a heating target N such as a pan into which a cooking target is put, or the like is placed; a first induction heat source 6L and a second induction heat source 6R which are adjacently disposed below the top plate 21; an inverter circuit configured to supply induction heating electric power to the induction heating coils 6RC and 6LC of these heat sources; an energizing control circuit 200 configured to control output of this inverter circuit; and an operating unit E configured to instruct this energizing control circuit 200 to start heating and perform setting of heating power, and so forth; an oblong rectangular storage space 10 configured to store the respective induction heating coils of the first and second induction heat sources 6L and 6R being provided to the inner portion of the main unit A below the top plate 21, in which the first induction heat source 6L includes a circular central coil (main heating coil) MC, and multiple elongated side coils SC1 to SC4 disposed therearound, the second induction heat source 6R includes a circular coil 6RC having a diameter (twice of R2, around 180 mm or 200 mm) smaller than the diameter of a circle including the side coils (twice of R3, 208 mm), and greater than the outer diameter of the central coil MC thereof (twice of R1, 128 mm); and the first induction heat source 6L is configured to automatically or manually switch induction heating at the central coil MC alone, and cooperative heating of the central coil MC and the side coils SC1 to SC4 according to the size of the heating target N. Thus, it is possible to selectfrom three heating means, that is, the central coil MC alone, cooperative heating of the central coil MC and side coils SC1 to SC4, and the second induction heat source 6R single heating. Therefore, a wider heating portion than a conventional two-burner type cooker simply having two types of circular heating coils may be handled on the top plate 21 having a limited area, and user-friendliness may be improved.

### Embodiment 2

Fig. 11 to Fig. 37 illustrate an induction heating cooker according to Embodiment 2 of the present invention.

Fig. 11 is a perspective view with a partial exproded perspective view illustrating the whole of a built-in type induction heating cooker according to Embodiment 2 of the present invention.

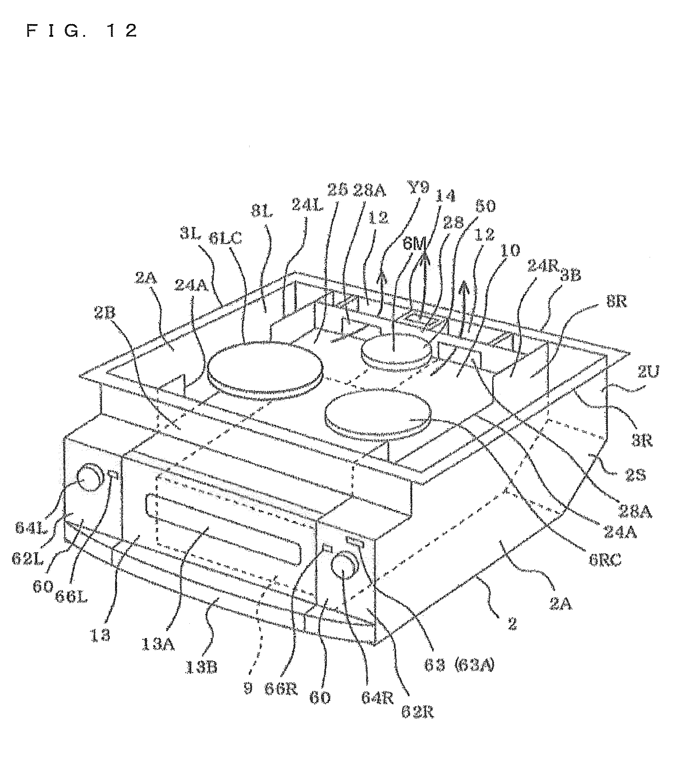

Fig. 12 is a perspective view illustrating the whole of a main unit in a state in which the top panel of the built-in type induction heating cooker according to Embodiment 2 of the present invention has been removed.

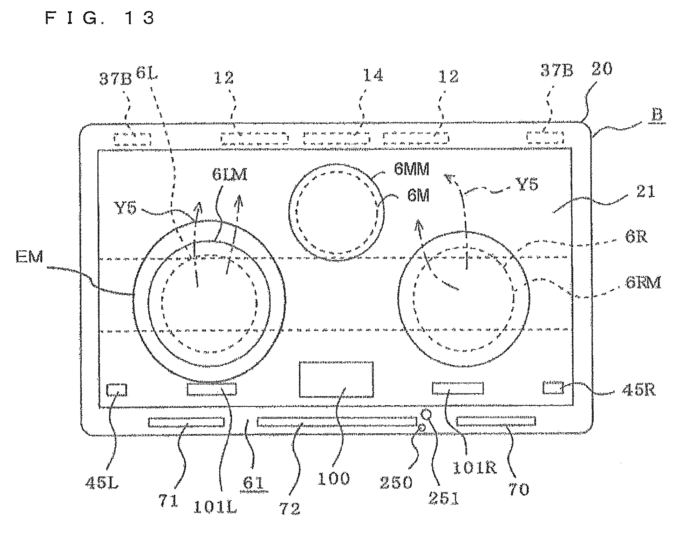

Fig. 13 is a plan view illustrating the whole of the main unit of the built-in type induction heating cooker according to Embodiment 2 of the present invention.

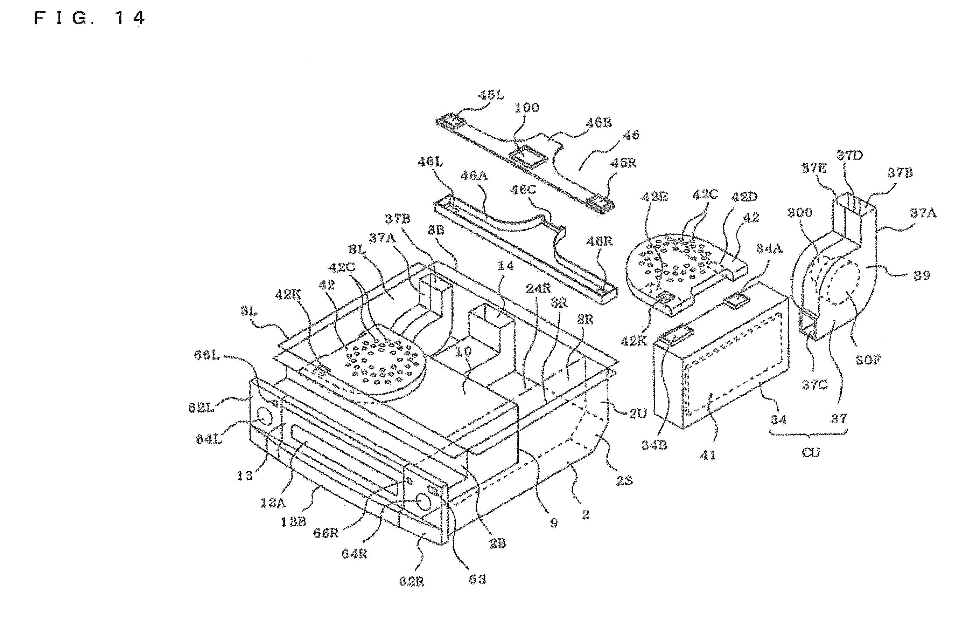

Fig. 14 is an exploded perspective view of a state in which principal components such as a vertical partition plate and so forth of the built-in type induction heating cooker according to Embodiment 2 of the present invention have been removed.

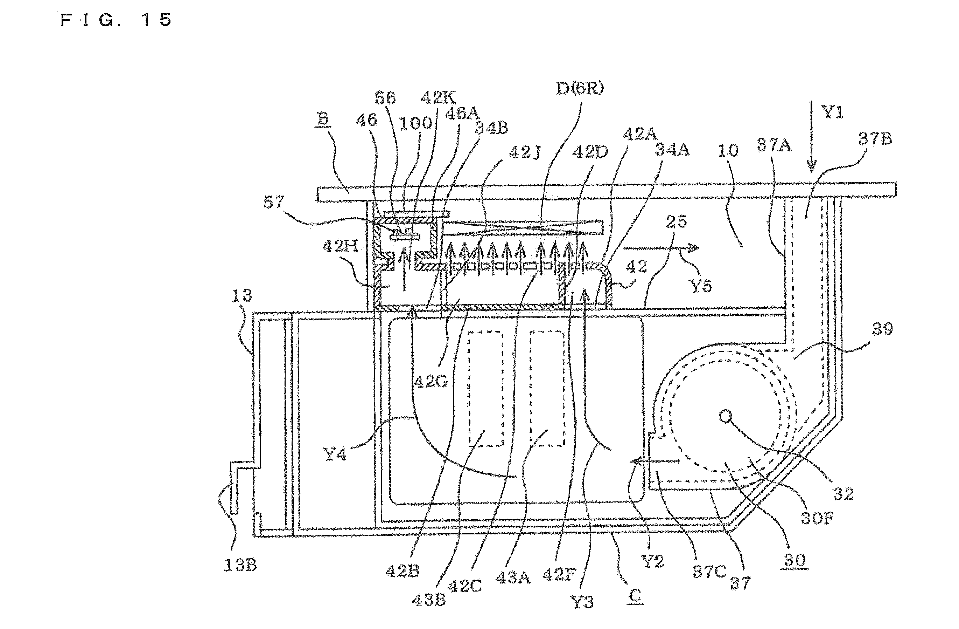

Fig. 15 is a cross-sectional view taken alongvertical cross-section taken along a line D1-D1 in Fig. 11.

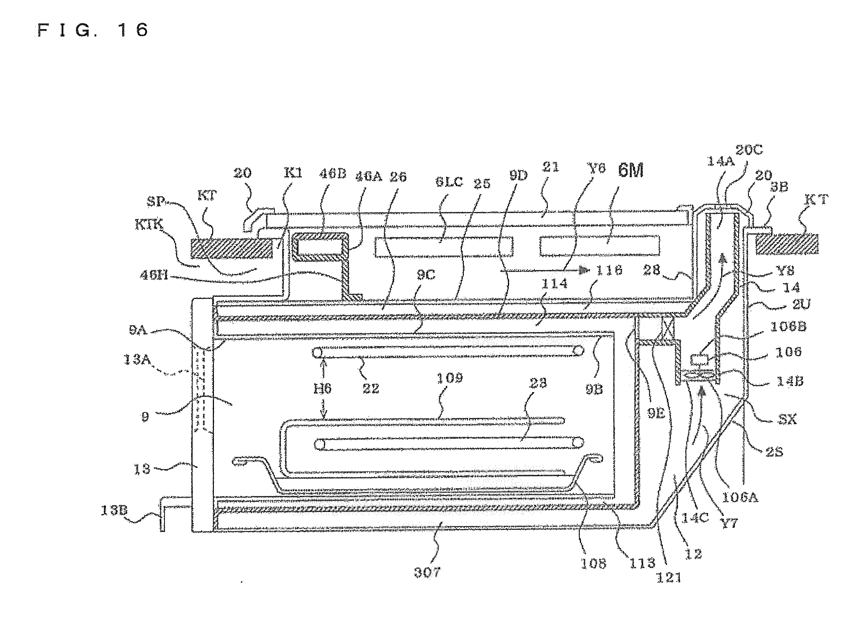

Fig. 16 is a cross-sectional view taken alongvertical cross-section taken along a line D2-D2 in Fig. 11.

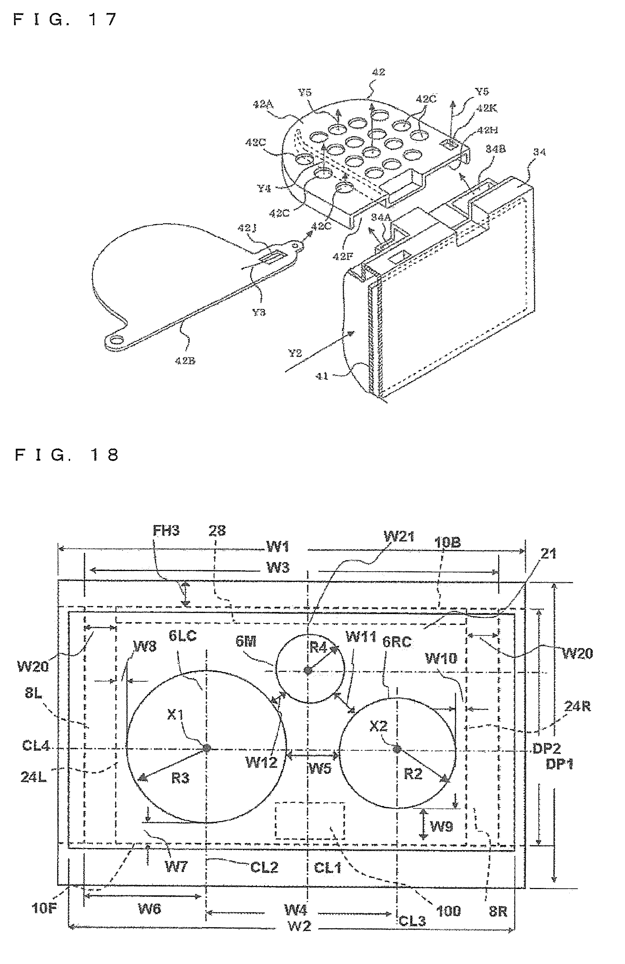

Fig. 17 is a perspective view of principal portions with a partially cut-away component case and a cooling duct of the built-in type induction heating cooker according to Embodiment 2 of the present invention.

Fig. 18 is a plan view for describing positioning of heating coils of the built-in type induction heating cooker according to Embodiment 2 of the present invention.

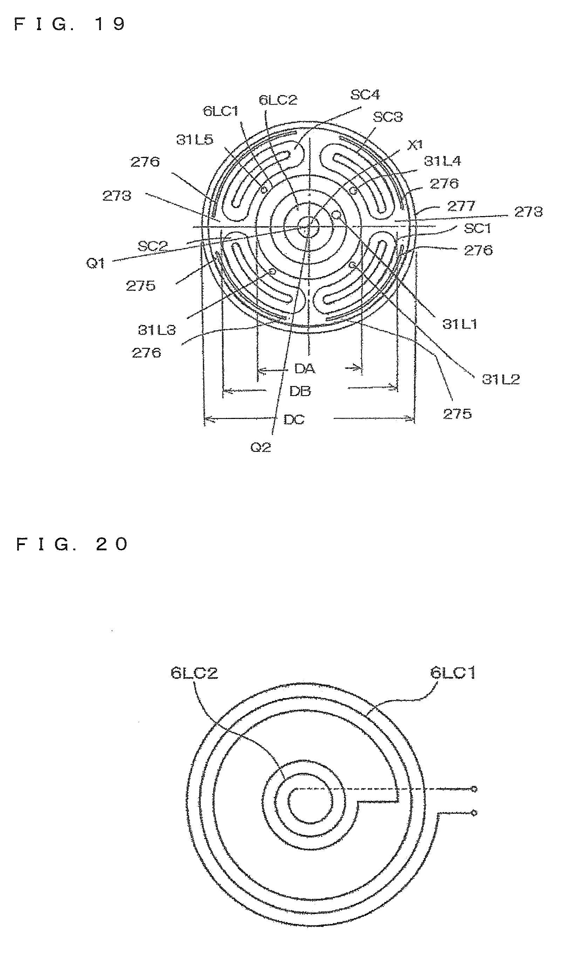

Fig. 19 is a plan view illustrating an induction heat source on the left side of the built-in type induction heating cooker according to Embodiment 2 of the present invention.

Fig. 20 is a wiring diagram of a main heating coil of the induction heat source on the left side of the built-in type induction heating cooker according to Embodiment 2 of the present invention.

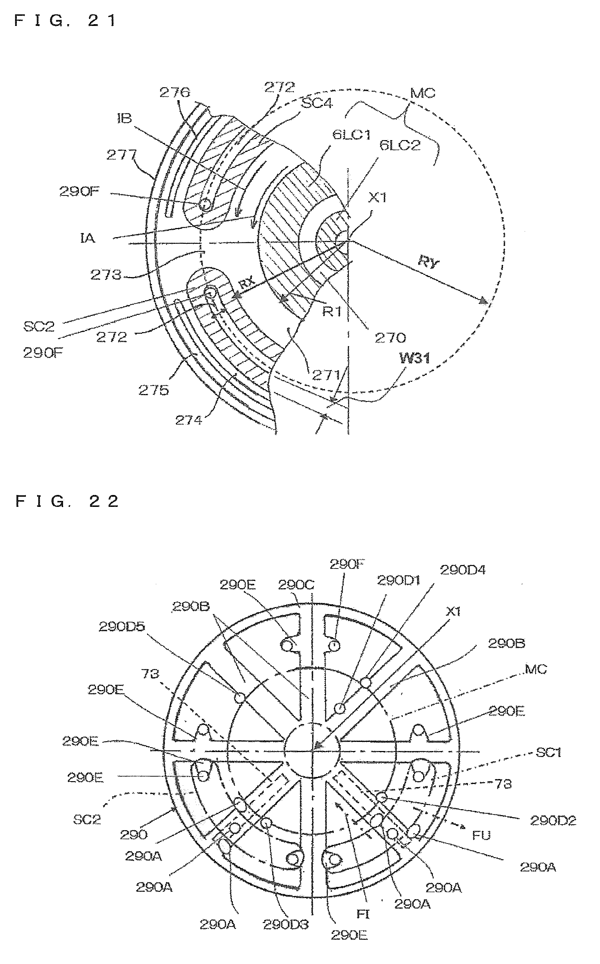

Fig. 21 is an enlarged illustrative partial plan view of the induction heat source on the left side of the built-in type induction heating cooker according to Embodiment 2 of the present invention.

Fig. 22 is a plan view of a coil support member for the main heating coil of the induction heat source on the left side of the built-in type induction heating cooker according to Embodiment 2 of the present invention.

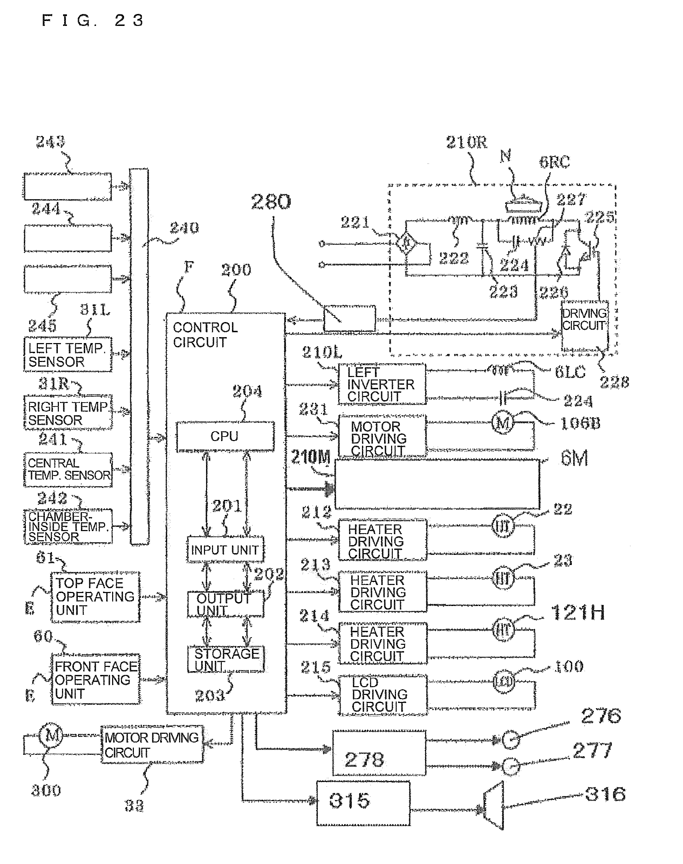

Fig. 23 is an overall view of a control circuit of the built-in type induction heating cooker according to Embodiment 2 of the present invention.

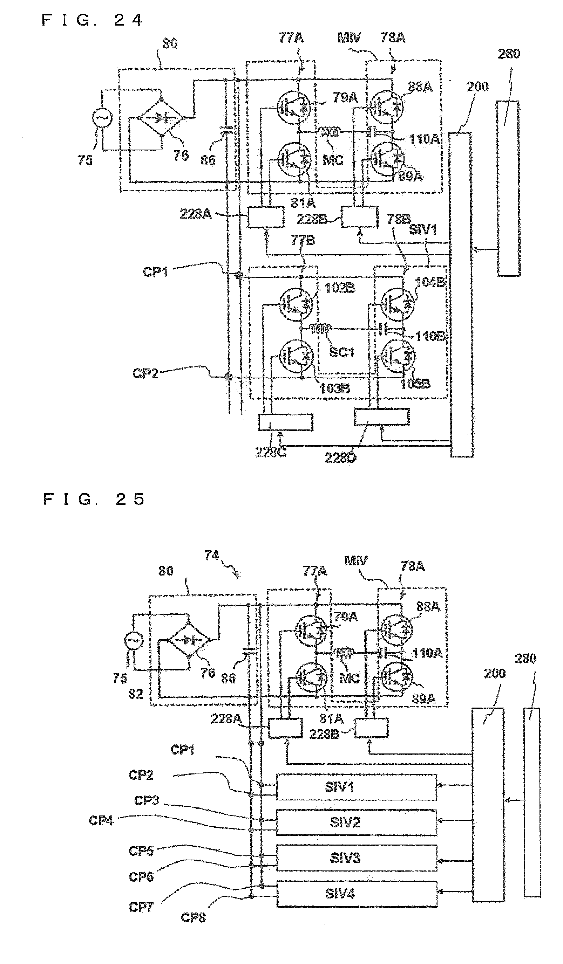

Fig. 24 is a diagram of a full bridge circuit serving as principal portions of a control circuit of the built-in type induction heating cooker according to Embodiment 2 of the present invention.

Fig. 25 is a simplified diagram of the full bridge circuit serving as principal portions of the control circuit of the built-in type induction heating cooker according to Embodiment 2 of the present invention.

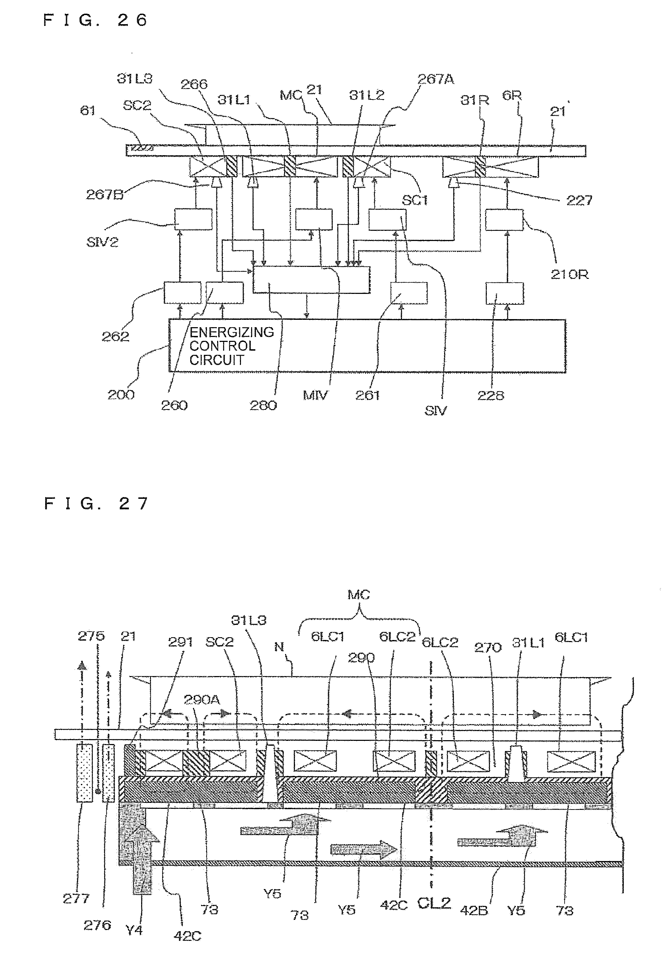

Fig. 26 is a vertical cross-sectional view in the case of performing heating operation by putting a large-diameter pan above the induction heat source on the left side of the built-in type induction heating cooker according to Embodiment 2 of the present invention.

Fig. 27 is a vertical cross-sectional view illustrating the induction heat source portion on the left side of the built-in type induction heating cooker according to Embodiment 2 of the present invention.

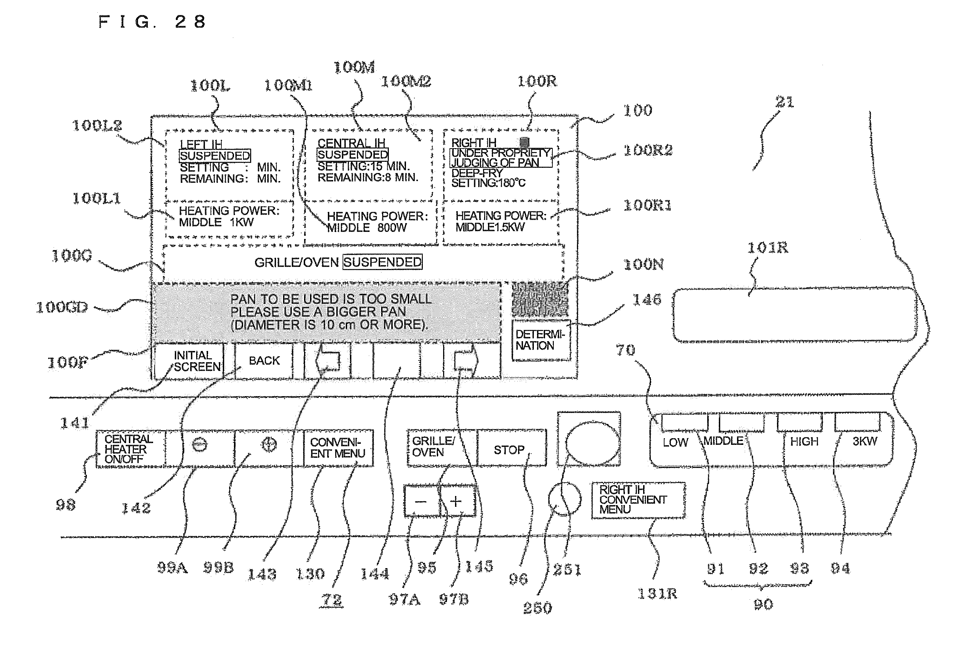

Fig. 28 is a plan view illustrating integrated display means of the built-in type induction heating cooker according to Embodiment 2 of the present invention.

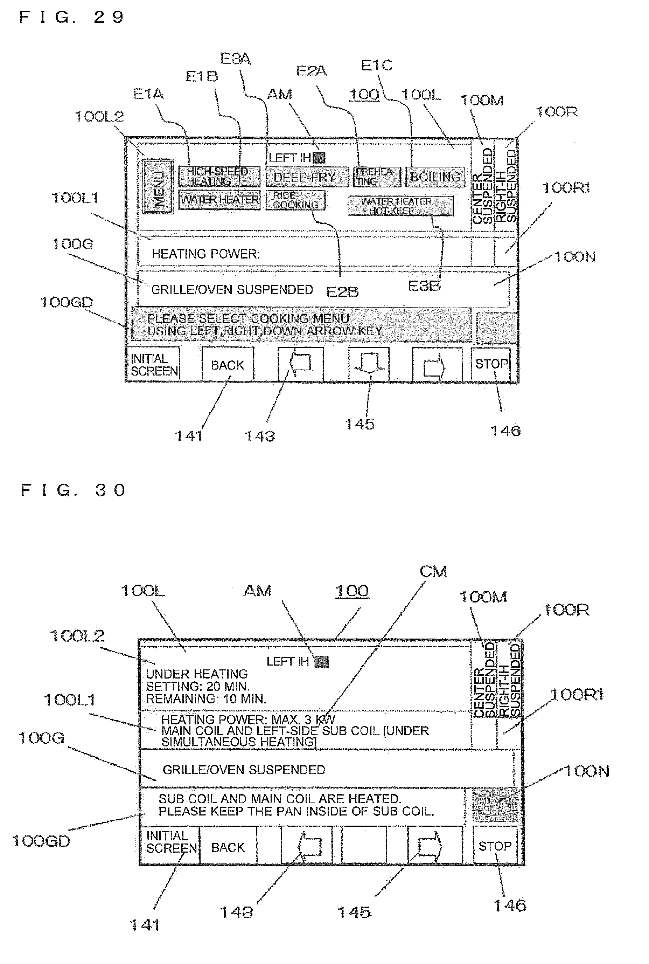

Fig. 29 is a plan view illustrating an exemplary display screen of the integrated display means in the case of using a left IH heat source alone of the built-in type induction heating cooker according to Embodiment 2 of the present invention.

Fig. 30 is a plan view illustrating an exemplary display screen of the integrated display means in the case of using the left IH heat source alone of the built-in type induction heating cooker according to Embodiment 2 of the present invention.

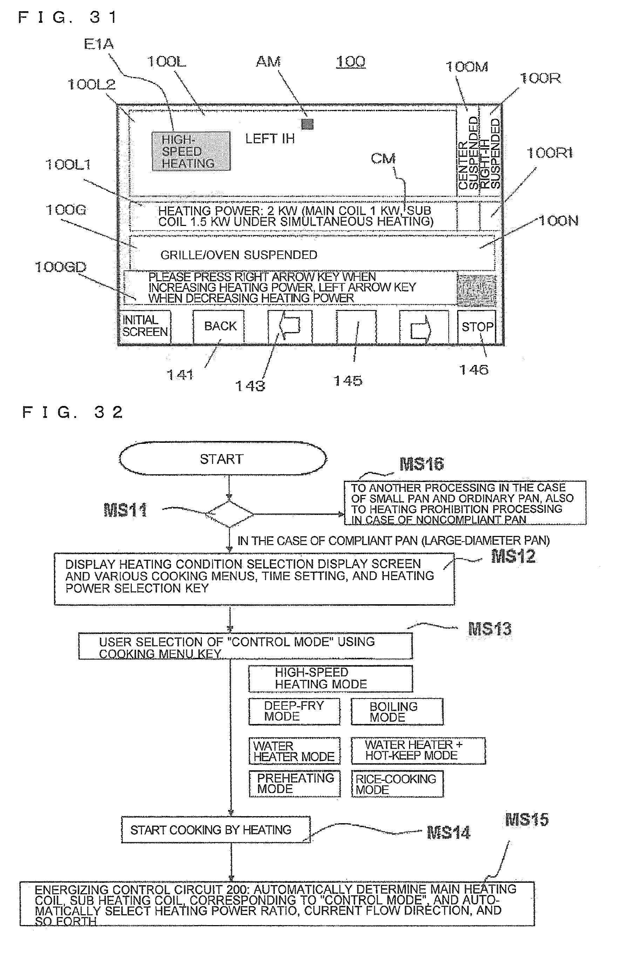

Fig. 31 is a plan view illustrating an exemplary display screen of the integrated display means in the case of performing rapid-heating cook using the left IH heat source of the built-in type induction heating cooker according to Embodiment 2 of the present invention.

Fig. 32 is an explanatory diagram of a control process, illustrating basic heating operation of the whole of the built-in type induction heating cooker according to Embodiment 2 of the present invention.

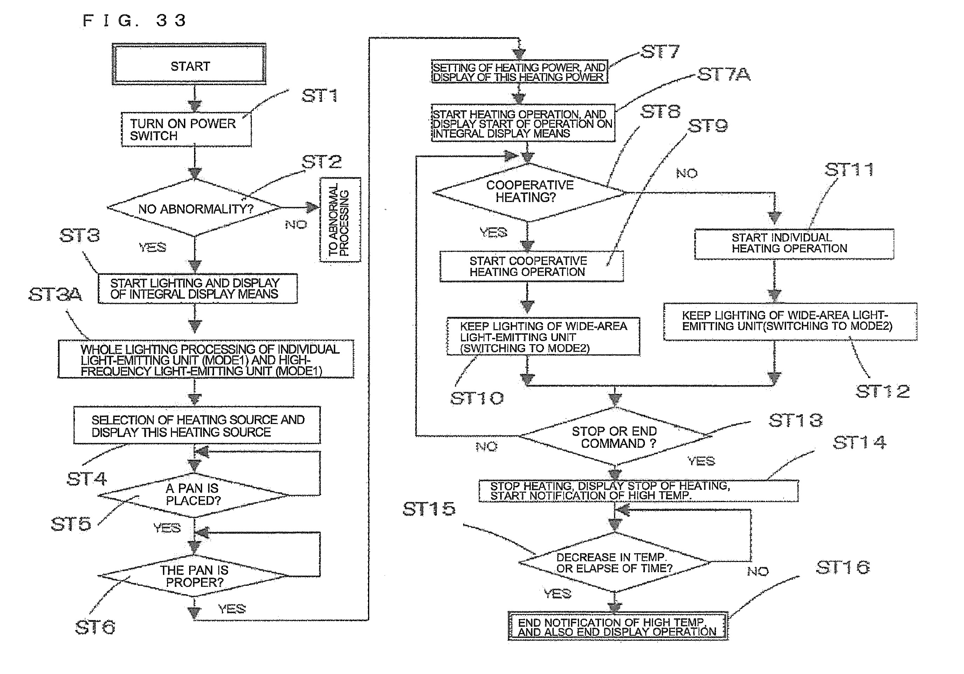

Fig. 33 is a flowchart 1 of control operation of the built-in type induction heating cooker according to Embodiment 2 of the present invention.

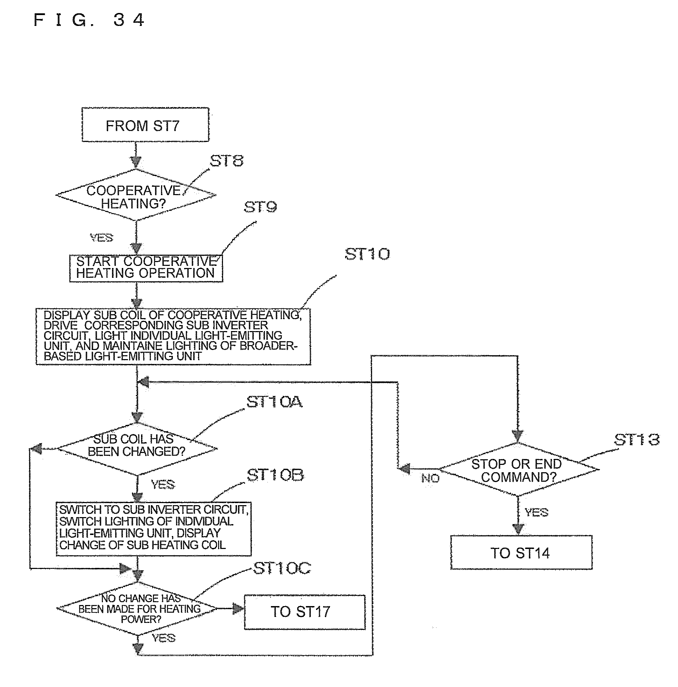

Fig. 34 is a flowchart 2 of the control operation of the built-in type induction heating cooker according to Embodiment 2 of the present invention.

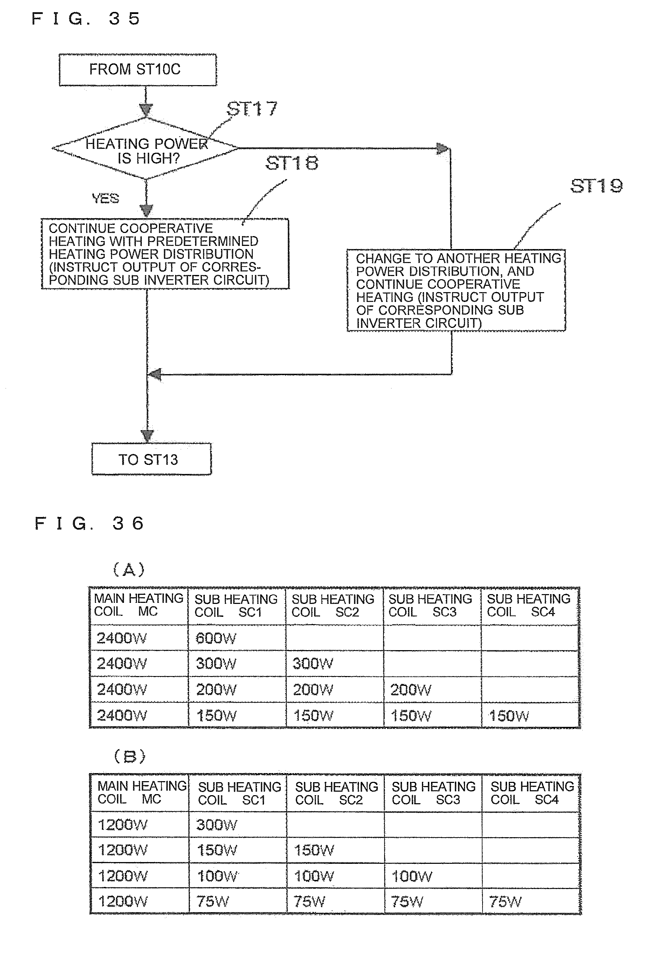

Fig. 35 is a flowchart 3 illustrating control operation in the case of changing the heating power of the built-in type induction heating cooker according to Embodiment 2 of the present invention.

Fig. 36 is a diagram indicating the heating power values (heating electric power) of the main heating coil and sub heating coils in the case where the heating power is 3000 W or 1500 W, of the built-in type induction heating cooker according to Embodiment 2 of the present invention.

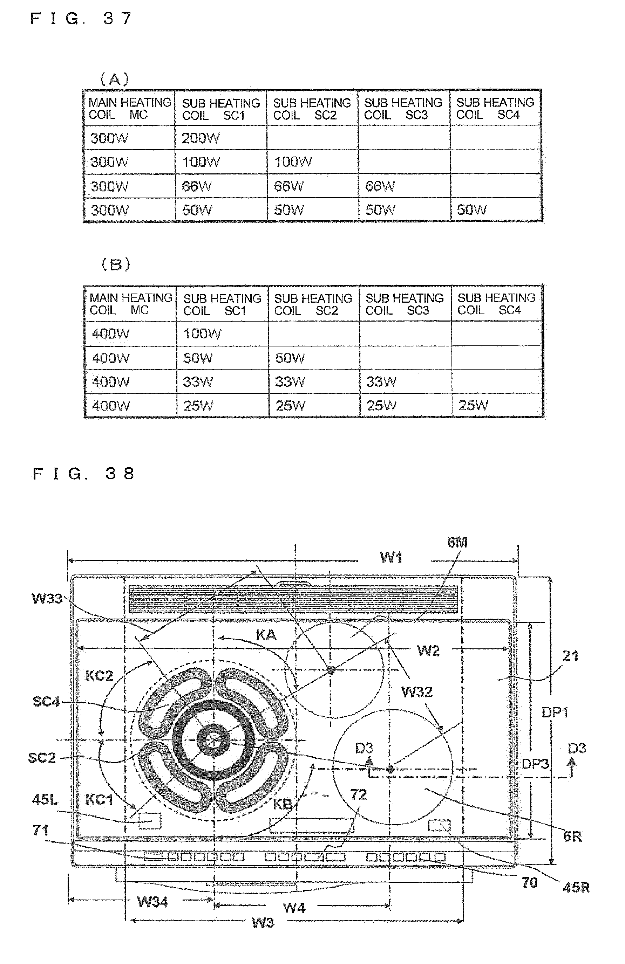

Fig. 37 is a diagram indicating the heating power values (heating electric power) of the main heating coil MC and sub heating coils in the case where the heating according to Embodiment 2 of the present invention.

Note that the same or equivalent portion as the configuration of Embodiment 1 is denoted with the same reference numeral. Also, unless otherwise stated, terms employed for Embodiment 1 are also employed with the same meaning in Embodiment 2.

### (Heating Cooker Main Unit)

A heating cooker according to Embodiment 2 also includes one rectangular main unit A, a top panel portion B making up the top face of the main unit A, a casing C making up circumference (outer hull) excluding the top face of the main unit A, heating means D configured to heat a pan or food or the like by electric energy or the like, operating means E to be operated by the user, control means F configured to control heating means by receiving a signal from the operating means, and display means G configured to display the operation conditions of the heating means. Some of the heating means D include electric heating means called a grille oven (grille heating room) or roaster as will be described below.

The induction heating cooker according to Embodiment 2 has a feature as follows: an ordinary-sized pan or the like is heated using the conventional main heating coil MC, and in the case where a circular pan or rectangular large-sized pan or the like of which the diameter is far longer than that of an ordinary pan (also referred to as a large-diameter pan) is placed above the induction heating portion, cooperative heating is performed by collaboration between the sub heating coils SC1 to SC4 (a plurality of those provided in the circumference of the main heating coil) closer to a placement position thereof and the main heating coil, and individual light-emitting units alone below the top plate are configured to emit light and to light up corresponding to the outer positions of these sub heating coils SC so as to identify the sub heating coils SC which are executing such a cooperative heating operation.

Embodiment 2 greatly differs from Embodiment 1 in that a wide-area light-emitting unit which indicates a boundary of the wide area heating region is disposed below the top plate so as to surround a wide area heating portion which enables cooperative heating of the main heating coil MC and all of the sub heating coils SC1 to SC4. With Embodiment 2, a third induction heat source 6M is provided instead of the radiation type electrical heat source 7 provided in Embodiment 1.

### (Main Unit A)

With the main unit A, as illustrated in Fig. 11, the whole of the top face is covered with a later-described top panel B, and the outer shape of this main unit A is formed in a substantially regular square or rectangle in accordance with a size for covering an installation opening K1 formed in kitchen furniture KT such as a sink or the like, a size matching the space.

The main unit case 2 illustrated in Fig. 12 forms the outline face of this casing C, and comprises a body portion 2A formed by subjecting a sheet of a flat metal plate to a bending operation multiple times using a press molding machine, and a metallic front flange plate 2B combined to an edge portion of this body portion using welding or fixing means, such as, rivet, spring, or the like, and in a state in which these front flange plate 2B and body portion 2A are combined by the fixing means, the top face becomes an opened box shape. The bottom of the rear face portion of the box-shaped body portion 2A is an inclined portion 2S, and the upper portion than this constitutes a vertical rear face wall 2U.

Three portions of the rear edge portion, right edge portion, and left edge portion of the top face opening of the main unit case 2 each include a flange formed by being laterally integrally folded back in a L-letter shape, the rear flange 3B, left-side flange 3L, right-flange 3R, and a front flange plate 2B are placed on the top face of the installation portion of the kitchen furniture KT, thereby supporting the placement and weight of the heating cooker.

In a state in which the heating cooker is completely stored in the installation opening K1 of the kitchen furniture KT, the front face portion of the heating cooker is exposed from an opening portion KTK formed in a front part of the kitchen furniture, and the front face (left and right) operating unit 60 (see Fig. 12) of the heating cooker may be operated from the front face side of the kitchen furniture.

The inclined portion 2S connects the rear face and bottom of the body portion 2A (see Fig. 12 and Fig. 16), and is cut so as not to collide with or interfere with the rear edge portion of the installation opening K1 of the kitchen furniture in the case where the heating cooker is installed by being fitted into the kitchen furniture KT. Specifically, when installing this kind of heating cooker by fitting it into the kitchen furniture KT, the heating cooker is inclined so that the front side of the main unit A of the heating cooker becomes the bottom, and the front side is first dropped into the installation opening K1 of the kitchen furniture KT in that state. The rear side is then dropped into the installation opening K1 in late so as to draw an arc. In order to accommodate to such an installation method, the front flange plate 2B has a size enough for securing sufficient space SP between the installation opening front edge portion (see Fig. 16) of the installation opening K1 of the kitchen furniture at the time of installing the heating cooker in the kitchen furniture.

There are provided within the main unit case 2 the three induction heat sources 6L, 6R, and 6M, later-described control means F configured to control cooking conditions of these heating means, operating means E for inputting the cooking conditions to this control means, and display means G configured to display operation conditions of the heating means input by this operating means. Hereinafter, description will be made in detail regarding each of them.

Note that, with this Embodiment 2, use of a pan of which the diameter is 12 cm or more is assumed as a pan serving as the heating target N, and various types may be employed, such as a pan (saucepan, saucepot, or the like) of which the diameter is 16 cm, 18 cm, 20 cm, or 24 cm, a frying pan of which the diameter is 20 cm, and a deep fryer of which the diameter is 22 cm, and a Chinese wok of which the diameter is 29 cm, and so forth.

As illustrated in Fig. 11, in the interior of the casing C are roughly defined a right-side cooling room 8R extending in the fore-aft direction, a left-side cooling room 8L similarly extending in the longitudinal direction, a box-shaped grille (or roaster) heating room 9, an upper component room 10 (the same as the component storage room according to Embodiment 1), and a rear exhaust room 12, but the rooms are not completely separated. For example, the right-side cooling room 8R and left-side cooling room 8L are each communicated to the rear exhaust room 12 via the upper component room 10.

The grille heating room 9 becomes substantially independent enclosed space in a state in which a front opening 9A portion is closed by a later-described door 13, but communicates to exterior space of the casing C, that is, interior space such as a kitchen or the like via the exhaust duct 14 (see Fig. 16).

### (Top Plate B)

A top plate portion B is, as will be described later, configured of two large components of an upper frame (also referred to as frame member) 20 and a top plate (also referred to as upper plate, top glass, or top plate) 21. With the upper frame 20, the entirety is formed in a frame shape from a metallic plate such as a non-magnetic stainless steel plate or aluminum plate or the like, and has a size so as to close the top face opening of the main unit case 2 (see Fig. 11, Fig. 13, and Fig. 15).

The top plate 21 has a lateral width W2 to completely cover a large opening provided to the center of the upper frame 20 in a frame shape without a gap (See Fig. 18), and is installed in a manner to be overlapped with the upper portion of the main unit case 2. This top plate 21 transmits infrared light and visible rays from an LED and and the entirety thereofif formed of a transparent or translucent material, such as heat-resistant glass, crystallized glass, or the like. The top plate 21 is formed in a rectangle or regular square in accordance with the shape of the opening of the upper frame 20. Note that, in the case where the top plate 21 is transparent, all built-in components such as heating coils and so forth are viewed from above by the user, and this may impair the appearance, and accordingly, the surface and rear surface of the top plate 21 may be subjected to coating for shielding, or a portion which does not pass through visible rays may be printed or coated in a fine speckled or lattice shape.

Further, the back, forth, left, and right side edges of the top plate 21 are fixed in a watertight state by interposing a rubber packing or seal member (not illustrated in the drawing) between them and the opening of the upper frame 20. Accordingly, water drops and so forth are prevented from intruding from the upper face of the top place 21 into the main unit A through a gap formed in a facing portion between the upper frame 20 and the top plate 21.

In Fig. 11, a right-mouth ventilation 20B has been formed by being punched by a press machine simultaneously at the time of formation of the upper frame 20, and becomes an intake passage of a later described air-sending device 30. A center-mouth ventilation 20C has similarly been formed by being punched at the time of formation of the upper frame 20, and a left-mouth ventilation 20D has similarly been formed by being punched at the time of formation of the upper frame 20. Note that only a rear portion of the upper frame 20 is illustrated in Fig. 11, but in the case of viewing the upper frame 20 from above, the upper frame portion 20 covers the entire top face of the main unit case 2 in a frame shape.

The top plate 21 is induction heated by the right-side induction heat source 6R and left-side induction heat source 6L, which will be described later in detail, in the actual cooking stage, and its temperature may rise to 300 degrees or greater by receiving heat from the heating target N such as a pan with high temperature, or the like.

Circular guide marks 6RM, 6LM, and 7MM which indicate rough installation positions of later-described right-side induction heat source 6R, left-side induction heat source 6L and center induction heat source 6M are, as illustrated in Fig. 10 and Fig. 12, indicated on the top face of the top plate 21 using a method such as printing or the like. The diameters of the left and right guide marks 6RM and 6LM are each plus 40 mm (however, this may vary for the outer diameter of a coil, and accordingly, 40 mm is an example) for the outer diameter of each heating coil. The original purpose for these guide marks is to provide standards of positions where the heating target N is disposed.

### (Heating Means D)

With Embodiment 2 of the present invention, there are provided as the heating means D the right-side induction heat source 6R positioned in the upper right-side position of the main unit A, left-side induction heat source 6L conversely positioned on the left side, center induction heat source 6M positioned close to the rear portion on the left and right center lines of the main unit A, and a vertical pair of radiation type central electric heat sources 22 and 23 for the roaster within the grille heating room 9. These heat sources are configured so that energizing is controlled by the control means F in a mutually independent manner, but details will be described later with reference to drawings.

### (Right-side Induction Heat Source)

The right-side induction heat source 6R is installed in the upper component room 10 compartmentalized within the main unit case 2. The heating coil 6RC is disposed on the lower face side on the right side of the top plate 21. The upper edge portion of this coil 6RC adjacent to the lower face of the top plate 21 with a fine gap, and serves as an induction heat source. With Embodiment 2, for example, a heat source having a capability of the maximum consumption power (maximum heating power) 3 kW is employed. The right IH heating coil 6RC is finally molded in a hollow disc shape (also referred to as donut shape) so that the outline shape becomes a circle, as illustrated in Fig. 18, with a center point X2 as a base point by bundling around 20 or 30 thin wires of around 0.1 mm to 0.3 mm in a curled shape as a bundle, and rolling this one or multiple bundles (group wires) while twisting these. In Fig. 13, a dashed-line circle on the right side illustrates substantially the outermost position of the heating coil 6RC on the right side. The diameter (maximum outer diameter) of the heating coil 6RC is around 180 mm.

### (Left-side Induction Heat Source)

The left-side induction heat source 6L is installed in a position substantially axisymmetric to the right-side induction heat source 6R sandwiching the lateral center line CL1 (see Fig. 18) of the main unit A. According to Embodiment 2, for example, a heat source having a capability of the maximum consumption electric power (maximum heating power) of 3000 W is employed.

The heating coil 6LC of the left-side induction heat source 6L has an annular outer shape of a radius R1 with the center point X1 as a base point as illustrated in Fig. 18 and Fig. 19. Of later-described outer-side coil 6LC1 and inner-side coil 6LC2, the maximum outer diameter of the outer-side coil 6LC1 is around 130 mm. This is equivalent to DA in Fig. 19. In order to indicate difference with later-described sub coils SC, both of the outer-side coil 6LC1 and inner-side coil 6LC2 which constitute the left-side heating coil 6LC will be referred to as "main heating coil MC" (see Fig. 20).

With the heating coil 6LC of the left-side induction heat source 6L, as illustrated in Fig. 18, an oppsed distance W5 to the heating coil 6RC of the right-side induction heat source 6R is disposed so as to secure 100 mm or more. This is thought out to avoid a problem in which when one heating target N is heated by the left and right induction heat sources 6L, in the case of "simultaneous use" such as heating another heating target N using the right-side induction heat source 6R in the sides thereof, these are magnetically interfered to each other to generate uncomfortable noise, or the like. The maximum outer diameter DB of the heating coil 6LC is around 200 mm (see Fig. 19). Note that the maximum outer diameter DB of the heating coil 6LC means, unless otherwise stated, the diameter of a circle including a later-described sub coil SC.

### (Central Induction Heat Source)

The central induction heat source 6M has the same configuration as with the right-side induction heat source 6R, but differs in the size and maximum heating power and so forth. Specifically, the central induction heat source 6M is installed in a rear position within the upper component room 10 compartmentalized within the main unit case 2. In this induction heat source, a flat toric heating coil 6MC is disposed near the top plate 21 across a fine gap. With this Embodiment 2, for example, a heat source having a capability of the maximum consumption power (maximum heating power) 1500 W is employed as the central induction heat source 6M. This central heating coil 6MC is finally formed into a hollow disc shape (also referred to as donut shape) by bundling around 20 or 30 thin wires each having a thickness of around 0.1 mm to 0.3 mm in a curled shape as a bundle, and rolling this one or multiple bundles (group wires) while twisting these. In Fig. 13, a dashed-line circle illustrates generally the outermost position of the central heating coil 6MC. The diameter (maximum outer diameter) of the central heating coil 6MC is around 130 mm.

This central electric heat source 6M is installed in a position where a distance W12 with the side coil SC3 of the left-side induction heat source 6L is secured around 50 mm, and a distance W11 with the heating coil of the right induction heat source 6R is secured around 60 mm.

Now, description will be made regarding a relative position relation between the three heating coils 6RL, 6RC, and 6MC, and a position relation with the rectangular upper storage room (also referred to as component storage room, but in the following description, constantly referred to as "component storage room") 10.

As illustrated in Fig. 18, a room surrounded by four components of a front wall 10F which makes up the main unit case 2, a later-described rear partition plate 28 which partitions the upper component room 10 and rear exhaust room 12, and a right-side vertical partition plate 24R vertically installed (see Fig. 12 and Fig. 14), and similarly a left-side vertical partition plate 24L, is the component storage room 10.

In Fig. 18, W5 indicates a gap between adjacent two left and right heating coils 6RC and 6RC, and is around 100 mm as described above. In other words, this is a distance between the left-side induction heat portion having a circular heat area of a radius R3, and the right-side induction heat portion 6R having a circular heat area of a radius R2.

W6: indicates distance from the left-side inner side face of the component storage room 10 to the center point X1 of the left-side induction heat portion 6L, and is 180 mm.

W7: indicates distance from the front-side inner side face of the component storage room 10 to the frontmost edge portion of the left-side induction heat portion 6L, and is 50 mm or less, preferably 44 mm.

W8: indicates distance from the left-side inner side face of the component storage room 10 to the leftmost edge portion of the left-side induction heat portion 6L, and is 30 mm or less, preferably 22 mm.

W9: indicates distance from the front-side inner side face of the component storage room 10 to the frontmost edge portion of the right-side induction heat portion 6R, and is 80 mm or less, preferably 47 mm.

W10: indicates distance from the right-side inner side face (the left side face of the vertical partition plate 24R on the right side) of the component storage room 10 to the leftmost edge portion of the right-side induction heat portion 6R, and is 30 mm or less, preferably 17 mm.

W11: indicates the shortest distance between the heating coil 6RC of the right-side induction heat portion 6R and the heating coil 6MC of the central induction heat portion 6M, and is 50 mm or less, preferably 40 mm.

W12: indicates the shortest distance between a sub heating coil of the left-side induction heat portion 6R and the heating coil 6MC of the central induction heat portion 6M, and is around 40 mm.

W21: indicates the shortest distance between the heating coil 6RM of the central induction heat portion 6M and the rear inner-side face (the front face of the rear partition plate 28) of the component storage room 10, and is 30 mm.

W20 is, as illustrated above, space where a cooling unit CU is installed, and is at least 50 mm. However, this space is preferably narrow. This is because the effective area of the component storage room 10 increases, and restrictions for installation of multiple induction heating coils decrease. The actual upper-limited dimension of the lateral width W20 is 100 mm, but in terms of making uniform the left and right of the cooling unit CU as much as possible, it is desirable to have the same dimension as the left and right.

Note that various dimensions W5 to W21 are absolutely examples, and are not absolute for securing the functions of the heating cooker, and these dimensions may be changed as appropriate.

A circular guide mark EM displayed on the top plate 21 indicates a wide circular area (hereinafter, referred to as "cooperative heat area mark") including a later-described main heating coil MC and all of sub heating coils SC (four in total) disposed in the back and front and left and side positions thereof substantially at an equal interval. The position of this cooperative heat area mark EM generally agrees with the position of a later-described "wide-area light emitting unit" for indicating the preferable outer limit of a heating target placement position at the time of cooperative heating of the main heating coil MC and sub heating coils SC by radiating light from below the top plate 21.

An infrared type temperature detecting element (hereinafter, referred to as infrared sensor) 31 L is installed in inner-side space of the left-side heating coil 6LC (see Fig. 19, Fig. 26, and Fig. 27). Details thereof will be described later.

The heating coil 6LC of the left-side induction heat source 6L6 comprises an outer side coil 6LC1 and an inner side coil 6LC2 which are divided into two in the radial direction. These two coils are, as illustrated in Fig. 20, a series of coils which are serially connected. Note that the entirety may be a single coil instead of two coils.

A rod with a square cross-section, formed of a high magnetic permeability material, for example, ferrite is, as illustrated in Fig. 22 and Fig. 27, disposed on the lower faces (rear faces) of the left and right heating coils 6LC and 6RC as a magnetic flux leakage prevention material 73 from these heating coils. For example, with the heating coil 6LC on the left side, four, six, or eight rods are disposed in a radiation shape from a center point X1 thereof (the number is not necessarily even).

Specifically, the magnetic flux leakage prevention material 73 does not have to cover the entire lower face of the left and right heating coils 6LC and 6RC, and multiple magnetic flux leakage prevention materials 73 molded in a rod shape of which the cross section is a regular square or rectangle or the like, for example, have to be provided with a predetermined interval so as to intersect the coil wire of the right-side heating coil 6RC. Accordingly, with this Embodiment 2, multiple magnetic flux leakage prevention materials 73 are provided in a radiation shape from the center point X1 of the left-side heating coil. According to such magnetic flux leakage prevention materials 73, magnetic field lines generated from the heating coils may be concentrated on the heating target N on the top plate 21.

The right-side heating coil 6RC and left-side heating coil 6LC may be divided into multiple portions so as to be independently energized. For example, an arrangement may be made in which a heating coil is interiorly coiled in a vortical manner, a heating coil is disposed in another large diameter vortical manner on the same concentric circle and also substantially on the same plane on the outer circumferential side of the heating coil thereof, and the heating target N is heated by three energizing patterns of energizing of an inner-side heating coil, energizing of an outer-side heating coil, and energizing of both of inner-side and outer-side heating coils.

In this manner, according to at least one of the output level, duty ratio, and output time interval of high-frequency current to be fed to two heating coils or combination of these, a small-sized to large-sized heating targets (pans) N may effectively be heated (Japanese Patent No. 2978069 is known as a representative of technical literature in which such multiple heating coils by which independent energizing may be performed).

A temperature detecting element 31 R is an infrared type temperature detecting element installed within space provided in the central potion of the right-side heating coil 6RC, and an infrared light-emitting unit located on the upper edge portion is directed to the lower face of the top plate 5 (see Fig. 26).

Similarly, with the left-side heating coil 6LC as well, an infrared type temperature detecting element 31 L is also installed within space provided in the central portion thereof (see Fig. 19 and Fig. 27), but will be described in detail later.

The infrared type temperature detecting elements 31 R and 31 L (hereinafter, referred to as infrared sensor) are configured of a photodiode or the like configured to detect the amount of infrared light radiated from the heating target N such as a pan or the like to measure temperature. Note that the temperature detecting element 31 R may be an electrical heated detector element, for example, thermistor type temperature sensor (this also applies to the temperature detecting element 31 L, and accordingly, for features that are common therebetween, only the temperature detecting element 31 R will be described below as a representative).

In this manner, it is known by Japanese Unexamined Patent Application Publication No. 2004-953144 (Japanese Patent No. 3975865), Japanese Unexamined Patent Application Publication No. 2006-310115, Japanese Unexamined Patent Application Publication No. 2007-18787, and so forth that infrared light emitted from the heating target according to temperature thereof is rapidly detected from below the top plate 5 using an infrared sensor.

In the case where the temperature detecting element 31 R is an infrared sensor, it is advantageous since the infrared rays emitted from the heating target N are consolidated, and also received in real time (there is almost no time difference), by which temperature may be detected from the amount of infrared rays thereof (as compared to the thermistor method). This temperature sensor can detect the temperature of the heating target N even when the temperature of the top plate 21 made up of heat-resistant glass or ceramics or the like positioned in front of the heating target N does not agree with the temperature of the heating target N, and also regardless of the temperature of the top plate 21. In other words, it is so designed that infrared rays radiated from the heating target N are not absorbed or blocked by the top plate 21.

For example, as the top plate 21, a material which transmits infrared light with wavelength band of 4.0 µm or 2.5 µm or less is selected, and on the other hand, as the temperature sensor 31R, a sensor configured to detect infrared light with wavelength band of 4.0 µm or 2.5 µm or less is selected.

On the other hand, in the case where the temperature detecting element 31 R is a thermoelectric type such as thermistor, although it is inferior to the infrared type temperature sensor in that rapid temperature change is acquired in real time, it can detect the temperature of the top plate 21 immediately below the bottom of the heating target N reliably by receiving radiant heat from the top plate 21 or heating target N. Even when there is no heating target N, this type may detect the temperature of the top plate 21.

Note that, in the case where the temperature detecting element is a thermoelectric type such as thermistor, the temperature of the top plate 21 itself may be known as correctly as possible by having a temperature sensor thereof come into contact with the lower face of the top plate 21 directly, or with an intervening member such as a heat transfer property resin or the like intervene. This is because delay occurs in transfer of temperature when there is a gap between the temperature sensor and the lower face of the top plate 21.

In the following description, with regard to contents that share a member commonly disposed in the left and right, description of "left, right" in a name and description of "L, R" in a reference numeral may be omitted.

### (Cooling Room)

The vertical partition plate 24R on the right side is vertically installed (see Fig. 12 and Fig. 14), and serves a role of a partition wall which completely separates between the right-side cooling room 8R and grille heating room 9 within the casing C. The vertical partition plate 24L on the left side is similarly vertically installed (see Fig. 12), and serves a role of a partition wall which completely separates between the left-side cooling room 8L and grille heating room 9 within the casing C. Note that the vertical partition plates 24R and 24L are installed so as to keep the gap W20 between the left and right side wall faces of the main unit case 2.

The horizontal partition plate 25 (see Fig. 12 and Fig. 15) has a size for partitioning the entirety between the left and right vertical partition plates 24L and 24R into vertical two space, and the upper portion of this partition plate 25 is the upper component room 10. This horizontal partition plate 25 is installed with a predetermined gap 116 (see Fig. 16) of several millimeters to around 10 mm from the ceiling surface of the grille heating room 9.

A notched portion 24A is formed in each of the left and right vertical partition plates 24L and 24R, and is provided when horizontally installing a later-described cooling duct 42 so as not to collide therewith (see Fig. 12).

With the grille heating room 9 formed in a rectangular box shape, the wall faces on the left and right, upper and lower, and rear face sides are formed of a metal plate such as stainless steel, steel plate, or the like, one vertical pair of the radiation type electric heat source 22 and 23 (see Fig. 16) according to a radiation type electric heater, for example, a sheathed heater are installed in the vicinity of the upper ceiling and in the vicinity of the bottom so as to extend substantially in the horizontal direction. "Extend" mentioned here means a state in which the middle of the sheathed heater is bent multiple times in the horizontal plane, and meanders so as to occupy the area of a planar wide range as wider as possible, and a plane of which the planar shape is a W-letter shape is a representative example.

Roast cooking (e.g., roast fish), grille cooking (e.g., pizza or gratin), or oven cooking (e.g., cakes or baked vegetables) for performing cooking by setting ambient temperature within the grille heating room 9 may be performed by simultaneously or individually energizing the vertical two radiation type electric heat sources 22 and 23. For example, as the radiation type electric heat source 22 in the vicinity of the upper ceiling of the grille heating room 9, a heat source having the maximum consumption electric power (maximum heating power) of 1200 W is employed, and as the radiation type electric heat source 23 in the vicinity of the bottom, a heat source having the maximum consumption electric power of 800 W is employed.

The gap 26 (see Fig. 16) is a gap formed between the horizontal partition plate 25 and the outer frame 9D of the grille heating room 9 (the same as the gap 116 described above), and finally communicates to a rear exhaust room 12, and the air within the gap 26 is attracted and vented outside the main unit A through the rear exhaust room 12.

In Fig. 12, the rear partition plate 28 partitions the upper component room 10 and rear exhaust room 12, the lower edge portion has a height reaching the horizontal partition plate 25, and also, the upper edge portion has a height reaching the upper frame 20. Two exhaust ports 28A are formed in the rear partition plate 28, and are for exhausting cooling wind blows input to the upper component room 10.

### (Blowing Device for Cooling)

The blowing device 30 described in Embodiment 2 uses a centrifugal type multi-wing type blowing device (there is a sirocco fan as a representative) (see Fig. 14 and Fig. 15) with a wing portion 30F being fixed to the tip of a rotation axis 32 of a driving motor 300. The blowing device 30 is installed in each of the right-side cooling room 8R and left-side cooling room 8L, circuit boards for the left and right left IH heating coils 6LC and 6RC and heating coils themselves thereof are cooled, and detailed description will be made below.

The cooling unit CU is, as illustrated in Fig. 14 and Fig. 15, inserted into the cooling rooms 8R and 8L from above, fixed, and includes a component case 34 in which the circuit board 41 which makes up the inverter circuit is stored, and a fan case 37 which forms a blowing room 39 of the blowing device 30 in the inner portion connected to this component case 34.

The blowing device 30 is a so-called horizontal-axis type in which the rotation axis 32 of the motor 300 for driving thereof is located horizontally, and is stored in a fan case 37 installed in the right-side cooling room 8R. The blowing room 39 is formed in which circular blowing space is formed in the fan case 37 so as to surround a great number of wings 30F of the blowing device 30 thereof. An air inlet 37B is formed in the uppermost portion of a suction cylinder 37A of the fan case 37. An exhaust port (outlet) 37C is formed in one edge portion of the fan case 37.

The fan case 37 is formed as a solid structure by two plastic cases 37D and 37E being combined and being connected with fixing tools such as screws or the like. The fan case 37 in this connected state is inserted into the cooling space 8R and 8L from above thereof, and is fixed by suitable fixing means so as not to be moved.

The component case 34 is connected to the fan case 37 in an airtight state so as to introduce cooling air vented from the exhaust port 37C for air outlet of the fan case 37, the entirety thereof has an oblong rectangular shape, and also the entirety of other portion is sealed excluding three portions alone of a feed port (not illustrated in the drawing) communicated to the exhaust port 37C, and a later-described first exhaust port 34A, and a second exhaust port 34B.

The printed wiring board (hereinafter, referred to as circuit board) 41 on which there are mounted inverter circuits (210R, 210L, and 210M) configured to supply a predetermined high-frequency power to the right-side induction heat source 6R, left-side induction heat source 6L, and central induction heat source 6M respectively, has an outer dimension substantially equivalent to the internal space shape of the component case 34, and is installed on a side far from the grille heating room 9 within the component case 34, or conversely, closer to the main unit case 2 which makes up the outline of the main unit A up to the distance of only several millimeters or less. Note that a power source and control circuit for driving of the driving motor 300 of the blowing device 30 is implemented together in this circuit board 41 separately from the inverter circuit portions.

The inverter circuits 210R, 210L, and 210M mentioned in this circuit board 41 are circuits except for a rectification bridge circuit 221 of which the input side is connected to the bus line of a commercial power source, illustrated in Fig. 23 (but this rectification bridge circuit 221 may be included) including a direct current circuit made up of a coil 222 and a smoothing capacitor 223, connected to a direct current side output terminal thereof, a resonant capacitor 224, an IGBT 225 which is semiconductor for power control serving as switching means, a driving circuit 228, and a flywheel diode 226, but not including the heating coils 6RC, 6LC, and 6MC which are mechanical structure objects.

With the top face of the component case 34, two of the first exhaust port 34A and second exhaust port 34B are separately formed along a direction in which the cooling air from the blowing device 30 flows. The second exhaust port 34B is in a position on the most downstream side of the flow of the cooling air in the component case 34, and has several times as big opening area as the first exhaust port 34A. Note that, in Fig. 15, Y1 to Y5 indicate the flow of the air suctioned and vented by the blowing device 30, and the cooling air flows sequentially such as Y1, Y2, ..., and Y5.

The entirety of the cooling duct 42 is molded with plastics, and an upper case 42A which is a plastic integrally-molded article, a plate-like lid 42B which is also a plastic integrally-molded article (hereinafter, referred to as "lower case") are overlapped and fixed by screws, and accordingly, later-described three ventilation space 42F, 42G, and 42H are formed within between both thereof (see Fig. 15).

A large number of nozzle holes 42C are formed so as to penetrate a wall side thereof over the entirety of the top face of the upper case 42A, and are for blowing the cooling air from the blowing device 30, and the nozzle holes 42C have the same bore diameter.

A partition wall 42D has a rib (projected rim) shape formed in a linear or curved manner by integral molding in the upper case 42A, and accordingly, ventilation space 42F of which one edge is communicated to the first exhaust port 34A of the component case 34 is compartmentalized (see Fig. 15).

With the partition wall 42E, similarly, the planar shape integrally formed in the upper case 42A is a U-shaped projected rim shape, and accordingly, ventilation space 42H of which one edge is connected to the second exhaust port 34B of the component case 34 is defined. This ventilation space 42H is connected to the widest ventilation space 42G via a communication port (hole) 42J (see Fig. 17) formed on one side portion (side closer to the component case 34 in Fig. 14) of the partition wall 42E (see Fig. 15).

Further, in one side portion (side closer to the component case 34 in Fig. 14) of the ventilation space 42H, the cooling duct 42 is installed so as to be positioned directly above the second exhaust port 34B of the component case 34. Thus, the cooling air vented from the component case 34 enters the ventilation space 42H of the cooling duct 42, and is placed to the ventilation space 42G, and blown from the nozzle holes 42C. A ventilation port 42K is a rectangular ventilation port formed corresponding to the ventilation space 42H of the upper case 42A, which is for outputting the wind for cooling later-described liquid crystal display screens 45R and 45L.

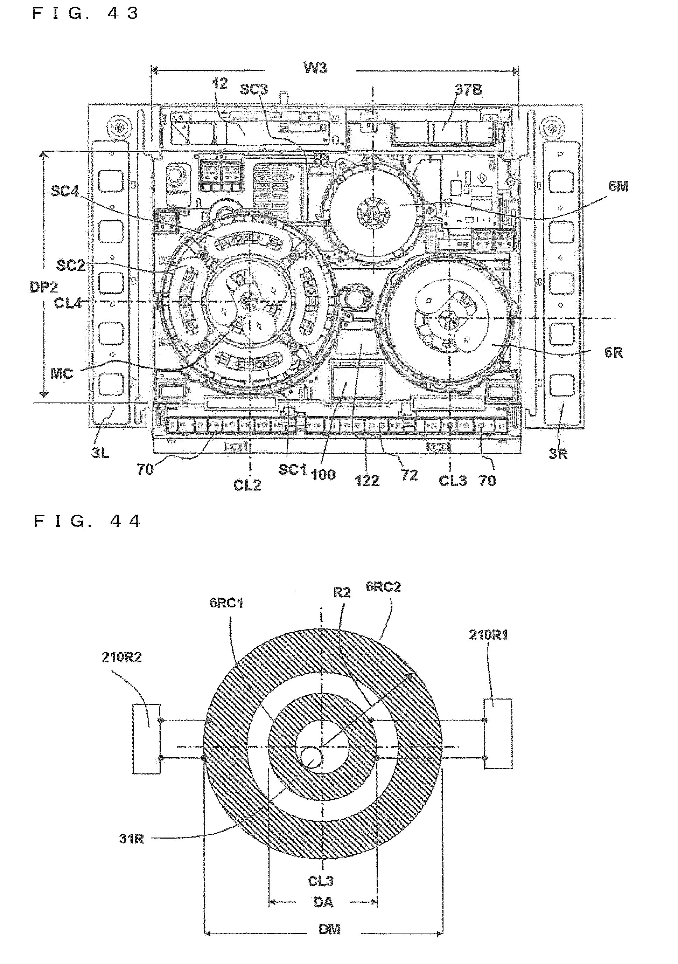

In Fig. 15, 43A and 43B are radiating fins made of aluminum. The radiating fins are attached with a semiconductor switching element for power control such as the IGBT 225 within the circuit board 41 where the inverter circuits 210R, 210L, and 210M (described in detail in Fig. 23) for the right-side induction heat source 6R, left-side induction heat source 6L, and central induction heat source 6M are mounted, and other exothermic components, and a large number of thin fins are formed by being regularly arrayed over the entirety.

Note that the two radiating fins 43A and 43B illustrated in Fig. 15 are for the component case 34 installed in the right-side cooling room 8R within the main unit case 2, that is, for the inverter circuit 210R for the right-side induction heat source 6R and for the inverter circuit 210M for the central induction heat source 6M. The inverter circuit 21 0L for the left-side induction heat source 6L is disposed in the component case 34 installed in the left-side cooling room 8L within the main unit case 2, and radiating fins (not illustrated in the drawing) similar to the radiating fins 43A and 43B are installed in the component case thereof.

The radiating fins 43A and 43B are, as illustrated in Fig. 15, installed on a side closer to the ceiling portion than the bottom in the component case 34, the lower portion secures sufficient space, and the cooling air Y4 flows within the space thereof. That is to say, on the characteristics of the blowing device 30, discharge capacity (blowing capacity) is not even over the entirety of discharge port (exhaust port 37C), the peek portion of the discharge capacity is lower than the vertical center point of the exhaust port 37C, but the positions of the radiating fins 43A and 43B are set upward so as not to position on an extending line of this position. The cooling air is not sprayed toward various types of small electronic components and printed wired pattern portions mounted on the surface of the circuit board 41.

The inverter circuit 210L for the left-side induction heat source 6L comprises the dedicated inverter circuit MIV for driving the main heating coil MC, and dedicated inverter circuits SIV1 to SIV4 for individually driving multiple sub heating coils SC (see Fig. 25).

The grille heating room 9 is housed below the left and right induction heat sources 6L and 6R of the main unit A, and also, predetermined space SX (see Fig. 16) is formed between the rear wall faces on the inner side of the main unit A. That is to say, with the grille heating room 9, in order to install a later-described exhaust duct 14 and to form the exhaust room 12, the space SX of 10 cm or more is formed between the body rear face walls 2U of the main unit case 2.

In a state in which the two independent cooling units CU have been inserted in the cooling rooms 8R and 8L from above and have been fixed, a laterally greater portion which is a portion of the fan case 37 illustrated in Fig. 15 partially protrudes into the space SX (see Fig. 16), and with the component case 34 in which the circuit board 41 is housed, a predetermined gap is formed with the left and right side wall faces of the grille heating room 9. Note that the gap mentioned here means a gap between the left and right outer wall faces of the grille heating room 9 and the component case 34, and does not mean a facing gap between the left and right vertical partition plates 24L and 24R and outer side surface of the component case 34 mentioned in Embodiment 2.

In this manner, the portion of the fan case 37 of the cooling units CU is disposed in the space SX thereof even when there is the grille heating room 9, and in the case of viewing this from the front in a projected manner, the portion of the fan case 37 of the cooling units CU is in a state partially overlapped with the grille heating room 9, and accordingly, the lateral width of the main unit A may be prevented from increasing.

### (Operating Means E)

The operating means E of the heating cooker according to this Embodiment 2 comprises a front-face operating unit 60 and a top-face operating unit 61 (see Fig. 11 to Fig. 13).

### (Front-face Operating Unit)

Front-face operating frames 62R and 62L made of plastics are attached to the front face on both right and left sides of the main unit case 2, and this operating frame front face becomes the front-face operating unit 60. With this front-face operating unit 60, there are provided an operating button 63A (see Fig. 12) of a main power switch 63 configured to collectively apply or shut off the power to all of the left-side induction heat source 6L, right-side induction heat source 6R, central induction heat source 6M, the radiation type electric heat sources 22 and 23 of the grille heating room 9, a right operating dial 64R configured to open or close electrical contact of a right power switch (not illustrated in the drawing) configured to control energizing of the right-side induction heat source 6R and energizing amount (heating power) thereof, and similarly, a left operating dial 64L of a left control switch (not illustrated in the drawing) configured to control energizing of the left-side induction heat source 6L and energizing amount (heating power) thereof. Power is supplied to all of the electric circuit components illustrated in Fig. 23 via the main power switch 63.

With the front-face operating unit 60, there are provided a left indicator light 66L configured to be lit only in a state in which energizing is performed on the left IH heat source 6L by the left operating dial 64L, and a right indicator light 66R configured to be lit only in a state in which energizing is performed on the right IH heat source 6R by the right operating dial 64R.

Note that the left operating dial 64L and right operating dial 64R are, in an unused state, pushed into the inner side so as not to protrude from the front surface of the front-face operating unit 60 as illustrated in Fig. 11, and in a used state, upon the user releasing the finger after pressing the dial, the dial protrudes according to the force of a spring (not illustrated in the drawing) housed in the front-face operating frames 62 (see Fig. 12), and the user is in a state in which the user may hold and turn around the dial. Only at this stage, when turning to the left or right by one stage, is energizing to each of the left-side induction heat source 6L and right-side induction heat source 6R started (at heating power of 150 W serving as the minimum setting).

In this state, when further turning one of the protruding left operating dial 64L and right operating dial 64R, the control means F reads a predetermined electrical pulse generated by a built-in rotary encoder (not illustrated in the drawing) according to the amount of turning thereof, the amount of energizing of this heat source is determined, and setting of heating power is performed. Note that, with either of the left operating dial 64L and right operating dial 64R, regardless of whether the current state is in an initial state or a state in which the user has turned the dial partway to the left or right, when the user pushes the dial once using the finger to push (push back) the dial into a predetermined position where the dial does not protrude from the front surface of the front-face operating unit 10, the dial is held at the position thereof, and also, energizing may instantly be stopped regarding any of the left-side induction heat source 6L and right-side induction heat source 6R (e.g., even during cooking, upon the right operating dial 64R being pushed in, energizing of the right-side induction heat source 6R is immediately stopped).

Note that, in the case of performing a shutoff operation of the operating button 63A of the main power switch 63 (see Fig. 11), thereafter, the operations of the right operating dial 64R and left operating dial 64L become invalid at once. Similarly, energizing of the central induction heat source 6M and radiation type electric heat sources 22 and 23 installed in the grille heating room 9 are shut off all.

Though not illustrated in the drawing, three independent timer dials are provided to the lower portion of the front face of the front-face operating frames 62. These timer dials are for operating a timer switch (also referred to as timer counter, not illustrated in the drawing) configured to energize the left-side induction heat source 6L, right-side induction heat source 6R, and central induction heat source 6M for a desired period of time (timer set time) from start of energizing, and automatically turns off the power after lapse of setup time.

### (Top-face Operating Unit)

The top-face operating unit 61 is, as illustrated in Fig. 13, an operating unit 70 for setting of right heating power, an operating unit 71 for setting of left heating power, and a central operating unit 72. Specifically, with the front portion on the top face of the top plate 21, sandwiching the left and right center lines of the main unit A, the operating unit 70 for setting of right heating power of the right-side induction heat source 6R is disposed on the right side, the central operating unit 72 of the radiation type electric heat sources 22 and 23 installed in the central induction heat source 6M and grille heating room 9 are disposed on the central portion, and the operating unit 71 for setting of left heating power of the left-side induction heat source 6L is disposed on the left side, respectively. Note that the operating unit 70 for setting of right heating power may also be referred to as "right operating unit", the operating unit 71 for setting of left heating power as "left operating unit", and the central operating unit 72 as "central operating unit".

With this top-face operating unit, various keys in the case of performing a cooking container made of stainless steel or iron (not illustrated in the drawing) are provided, and a bread dedicated key 250 is provided therein. Now, an arrangement may be made in which, instead of a particular cooking (e.g., bread) dedicated key, one dedicated common key for use of a cooking container is provided, and each time this key is pressed, operable keys (later-described input keys 141 to 145 or the like) where a desired cooking name (e.g., bread) is displayed are displayed in a later-described integrated display device 100, and the user touches the area of the corresponding key using the finger to input a desired cooking start command. Note that the cooking container may be used even when being inserted into the grille heating room 9 from the front-face opening 9A thereof and being put on a baking pan 109.

Further, with the top-face operating unit 61, there is provided a compound cooking key 251 for a case where cooking is performed using the cooking container at both of the induction heat sources 6R, 6L, and 6M and radiation type electric heat sources 22 and 23 (hereinafter, referred to as "compound cooking" or "compound cooking"). With this Embodiment 1, compound heating between the right-side induction heat source 6R, and radiation type electric heat sources 22 and 23 of the grille heating room 9 is enabled, and the compound cooking key 251 is provided closer to a later-described operating unit 70 for setting of heating power (see Fig. 13).

Note that, with regard to the compound cooking key 251, an arrangement may be made in which instead of a fixed type key or button or knob or the like, a desired key is displayed in the display screen (such as liquid crystal screen) of a later-described integrated display means 100, and the user touches the area of this key using the finger, thereby enabling input of compound cooking. Specifically, a method may be employed in which an acceptable key shape is timely displayed on the display screen of the integrated display means 100 by software, and the user touches this to perform input operations.

### (Operating Unit for Setting of Right Heating Power)

In Fig. 13 and Fig. 28, with the operating unit 70 for setting of right heating power, there is provided key portions 90 for one-touch setting of each heating power by which the heating power of the right-side induction heat source 6R may readily be set simply by the user pressing this once. Specifically, there are provided the three one-touch keys of a low heating power key 91, a middle heating power key 92, and a high heating power key 93, the low heating power key 91 sets the heating power of the right-side induction heat source 6R to 300 W, and the middle heating power key 92 sets to 750 W, and the high heating power key 93 sets to 2500 W. Further, in the case where a highest heating power 94 is provided to the right edge portion of the right one-touch key portion, and it is desired to set the heating power of the right-side induction heat source 6R to 3000 W, the user pressing-operates this.

### (Operating Unit for Setting of Left Heating Power)

Similarly, a one-touch key group similar to the operating unit 70 for setting of right heating power is also installed in the operating unit 71 for setting of left heating power for setting the heating power of the left-side induction heat source 6L.

### (Central Operating Unit)

In Fig. 13 and Fig. 28, with the central operating unit 72, there are provided in a row an operating button 95 which is an operating switch for starting energizing of the radiation type electric heat sources 22 and 23 of the grille heating room 9 to be used for grille (roast) cooking and oven cooking, and an operating button 96 which is an operating switch for stopping energizing thereof.

With the central operating unit 72, there are provided in a row operating buttons 97A and 97B which are temperature adjusting switches for setting control temperature in grille cooking by the radiation type electric heat sources 22 and 23, or electromagnetic cooking by the central induction heat source 6M one degree at a time in an addition or subtraction manner. There are also provided here a power on/off switch button 98 of the central induction heat source 6M7, and setting switches 99A and 99B for setting heating power one level at a time in an addition or subtraction manner.

Further, as illustrated in Fig. 28, a convenient menu key 130 is provided to the central operating unit 72. When operating this, when pressing this in the case of setting deep-fry cooking (using the left-side induction heat source 6L or right-side induction heat source 6R), deep-fry preheating state display (using the left-side induction heat source 6L or right-side induction heat source 6R to heat oil to a predetermined preheating temperature), timer cooking (the left-side induction heat source 6L, right-side induction heat source 6R, central induction heat source 6M, or radiation type electric heat sources 22 and 23 provided into the grille heating room 9 is energized only for time set by the timer switch to perform cooking), a desired input screen and state display screen may readily be read out on a later-described integrated display means 100.

With the right side of the bread dedicated key 250, a right IH convenient menu button 131 R made up of a hard button is provided, and this is a setting button for performing various settings regarding the right-side induction heat source 6R. A similar setting button is also provided to the left-side induction heat source 6L (drawing is omitted).

When operating a start switch for operating and starting the timer counter (not illustrated in the drawing) to use the left or right-side induction heat sources 6R or 6L, elapsed time from the start time thereof is measured and displayed with a numeral on the liquid crystal display screen 45R or 45L. Note that the display light of the liquid crystal display screen 45R or 45L passes through the top plate 21, and elapsed time is explicitly displayed for the user in increments of "minutes" and "seconds".

A left timer switch (not illustrated in the drawing) and the left liquid crystal display unit 45L are also provided to the operating unit 71 for setting of left heating power on the left side in the same way as with the operating unit 70 for setting of right heating power, and these are provided in a symmetrical position sandwiching the lateral center line CL1 of the main unit 1.

### (Heating Power Display Lamp)

With the right-front side of the top plate 21, and a right heating power display lamp 101 R for displaying the magnitude of the heating power of the right-side induction heat source 6R is provided in a position between the right-side induction heat source 6R and the operating unit 70 for setting of right heating power. The right heating power display lamp 101 R is provided in the vicinity of the lower face of the top plate 21 so as to emit display light to the top face side from the lower face thereof via (transmitting) the top plate 21.

Similarly, a left heating power display lamp 101 L for displaying the magnitude of the heating power of the left-side induction heat source 6L is provided in a position between the left-side induction heat source 6L and the operating unit 71 for setting of left heating power at the left side of the top plate 21, and is provided in the vicinity of the lower face of the top plate 21 so as to emit display light to the top face side from the lower face thereof via (transmitting) the top plate 21. Note that, with regard to these display lamps 101 R and 101 L, display is omitted in the circuit configuration diagram in Fig. 23.

### (Display Means G)

The display means G of the heating cooker according to Embodiment 2 is made up of the integrated display means 100.

As illustrated in Fig. 12, Fig. 13, Fig. 18, and Fig. 28, the integrated display means 100 is provided to the front side in the front-to-back direction at the central portion in the lateral direction of the top plate 21. This integrated display means 100 is principally configured of a liquid crystal display panel, and is provided in the vicinity of the lower face of the top plate 21 so as to emit display light to the top face side from the lower face via (transmitting) the top plate 21.

The integrated display means 100 is for inputting or confirming the energizing state (heating power, time, etc.) of the left-side induction heat source 6L, right-side induction heat source 6R, central induction heat source 6M, radiation type electric heat sources 22 and 23 of the grille heating room 9, or the like. Specifically,
(1) The functions of the left and right induction heat sources 6L and 6R (whether or not cooking operation is being performed, etc.)
(2) The function of the central induction heat source 6M (whether or not cooking operation is being performed, etc.)
(3) In the case where cooking at the grille heating room 9, operation procedures and a function when performing cooking thereof (e.g., which of roaster, grille and oven cooking is currently being performed)
In response to these three scenes, operation situations, and heating conditions such as heating power and so forth are explicitly displayed using characters, an illustration, a graph, and so forth.

The liquid crystal screen used at this integrated display means 100 is a known dot-matrix type liquid crystal screen. This may realize a high-definition (QVGA including resolution of 320 x 240 pixels, equivalent to VGA by which display of 640 x 480 dots and 16 colors may be performed) screen, and when displaying characters, a large number of characters may be displayed. The liquid crystal screen is not restricted to one layer, and in order to increase display information, a liquid crystal screen configured to display with vertical two layers or more may be employed. The size of the display region of the liquid crystal screen is a rectangle with length (front-to-back direction) of around 4 cm and width of around 10 cm.

A screen district where information is displayed is divided into multiple regions for each heat source (see Fig. 28). For example, the screen is allocated to 10 areas in total, and each area is defined so as to include the followings.
(1) The corresponding area 100L of the left-side induction heat source 6L (total two of 100L1 for heating power, and 100L2 for time and cooking menu)
(2) The corresponding area 100M of the central induction heat source 6M (total two of 100M1 for heating power, and 100M2 for time)
(3) The corresponding area 100R of the right-side induction heat source 6R (total two of 100R1 for heating power, and 100R2 for time)
(4) Area 100G for cooking of the grille heating room 9
(5) Guide area (100GD) to display reference information in various types of cooking as needed or by the user's operations, and also at the time of abnormal running detection or at the time of improper operation use, to inform the user of this
(6) A key display area 100F to display mutually independent six input keys 141, 142, 143, 144, 145, and 146 having a function to enable various cooking conditions and so forth to be directly input
(7) One optional display area 100N

As illustrated in Fig. 28 and Fig. 29, with the corresponding area 100L of the left-side induction heat source 6L, and specifically, with the 100L2 for time and cooking menu, as for selection of a cooking menu, seven keys of a selection key E1A for high-speed heating, a selection key E1 B for water heater, a selection key E1 C for boiling, a selection key E2A for preheating, a rice-cooking selection key E2B, a deep-fry selection key E3A, and a water heater + hot-keep selection key E3B are displayed on a certain scene together (in a list state). Fig. 29 is a diagram illustrating the state thereof.

Fig. 31 illustrates a case where rapid heating has been selected. The selection key E1A remains in display without change, and the other selection keys are all eliminated, a cooking menu called "high-speed heating" that the E1A means is selected, and it is displayed that the heating operation is being executed now.

In the case where determination is made by the heating target placement determining unit 280 that the bottom diameter of the heating target is that of an ordinary pan level, there is the heating target N above the main heating coil MC, and moreover, the size thereof is not a size straddling above the four sub heating coils SC1 to SC4, the seven keys E1A, E1B, E1C, E2A, E2B, E3A, and key E3B for selection of a cooking menu are not displayed. That is to say, in the case of a great heating target N such as straddling all of the sub heating coils SC1 to SC4, the seven keys E1A, E1B, E1C, E2A, E2B, E3A, and key E3B for selection of a cooking menu may be selected for the first time.

When pressing the key 100N of an optional display area, detailed information useful for cooking or the like may be displayed on the guide area 100GD of the integrated display means 100 using characters.

With regard to the background color of the display area, the entirety is usually displayed with a unified color (e.g., white), but with regard to the display areas 100R and 100G, in the case of the "compound cooking", the color is changed to a color different from the display areas 100L and 100M of the other heat sources but the same as each other (e.g., yellow or blue or the like). Such color change may be performed, in the case where the display screen is liquid crystal, by switching of operation of backlight thereof, but detailed description will be omitted.

The 10 areas (display regions) in total are realized on the liquid crystal screen of the integrated display means 100, but there is no region physically individually formed or partitioned of the screen itself. That is to say, the screen is established by screen display software (microcomputer program), and accordingly, the area, shape, and position may be changed by the software thereof in each case, but the user's ease of use is taken into consideration, and the same alignment sequence is constantly employed in accordance with the horizontal alignment order of the heat sources such as the left-side induction heat source 6L, central induction heat source 6M, right-side induction heat source 6R and so forth.

Specifically, on the screen, information regarding the left-side induction heat source 6L is displayed on the left side, central induction heat source 7 in the middle, and right-side induction heat source 6R on the right side. The display area 100G for cooking of the grille heating room 9 is necessarily displayed on a nearer side than the corresponding areas 100L, 100M, and 100R. Further, the display area 100F of the input key is necessarily displayed on the nearest side regarding what sort of state the display area 100F of the input key is in.

As the input keys 141 to 146, a contact process key of which the electrical capacitance is changed by being touched by a finger or the like of the user is employed, in which the user lightly touches the top face of a glass plate which covers the top face of the integrated display means 100, in a position corresponding to the key surface, and accordingly, an input signal effective for the energizing control circuit 200 is generated.

On the glass plate which makes up the portion (district) of the input keys 141 to 146, characters, a figure, or a symbol (including the arrows of the keys 143 and 145 in Fig. 28) which indicates the input function of a key is not displayed by printing or a punch mark or the like, but with the liquid crystal screen (key display area F) below these keys, characters, a figure, or a symbol which indicates the input function of a key is displayed for each operation scene of these input keys.

All of the input keys 141 to 146 are not always displayed at the same time. An invalid key (input key which has no need to be operated) is set to be in a non-active state such as the input key 144 in Fig. 28 so as not to display input function characters or a figure on the liquid crystal screen when this key is operated. If the input keys 141 through 146 in an active state are operated, this is a valid operation instruction signal as to a control program determining the operations of the energizing control circuit 200.

The input key 146 is a key to be operated in the case of desiring to determine cooking conditions, and in the case of desiring to start cooking. In the case where this has been operated once, and cooking operation has started, the input key is changed to an input key with display of "stop" (see Fig. 28 and Fig. 29). With the other input keys 141 to 145 as well, an input command may be changed in each case, and an effective input function may readily be identified with characters, a figure, a symbol, or the like displayed in each case.

Note that, in the case where it is desired to stop a particular heat source during use of multiple heat sources, for example, when pressing the input key 143 in the scene in Fig. 28, in order from the corresponding area 100M of the central induction heat source 6M, the corresponding area 100L of the left-side induction heat source 6L, and the corresponding area 100R of the right-side induction heat source 6R, the entirety of each corresponding area changes its color or blinks to indicate that this has been selected, and accordingly, it is sufficient for the user to call up (to select) the desired corresponding area thereof, and to press the stop key 146. Conversely, when pressing the input key 145, the user may select the corresponding areas in the opposite direction, and may sequentially select from the corresponding area 100M of the central induction heat source 7, the corresponding area 100R, and corresponding area 100L, call up the desired corresponding area, and then press the stop key 146.

AM is an active mark to be displayed on the side of the name of a heat source under execution of cooking operation, and in the case of this being displayed, this means that the heat source thereof is driven at that time, and the user may recognize the operation of a heat source depending on whether or not there is display of this active mark.

### (Grille Heating Room 9)

The front-face opening 9A of the grille heating room 9 is, as illustrated in Fig. 11 and Fig. 16, covered by the door 13 so as to be closed or opened, and the door 13 is held at the grille heating room 9 by a support mechanism (not illustrated in the drawing) such as a rail, roller, or the like by the door 13 freely being moved in the front-to-back direction by the user's operations. A window plate made of heat-resistant glass is installed in the central opening 13A of the door 13, and the inside of the grille heating room 9 may be visually recognized from the outside. 13B is a knob protruding in front for the door 13 being opened or closed. Note that, with the grille heating room 9, the predetermined space SX (see Fig. 16) is formed between the inner-side rear wall face of the main unit as described above, and a later-described exhaust duct 14 is installed using this space, and also the exhaust room 12 is formed.

The front edge portion of a metallic rail extending back and forth in the horizontal both side positions of the heating room 9 is connected to the door 13, and a metallic pan 108 (see Fig. 16) is usually placed on the rail thereof in the case of performing cooking including a lot of oil. The metallic gridiron 109 is put on the pan 108 and used. Thus, in the case of horizontally pulling out the door forward, the pan 108 is also horizontally pulled out in front of the grille heating room 9 together (in the case where the gridiron 109 is placed, the gridiron thereof is also pulled out). Note that the pan 108 is supported by the horizontal both edge portions being simply placed on the metallic rail, and accordingly, the pan 108 may be independently removed from above of the rail.

The shape of the gridiron 109, and the position, shape, and so forth of the pan 108 are devised so as pull out the pan 108 without coming into contact with the heater 23 at the lower portion at the time of pulling out the pan 108 forward. In this manner, with this grille heating room 9, in the case where meat, fish, and other food are placed on the gridiron 109, and the radiation type electric heat sources 22 and 23 are energized (at the same time, in a time-sharing manner, or the like), this includes "top-and-bottom grilling function" in which these food are heated from vertically both sides. With this grille heating room 9, an internal temperature sensor 242 (see Fig. 23) configured to detect this room temperature is provided, and it may be possible to perform cooking by keeping the temperature inside to the desired temperature.

The grille heating room 9 includes, as illustrated in Fig. 16, a cylindrical metallic inner frame 9C having an opening 9B in the entire rear (back face) side, and an opening 9A on the front side, and an outer frame 9D which covers the entire outer side of this inner frame holding a predetermined (lower) gap 113, a (upper) gap 114, and a horizontal both side gaps (115, not illustrated in the drawing). Note that, in Fig. 16, 307 is an airspace formed between the outer frame 9D of the grille heating room 9 and the bottom wall face of the main unit case 2.

The outer frame 9D includes five faces of horizontal both-side wall faces, top face, bottom face, and rear face, and the entirety is formed of a steel plate or the like. With the inner side surfaces of the inner frame 9C and outer frame 9D, coverage with excellent cleaning property such as hollow or the like is formed or a heat-resistant coating film is formed or an infrared radiation coat is formed. In the case of forming an infrared radiation coat, the amount of infrared radiation for the heating target N such as food or the like is increased, heating efficiency is improved, and cooking nonuniformity is also improved. 9E is an exhaust port formed on a rear wall face upper portion of the outer frame 9D.

The metallic exhaust duct 14 is installed so as to be continued to the outside of the exhaust port 9E, the flow path cross section of this metallic exhaust duct 14 has a regular square or rectangle, and is, as illustrated in Fig. 16, inclined obliquely upward as the flow path goes to the downstream side from the middle, and then bent in the vertical direction, and finally, the upper edge opening 14A connects to the vicinity of a central ventilation port 20C formed in the upper frame 20.

121 is a catalyst for deodorization installed in a position on the downstream side of the exhaust port 9E within the exhaust duct 14, and is activated by being heated by a catalyst electric heater (121 H), and serves to remove odor components from the heated exhaust air within the grille heating room 9 passed through the exhaust duct 14.

### (Exhaust Structure and Intake Structure)

As described above, there are formed horizontally long in the rear portion of the upper frame 20 a right ventilation port (becomes an intake port) 20B, a central ventilation port (becomes an exhaust port) 20C, and a left ventilation port 20D. Above these three rear ventilation ports, a metallic tabular cover 132 (see Fig. 11) where countless small communication holes are formed across the entirety so as to cover the entirety of the upper potion is detachably placed. The cover 132 may be a cover with a wire net or fine lattice shape other than a cover where small holes for communication holes are formed on a metal plate by press working (also referred to as punching metal). In either case, this may be any kind of cover as long as it prevents the user's finger, foreign objects, and so forth from entering the ventilation ports 20B, 20C, and 20D.

The air inlet 37B positioned in the uppermost portion of the suction cylinder 37A of the fan case 37 faces immediately below the right edge portion of the cover 132, and enables external indoor air in a kitchen or the like to be introduced to the left and right cooling rooms 8R and 8L in the main unit A through the communication holes of the cover 132.

As illustrated in Fig. 12, the upper edge portion of the exhaust duct 14 is positioned in the rear exhaust room 12. In other words, the rear exhaust room 12 communicated to the airspace 116 (see Fig. 16) formed around the grille heating room 9 is secured on both left and right sides of the exhaust duct 14. The grille heating room 9 is installed with a predetermined airspace 116 between the horizontal partition plate 25 (see Fig. 16). This airspace 116 finally communicates to the rear exhaust room 12. As described above, the interior of the upper component room 10 communicates to the rear exhaust room 12 through a pair of the exhaust ports 28A formed on the rear partition plate 28, and accordingly, the cooling air (arrow Y5 in Fig. 15) flowing into the upper component room 10 is discharged to the outside of the main unit 1 such as the arrow Y9 in Fig. 12, but at this time, induced by this, the air in the airspace 116 is discharged together.

### (Auxiliary Cooling Structure)

In Fig. 14 and Fig. 15, the front component case 46 internally stores an attachment board 56 where various electric and electronic components 57 of the top-face operating unit 61, light-emitting elements (LED) which display with light the heating power at the time of induction heating cooking, and so forth are attached and fixed, and comprises a lower duct 46A made of transparent plastics where the top face is opened, and an upper duct 46B made of transparent plastics serving as a lit which seals the top face opening of this lower duct 46A so as to shut this. With the right edge portion and left edge portion of the lower duct 46A, ventilation ports 46R and 46L are opened respectively, and also a notch 46C which permits ventilation is formed on the central rear portion.

With the ceiling face of the upper duct 46B, the integrated display means 100 are installed in the center, and the liquid crystal display screens 45R and 45L are installed on the left and right respectively (see Fig. 15). The cooling air of the blowing device 30 enters the ventilation space 42H of the cooling duct 42 from the second exhaust port 34B of the component case 34, enters the front component case 46 from the downward of the liquid crystal display screens 45R and 45L through the ventilation port 42K formed corresponding to the ventilation space 42H from here, and is discharged from the notch 46C to the upper component room 10. Thus, each of the liquid crystal display screens 45R and 45L, and the integrated display means 100 is constantly cooled by the cooling air from the blowing device 30.

In particular, this cooling air from the second exhaust port 34B of the component case 34 is not the air which cooled the left and right IH heating coils 6LC and 6RC which have high temperature at the time of induction heating operation, and accordingly, temperature thereof is low, the air amount of the cooling air is little regarding both of the liquid crystal display screens 45R and 45L, and integrated display means 100, and accordingly, temperature rise is effectively suppressed. In particular, the rear positions of the left and right IH heating coils 6LC and 6RC serving as the downstream side of the flow (arrow Y5 in Fig. 15) of the cooling air are hardly cooled, and accordingly, with this Embodiment 2, low-temperature air is directly supplied from the first exhaust port 34A to the ventilation space 42F, and the relevant portions are cooled.

### (Auxiliary Exhaust Structure)

As illustrated in Fig. 16, a cylindrical bottom 14B having a shape recessed downward by one level is formed on the more downstream side than the catalyst 121 for deodorization of the exhaust duct 14. A vent hole 14C is formed in this cylindrical bottom 14B. A blowing device 106 is an axial flow type blowing device for auxiliary exhaust facing this vent hole 14C, 106A is a rotary wing thereof, 106B is a driving motor configured to rotate the rotary wing 106A thereof, and is supported by the exhaust duct 14. During cooking with the grille heating room 9, the grille heating room 9 thereof becomes high temperature, and accordingly, the internal pressure naturally rises, and accompanied therewith, high-temperature atmosphere is discharged, the exhaust duct 14 rises, but the blowing device 106 is operated to take the internal air of the main unit A in the exhaust duct 14 as illustrated with an arrow Y7, and accordingly, the high-temperature of the grille heating room 9 is induced by fresh air thereof, and is discharged from the upper edge portion opening 14A of the exhaust duct 14 while the temperature drops, as illustrated with an arrow Y8.

The axial flow type blowing device 106 for auxiliary exhaust is not constantly operated while the cooker is being operated, and is operated in the case where cooking is performed at the grille heating room 9. This is because high-temperature hot air is discharged from the grille heating room 9 to the exhaust duct 14 in this case. The flow of air in Y7 and Y8 in Fig. 16, and the flow of air in Y1 to Y5 in Fig. 15 are not completely related, and are not continuous flow.

### (Control Means F)

The control means (controller) F of the heating cooker according to this Embodiment 2 is principally configured of the energizing control circuit 200.

Fig. 23 is a component diagram illustrating the entire control circuit of the heating cooker, and this control circuit is formed of the energizing control circuit 200 configured of one or multiple microcomputers being embedded therein. The energizing control circuit 200 comprises four components of an input unit 201, an output unit 202, a storage unit 203, and an arithmetic controller (CPU) 204, and is supplied with DC power supply via a voltage stabilizer (not illustrated in the drawing), and serves as a role of main control means configured to control all of heating sources and the display means G. In Fig. 23, the inverter circuit 210R for the right IH heat source 6R is connected to a commercial power source of 100 V or 200 V voltage via the rectifier circuit (also referred to as rectifier bridge circuit) 221.

Similarly, in parallel with the inverter circuit 210R for the right-side induction heat source 6R, the inverter circuit 21 0L for the left-side induction heat source 6L having the same basic configuration as with the right-side heating coil 6RC (induction heating coil) illustrated in Fig. 23 is connected to the commercial power source via the rectifier bridge circuit 221. Specifically, the left-side heating coil 6LC includes the rectifier bridge circuit 221 of which the input side is connected to the bus line of the commercial power source, a direct current circuit made up of the coil 222 and smoothing capacitor 223 connected to the output terminal of the direct current side, a resonant circuit made up of a parallel circuit of the right-side heating coil 6RC and resonant capacitor 224 of which one edge is connected to a connection point of the coil 222 and smoothing capacitor 223, and an IGBT 225 made up of switching means of which the collector side is connected to the other edge of this resonant circuit.

Great difference between the inverter circuit 210L for the left-side induction heat source 6L and the inverter circuit 21 0R for the right-side induction heat source 6R is in that the main heating coil MC and sub heating coils SC are provided. Therefore, the inverter circuit 210L for the left-side induction heat source 6L comprises both of the inner-side coil LC2 and outer-side coil LC1, specifically, the inverter circuit MIV for the main heating coil configured to supply electric power to the main heating coil MC, and the inverter circuits SIV1 to SIV4 for sub heating coils configured to individually supply electric power to four later-described independent sub heating coils SC1 to SC4 respectively. The energizing timing and the amount of energizing of the four sub heating coils SC1 to SC4 are determined by the energizing control circuit 200.

With the inverter circuit MIV for the main heating coil, a variable frequency output control method is employed, and accordingly, inverter electric power, that is, heating power to be obtained may be varied by changing the frequency thereof. The higher the driving frequency of the inverter circuit MIV is set, the lower the inverter electric power is, and loss of the and electric and electronic elements making up the circuit such as the switching means (IGBT) 225, resonant capacitor 224, and so forth increases, and the heating value increases, which are undesirable, and accordingly, a predetermined upper-limit frequency is determined, and control is performed so as not to exceed this frequency. Though electric power in the case where control may consecutively be performed at the upper-limit frequency becomes the minimum electric power, when electric power less than this is supplied, the final small heating power may be obtained in combination with energizing ratio control in which energizing is intermittently performed. With the inverter circuits SIV1 to SIV4 for the sub heating coils, heating power control may be performed in the same way.

The driving frequency to be used for driving of the inverter circuit MIV is set basically in the same way as with the driving frequency for the inverter circuits SIV1 to SIV4 for sub heater coils. In the case of changing this, the energizing control circuit 200 performs control so that difference in the driving frequencies is excluded from a range of 15 to 20 kHz, so that the difference between the two driving frequencies will be outside the audible frequency range. This is because, in the case where two or more induction heating coils have been driven at the same time, differences in the frequencies thereof cause uncomfortable sounds such as beat sound or interference noise.

Note that the main inverter circuit MIV, and the inverter circuits SIV1 to SIV4 for the sub heating coils do not have to be driven at the same time, and for example, depending on heating power that the energizing control circuit 200 instructs, heating operation may alternately be switched with a short time interval. The "at the same time" mentioned here means a case where timing for starting energizing and timing for suspending energizing are completely the same.

212 denotes a heater driving circuit configured to drive the radiation type electric heat source 22 for heating inside of the grille heating room 9, 213 similarly denotes a heater driving circuit configured to drive the radiation type electric heat source 23 for heating inside of the grille heating room 9, 214 denotes a heater driving circuit configured to drive the catalyst heater 121 H provided in the middle of the exhaust duct 14, and 215 denotes a driving circuit configured to drive the liquid crystal screen of the integrated display means 100.

The emitter of the IGBT 225 is connected to a common connection point between the smoothing capacitor 223 and the rectifier bridge circuit 221. The flywheel diode 226 is connected between the emitter and collector of the IGBT 225 so that the anode of the flywheel diode 226 become the emitter side thereof.

A current detecting sensor 227 detects a current flowing into the resonant circuit made up of a parallel circuit of the right-side heating coil 6RC and resonant capacitor 224R. The detection output of the current detecting sensor 227 is input to the heating target placement determining unit 280 described later, and determination information to the effect that whether or not there is the heating target N is supplied to the input unit of the energizing control circuit 200 via this, determination regarding whether or not there is the heating target N is performed. In the case where an in appropriate pan (heating target N) or the like has been used for induction heating, or insufficient current or eddy current of difference equal to or greater than a predetermined value has been detected as compared to a normal current value due to a certain accident or the like, the IGBT 225 is controlled by the energizing control circuit 200 via the driving circuit 228, and energizing of the induction heating coil 220 is instantly stopped.

Similarly, the inverter circuit MIV for the main heating coil, and the inverter circuits SIV1 to SIV4 for the sub heating coils which supply power individually to the four independent sub heating coils SC1 to SC4 respectively, have a circuit configuration similar to that of the inverter circuit 210R of the right-side induction heat source 6R, and accordingly, description will be omitted, but a common circuit configuration of these is summarized, and is, in Fig. 23, illustrated as the inverter circuit 210L of the left-side induction heat source 6L.

In Fig. 23, 6LC denotes a left-side heating coil, and 224L denotes a resonant capacitor. The inverter circuit MIV of the main heating coil MC is also connected to the rectifier bridge circuit 221, a direct current circuit made up of the coil 222 and smoothing capacitor 223, a resonant circuit made up of a parallel circuit of the main heating coil MC and resonant capacitor 224 of which one edge is connected to a connection point of the coil 222 and smoothing capacitor 223, and an IGBT 225 made up of switching means of which the collector side is connected to the other edge of this resonant circuit.

The current detecting sensor 227 is, though not illustrated in the drawing, also similarly provided to the left-side induction heat source 6L, and the inverter circuits 210L and 210M of the central induction heat source 6M. Note that there is a method for configuring the current detecting sensor 227 using a flow divider configured to measure current using a resistor, or a current transformer.

The driving circuit 260 drives the inverter circuit MIV for the main heating coil, and serves a role similar to the driving circuit 228. Similarly, the driving circuits 261 to 264 drive the inverter circuits SIV1 to SIV4 for the sub heating coils, respectively.

A current detecting sensor 266 detects a current flowing into the resonant circuit made up of a parallel circuit of the main heating coil MC and a resonant capacitor (not illustrated in the drawing), and similarly, current detecting sensors 267A, 267B, 267C (not illustrated in the drawing), and 267D (not illustrated in the drawing) detect a current flowing into the resonant circuit made up of a parallel circuit of the sub heating coils SC and a resonant capacitor (not illustrated in the drawing). These current sensors 266, 267A, 267B, 267C, and 267D serve a role similar to the current detecting sensor 227. Note that the current sensor on the resonant circuit side as described above is referred to as an output-side current sensor, but on the other hand, a current sensor called an input-side current sensor is provided closer to the commercial power source (AC power source) 75 side than the rectifier circuit 76 of the DC power supply unit 80, and according to these current sensors of both of the input side and output side, the current value is monitored, and the operation of the resonant circuit, and abnormal states are monitored.

With the heating cooker configured to heat the heating target N using an induction heating method as with the present invention, an electric control circuit configured to send a high-frequency electric current to the left and right induction heat source 6L and 6R and central induction heat source 6M is called a so-called resonant type inverter. This circuit is configured to control on/off of a switching circuit element (IGBT, 225 in Fig. 23) using a driving frequency of around 20 to 40 kHz for a circuit which connects to the inductance of the left and right heating coils 6LC, 6RC, and 6MC including the heating target N (metal objects), and resonant capacitors (224L and 224R in Fig. 23). Note that the inverter circuit 210M of the central induction heat source 6MC has a configuration similar to that of the inverter circuit 210R of the right-side induction heat source 6R. Specifically, the inverter circuit 210M of the central induction heat source 6M is connected to the commercial power source via a rectifier bridge circuit (not illustrated in the drawing) similar to the rectifier bridge circuit 221 in parallel with the inverter circuit 210R for the right-side induction heat source 6R.

As a resonant type inverter, there are a current resonant type mentioned to be suitable for 200 V power supply, and a voltage resonant type mentioned to be suitable for 100 V power supply. The configuration of such a resonant type inverter circuit is classified into methods called a so-called half bridge circuit and a full bridge circuit depending on how to switch the connection destinations of the left and right heating coils 6LC and 6RC and resonant capacitors 224L and 224R with a relay circuit.

In the case where the heating target is induction-heated using a resonant type inverter circuit, when the heating target N is a magnetic material such as iron, magnetic stainless steel, or the like, resistance (equivalent resistance) contributed to heating is great, and electric power is readily turned on, and accordingly, heating is readily performed, but when the heating target N is a non-magnetic material such as aluminum or the like, equivalent resistance becomes small, and accordingly, eddy current induced in the heating target N is difficult to change to the Joule heat. Therefore, it has been known to perform control in which in the case where it is determined that the material of the heating target N is a magnetic material, the inverter circuit configuration is automatically changed to the half bridge method, or in the case of the heating target N made up of a magnetic material, the inverter circuit configuration is automatically changed to the full bridge method (e.g., Japanese Unexamined Patent Application Publication No. 5-251172, Japanese Unexamined Patent Application Publication No. 9-185986, and Japanese Unexamined Patent Application Publication No. 2007-80751). With the present invention, unless otherwise stated, the inverter circuits 210R and 210L may be configured of a half bridge circuit or full bridge circuit.

In Fig. 23, in order to simplify description, a half bridge resonant type inverter circuit has been employed, but when the present invention is actually implemented, a full bride circuit such as Fig. 24 or Fig. 25 is desirable.

Upon further specific description being made with reference to Fig. 24 and Fig. 25, the heating cooker includes a power supply unit (power supply circuit) 74. The power supply unit 74 includes a DC power supply unit 80, the main inverter circuit MIV, and the four sub inverter circuits SIV1 to SIV4. Note that, though only two of the main inverter circuit MIV and sub inverter circuit SIV1 are described in Fig. 24, the three sub inverter circuits SIV2 to SIV4 having the same configuration as with the inverter circuit SIV including contact points CP1 and CP2 are each connected to the energizing control circuit 200 in parallel as illustrated in Fig. 25. Specifically, in the same way as with the sub inverter circuit SIV1, connection points CP3, CP4, CP5, CP6, and CP7 serving as both edge portions of the other three sub inverter circuits SIV2, SIV3, and SIV4 are each connected to the circuit of the connection points CP1 and CP2. Note that a driving circuit having the same function as with the driving circuits 228 and 228B illustrated in Fig. 24 is connected to the three sub inverter circuits SIV2 to SIV4. The driving circuits 228A and 228B will be described in detail later.

As is apparent from the above description, the four sub inverter circuits SIV1 to SIV4 are configured to be each connected to the DC power supply unit 80 and energizing control circuit 200 in parallel.

The DC power supply unit 80 is connected to the AC power source 75. The AC power source 75 is a commercial AC power source of a single phase or three phases. The AC power source 75 is connected to a rectifier circuit 76 configured to perform full wave rectification of AC current output from this AC power source 75. The rectifier circuit 76 is connected to a smoothing capacitor 86 configured to perform smoothing on AC voltage after full wave rectification at this rectifier circuit.

The main inverter circuit MIV, and four sub inverter circuits SIV1 to SIV4 are full bridge inverters which further convert this direct current into alternating current having a high-frequency after converting the alternating current into direct current. The inverter circuits MIV, and SIV1 to SIV4 are connected to the DC power supply unit 80 of the power supply unit 74.

The main inverter circuit MIV and sub inverter circuit SIV1 each includes two sets of switching element pair (also referred to as set) 77A, 78A, 77B, and 78B. As illustrated in the drawing, the switching element pair 77A and 78A of the main inverter circuit MC include two switching elements 79A, 81A, and 88A, 89A which are serially connected, respectively. The switching element pair 77B and 78B of the sub inverter circuit SIV1 include two switching elements 102B, 103B, and 104B, 105B which are serially connected, respectively. Though not illustrated in the drawing, with the sub inverter circuits SIV2, SIV3, and SIV4 illustrated in Fig. 25 as well, two sets of switching elements as described above are provided. Note that the driving timing of the two sets of switching element pair 77A and 78A of the main inverter circuit MIV is controlled by the driving circuits 228 and 228B, and the amount of current flowing into the main heating coil MC may be adjusted by controlling the phase difference.

The main heating coil MC, and a series resonant circuit including a resonant capacitor 110A are connected between output points of the switching elements 79A and 81A, and output points of the switching elements 88A and 89A. The sub heating coil SC1, and a series resonant circuit including a resonant capacitor 110B are connected between output points of the switching elements 102B and 103B, and output points of the switching elements 104B and 105B. Similarly, though not illustrated in the drawing, with each of the other three sub inverter circuits SIV2, SIV3, and SIV4, the sub heating coils SC2 to SC4, and the series resonant circuit including the resonant capacitor (not illustrated in the drawing) 110A are similarly connected.

The two sets of switching element pair 77A and 78A of the main inverter circuit MIV are connected to the driving circuits 228A and 228B, respectively. The two sets of switching element pair 77B and 78B of the sub inverter circuit 1 are connected to the driving circuits 228C and 228D, respectively. The remaining three sub inverter circuits SIV2 to SIV4 are also each connected to the driving circuits 228E, 228F, 228G, 228H, 228I, and 228J (not illustrated in the drawing) one at a time. All of these driving circuits 228A to 228J are connected to the heating target placement determining unit 280 via the energizing control circuit 200.

With this Embodiment 2, as various switching circuit elements, for example, the IGBT 225 illustrated in Fig. 23, and the switching elements 77A, 81A, 88A, 89A, 102B, 103B, 104B, and 105B have been illustrated in Fig. 24 with elements made of silicon, but may be made of wideband gap semiconductor having greater band gap than silicon. Examples of wideband gap semiconductors include silicon carbide, gallium nitride system material, diamond, and gallium nitride (GaN). A switching element or diode element made of such wideband gap semiconductor has high voltage resistance nature, and also has high allowable current density, and accordingly, reduction in size for switching elements or diode elements are enabled, and switching elements or diode elements of which the sizes have been reduced are employed, by which reduction in size of a semiconductor module in which these elements have been embedded may be enabled.

Thermal resistance is also high, and accordingly, reduction in the radiation fin of heat sink, or air cooling of a water cooling unit may be performed, and accordingly, further reduction in the semiconductor module may be performed.

Further, power loss is low, and accordingly, increase in efficiency regarding switching elements or diode elements may be performed, and consequently, increase in efficiency regarding the semiconductor module may be performed.

As illustrated in Fig. 15, the circuit board 41 on which the inverter circuit 210R for the right-side induction heat source 6R, and the inverter circuit 210M for the central induction heat source 6M are mounted is installed within one component case 34 installed in the right-side cooling room 8R within the main unit case 2, but this may simply be realized as compared to the related art by employing switching elements or diode elements made of wideband gap semiconductor. Specifically, wideband gap semiconductor is also high in thermal resistance, and accordingly, reduction in the radiation fins 43A and 43B may be performed, and consequently, installation space of the circuit board 41 may also be reduced, and the right-side cooling unit CU may be installed in one of the cooling room 8R of the main unit case 2. Even when the inverter circuit 210R for the right-side induction heat source 6R, and the inverter circuit 210M for the central induction heat source 6M are configured to be mounted on two circuit boards 41 instead of the single circuit board 41, the component case 34 in which these circuit boards are stored does not have to be increased in size, and also the space of the cooling room 6R does not have to be increased, and consequently, the space of the upper component room (component storage room) 10 may be secured, and multiple induction heating coils including a heating coil with a great outer diameter such as the left-side induction heat source 6L may be installed in a row.

Note that it is desirable that both of the switching elements and diode elements are formed of wideband gap semiconductor, but any ones of the elements may be formed of wideband gap semiconductor, and advantages as described above may be obtained.

The energizing control circuit 200 has a function to accord the frequency of a switch driving signal to be output to the main inverter circuit MIV and all of the sub inverter circuits SIV1 to SIV4.

According to the above-mentioned configuration, after the user turns on the main power through the front-face operating unit 60, when instructing the energizing control circuit 200 to start heating drive through the top-face operating unit 61 or front-face operating unit 60, after the output of the AC power source 75 is converted into direct current at the DC power supply unit 80, a driving signal is output from the driving circuits 228A, 228B, 228C, and 228C (operation description of the other driving circuits will be omitted) based on the instruction signal (switch driving signal) to be output from the energizing control circuit 200. Thus, the switching elements 79A, 89A, and 81A, 88A, switching elements 102B, 105B, and 103B, 104B are each alternately turned on/off, the direct current is converted into alternating current with a high frequency again, and the high-frequency current is applied to the main heating coil MC and sub heating coil SC1. Thus, induction heating operation is started. Note that the frequency of the switch driving signal to be output to the main inverter circuit MIV and sub inverter circuit SIV1 from the energizing control circuit 200 is automatically set so as to be equal.

According to the above-mentioned configuration, in the case of sending high-frequency current in the clockwise direction to the main heating coil MC, the energizing control circuit 200 has a function to control, with mutually adjacent regions (outer circumferential region of the main heating coil), the main inverter circuit MIV and sub inverter circuits SIV1 to SIV4 so that the high-frequency current IB applied to the four sub heating coils SC1 to SC4, and the high-frequency current IA to flow into the main coil MC flow in the same direction (counterclockwise direction).

Conversely, in the case of sending the high-frequency current IA in the counterclockwise direction to the main heating coil MC, the energizing control circuit 200 controls the main inverter circuit MIV and all of the sub inverter circuit SIV1 to SIV4 so that the high-frequency current IB applied to the sub heating coils SC1 to SC4 flow in the same direction (clockwise direction) in mutually adjacent regions. Thus, as described above, occurrence of noise due to difference in frequency may be suppressed.

As described above, when performing induction heating on the heating target N by energizing of the left and right heating coils 6LC and 6RC, in the case where the heating target N is made of a magnetic material such as iron or the like, with the heating coils 6LC and 6RC, it is sufficient for the switching circuit elements (IGBT, 225 in Fig. 23, switching elements 77A, 81A, 88A, 89A, 102B, 103B, 104B, and 105B in Fig. 24) to be controlled on/off with a driving frequency of around 20 to 40 kHz to send current of a frequency of around 20 to 40 kHz to a resonant circuit connected to the resonant capacitors (224L and 224R in Fig. 23, 110A and 110B in Fig. 24).

On the other hand, in the case where the heating target N is made of a material with high electric conductivity such as aluminum or copper or the like, in order to obtain desired heating output, large current has to be sent to the left and right IH heating coils 6LC and 6RC to induce large current at the bottom of the heating target N. Therefore, in the case of the heating target N made of a material with high electric conductivity, on/off control is performed with a driving frequency of 60 to 70 kHz.

In Fig. 23, a motor driving circuit 33 is a driving circuit for the driving motor 300 of the blowing device 30 for keeping the interior space of the main unit A in Fig. 11 in a fixed temperature range, and the motor driving circuit 231 is a driving circuit for the driving motor 106B of the blowing device 106 installed in the exhaust duct 14.

### (Temperature Detecting Circuit)

In Fig. 23, temperature detection information is input to the temperature detecting circuit 240 from each temperature detecting element.
(1) Temperature detecting element 31 R provided substantially in the middle of the right-side heating coil 6RC
(2) Temperature detecting element 31 L provided in the middle of the left-side heating coil 6LC
(3) Temperature detecting element 241 provided in the vicinity of the heating coil of the central induction heat source 6M
(4) Temperature detecting element 242 for internal temperature detection of the grille heating room 9
(5) Temperature detecting element 243 installed in the vicinity of the integrated display means 100
(6) Temperature detecting elements 244 and 245 air-tightly attached to two radiation fins 43A and 43B within the component case 34, configured to individually detect the temperature of two radiation fins

Note that two or more temperature detecting elements may be provided for an object for detection of temperature. For example, an arrangement may be made in which the temperature sensor 31 R of the right-side induction heat source 6R is provided to the middle portion and outer circumferential portion of the heating coil 6RC thereof, by which temperature control is realized in a more accurate manner. The temperature detecting element may be configured by employing a different principle. For example, a temperature detecting element in the middle of the right-side heating coil 6RC may employ an infrared method, and a temperature detecting element provided to the outer circumferential portion may employ a thermistor method.

The control circuit 200 constantly controls the motor driving circuit 33 of the driving motor 300 of the blowing device 30 to operate the blowing device 30 so as to prevent each portion for measuring temperature from reaching or exceeding a predetermined temperature, according to a temperature measurement state from the temperature detecting circuit 240, thereby cooling the portions using the air.

The temperature detecting element 31 L proved to the middle portion of the left-side heating coil 6LC comprises five temperature detecting elements 31 L1 to 31 L5, but this will be described in detail later.

### (Sub Heating Coils)

In Fig. 19 and Fig. 21, the outer-side coil 6LC1 of the left-side heating coil 6LC is an annular coil with the maximum outer diameter of DA (= twice of radius R1) including the center point X1, the inner-side coil 6LC2 is a coil wound in an annular shape with space 270 on the inner side of the outer-side coil 6LC1, and has the same center point X1. The main heating coil MC comprises such two toric coils positioned on the concentric circle.

The four sub heating coils SC1 to SC4 are disposed on the outer circumferential face of the main heating coil MC with predetermined space 271 maintained therebetween, are bent along the same circumference of a radius R2 with the center point X1 as the center as illustrated in Fig. 21, and also disposed so as to be scattered with a substantially equal interval therebetween, and outer shape thereof is, as illustrated in Fig. 19 and Fig. 21, a curved ellipse or oval. The sub heating coils SC1 to SC4 are also formed by the one or multiple group wires being wound while being twisted, the group wires being wound in a predetermined direction so that the outer shape becomes an ellipse or oval, the group wires being partially restricted with a binding tool such as insulating tape or the like, or the entirety thereof being fixed with a heat resistant resin or the like.

As illustrated in Fig. 21, the circumferential line of a radius RY from the center point X1 agrees with the center line in the longitudinal direction of each of the sub heating coils SC1 to SC4. In other words, at circumference of the annular main heating coil MC configured of one closed circuit, the four sub heating coils SC1 to SC4 are disposed so that an arc drawn with a radius RX from the center point X1 of the main heating coil MC thereof is formed in the inner side (side facing the outer circumference of the main heating coil MC). The sub heating coils SC1 to SC4 are curved with a curvature radius RX, and electrically makes up a closed circuit. Note that twice of the radius RY (the diameter of the circle) is equivalent to the dimension CW1 in Embodiment 1 illustrated in Fig. 3.

The height (thickness) of the main heating coil MC and the height (thickness) of the sub heating coils SC1 to SC4 are the same, and also, the main heating coil MC and sub heating coils SC1 to SC4 are horizontally installed and fixed on a later-described coil supporting member 290 so that the distance between the upper faces thereof and the lower face of the top plate 21 become the same dimension.

A straight line Q1 illustrated in Fig. 19 is a straight line which connects, of the four sub heating coils SC1 to SC4, a curved edge in the inner side, in other words, one edge RA (in other words, starting point) of a curved arc and the center point X1. Similarly, a straight line Q2 is a straight line connects, of the four sub heating coils SC1 to SC4, the other edge RB (in other words, end point) of the arc and the center point X1. It is desirable from a viewpoint of heating efficiency that length between the two edge RA and edge RB (between the starting point and end point), that is, the length of the arc curved with the radius RX along the outer circumferential face of the main heating coil MC is long. This is, as will be described later, because it is devised that high-frequency currents flow in the same direction between the outer circumferential edge of the main heating coil MC and the sub heating coils SC1 to SC4 so as to decrease magnetic interference.

However, in reality, the directions of high-frequency currents between adjacent two sub heating coils SC1 to SC4 become the opposite directions, and accordingly, influence due to this becomes a problem. In order to suppress this influence, these are separated for certain distance (later-described space 273). Therefore, there is a certain limit in the length of the arc.

Next, dimension relations of the heating coil 6LC of the left-side induction heat source 6L illustrated in Fig. 19 and Fig. 21 will be described.
Outer diameter DA of main heating coil MC (twice of R1): around 130 mm
Radius R1 of main heating coil MC: around 65 mm
Curvature radius RX on inner side of sub heating coil SC: around 50 mm
Width of space 271: 5 mm
Width of space 272: 10 mm
Average lateral width W31 of all group wires on outer side of sub heating coil SC: 10 mm
Radius RX of circle: 70 mm
Maximum outer diameter DB of heating coil 6LC: around 200 mm
Width of space 273: 15 (in the case where the space 271 is 10 mm, 30 mm)

Specifically, as illustrated in Fig. 19 and Fig. 21, in the case where the space 271 serving as electric insulation distance between the main heating coil MC and sub heating coils SC1 to SC4 is tentatively 5 mm, the following dimensions are obtained by calculation.
Outer diameter DA of main heating coil MC: around 130 mm (equivalent to twice of R1)
Length of circumference of RX: around 440 mm (= RX x circumference ratio 3.14)

Accordingly, in the case where the four sub heating coils SC1 to SC4 are evenly disposed (90 degrees each), the length of one fourth of the circumference becomes around 110 mm.

An angle made up of Q1 and Q2 illustrated in Fig. 20 is not 90 degrees, but 60 degrees to 75 degrees, for example. Therefore, in the case of 70 degrees, the around 110 mm becomes around 86 mm from Expression of a ratio of 70 degrees / 90 degrees (around 0.778) x 110 mm. That is to say, the length of the arc on the innermost side of the sub heating coils SC1 to SC4 is around 86 mm.

As with this Embodiment 2, in the case of the four sub heating coils SC, of circumference 360 degrees of the main heating coil MC, a range of 280 degrees (= quadruple of the 70 degrees) is arcs (of the sub heating coils SC) curved (with the curvature radius RX) along the outer circumferential face of the main heating coil MC, and accordingly, in a range of around 77.8% (= 280 degrees / 360 degrees) (this ratio will be referred to as "agreement rate" in the following description), the direction of the outer circumferential edge of the main heating coil MC agrees (in parallel) with the directions of the inner circumferential edges of the sub heating coils SC1 to SC4. This means that there is a good possibility that the high-frequency currents IA and IB will be sent in the same direction between the main heating coil MC and sub heating coils SC1 to SC4, which contributes to improvement of magnetic flux density for the heating target N, and improvement of heating efficiency by reducing magnetic interference.

In Fig. 19 and Fig. 21, in order to promote easy-to-follow description, the sizes of the component portions, such as the main heating coil MC and sub heating coils SC1 to SC4 and so forth, are not illustrated with scale. The greater "agreement rate" is, the longer length for mutually enhancing magnetic density in adjacent regions of two heating coils by the high-frequency currents flowing in the same direction, which is desirable from a viewpoint of heating efficiency, but in reality, there is a limit since the space 273 has to be secured, and accordingly, the agreement rate cannot be set to 100%.

Note that, in Fig. 21, the center point X1 is taken as the center, and also, the radius RY of a true circle passing through the centers of the four sub heating coils SC is obtained from the widths of the RX, W31, and space 272, and is around 85 mm. In this case, the diameter of a circle including the four sub heating coils SC1 to SC4, in other words, the maximum outer diameter DB of the heating coil 6LC of the left-side induction heat source 6L becomes around 200 mm.

The space 271 may be 10 mm instead of 5 mm serving as the minimum dimension, for example. In this case, the RY becomes around 90 mm.

The space 271 is insulation space necessary for keeping insulation properties between two objects such as the main heating coil MC and sub heating coils SC1 to SC4 to which high-frequency current is each supplied from another inverter circuit, but in the case where an electrical insulator such as porcelain, heat-resistant plastics, or the like is converted into a thin plate shape, and is made to intervene so as to interrupt between the main heating coil MC and sub heating coils SC1 to SC4, the electrical insulation properties of the space 271 improves, and the dimensions of the space 271 may further be reduced.

The sub heating coils SC1 to SC4 do not have a round shape, and accordingly, in order to facilitate manufacturing thereof, for example, an arrangement may be made in which these are divided into vertical two layers, specifically, while twisting one or multiple group wire made up of a bundle of 20 to 30 thin wires (wires) having a diameter of around 0.1 mm to 0.3 mm in a whorl-like form, the two having the completely same planar shape are wound in an ellipse or oval manner, and are serially connected by wire connection, thereby forming an electrically single coil. Note that, in order to improve magnetic driving force per the same unit plane area to realize high output even with a small plane area as compared to the main coil MC, further thinner wires than those of the main heating coil MC may be employed.

The space (cavity) 272 is space to be naturally formed when forming the sub heating coils SC1 to SC4. Specifically, this is consequently formed when rolling the group wire in one direction. The space 272 is used in the case of cooling the sub heating coils SC1 to SC4 themselves, and air for air cooling supplied from the blowing device 30 rises through this space 272. A coil support member 290 is molded integral with a nonmetal material such as heat-resistant plastics, eight arms 290B extend from the center point X1 in a radiation manner, and also has a circular shape to which an outermost circumferential edge portion 290C is connected.

In the case of holding each of infrared sensors 31 L1 to 31 L5, five support portions 290D1 to 290D5 are attached to the top faces or side faces of the arms 290B integrally or as a separate component (see Fig. 22). A protrusion 290A for support is a portion to be formed integral with four arms 290B which face the central portions of the sub heating coils SC1 to SC4 of the eight arms 290B extended in a radiation manner, and is provided in four locations three at a time, one thereof enters in the space 272 of the sub heating coils SC1 to SC4, one of the remaining two is disposed closer to the center point X1 than the sub heating coils SC1 to SC4, and the other is conversely disposed on the outer side.

A support tongue portion 290E is formed integral with the four arms 290B to face both edge portions of the sub heating coils SC1 to SC4, two at a time, both edge portions of the sub heating coils SC1 to SC4 are placed above this, and also, the central portions of the sub heating coils SC1 to SC4 are placed above the top faces of the other two arms 290B.

A cylindrical fixing portion 290F is formed integral with the top faces of all of the support tongue portions 290E in a protruding manner one at a time, and is positioned in positions corresponding to both edge portions of the space 272 thereof when installing the sub heating coils SC1 to SC4. According to this fixing portion 290F and the protrusion 290A for support, with the sub heating coils SC1 to SC4, three of the space 272 of the center portion thereof, the inner side and outer side positions are position-restricted, and accordingly, the sub heating coils SC1 to SC4 are not deformed due to inadvertent lateral movement or expansion force accompanied with heating (arrows FU and FI indicated with a dashed dotted line in Fig. 22 as a representative) or the like.

Note that the positions of the sub heating coils SC1 to SC4 are restricted of which the inner sides and circumferences are partially brought into contact with the protrusion 290A for support and fixing portion 290F, and a wall (also referred to as rib) configured to surround across the entire circumference of the coils thereof is not formed, this is because the inner sides and circumferences of the sub heating coils SC1 to SC4 are opened as much as possible, thereby providing a path of the air for cooling.

The coil support member 290 is, as illustrated in Fig. 22 and Fig. 27, placed on the top face of the upper case 42A of the cooling duct 42, cooled by cooling air blown up from the nozzle holes 42C of the cooling duct 42, and the main heating coil MC and sub heating coils SC1 to SC4 positioned above thereof are cooled so as to prevent from abnormal high temperature due to generated heat. Therefore, with the coil support member 290, substantially the entirety thereof has a lattice shape by which ventilation characteristic may be secured (see Fig. 22), the magnetic flux leakage prevention material 73 disposed in a radiation shape from the center point X1 partially traverses the path for the air thereof. The bottoms of the sub heating coils SC1 to SC4 are in an exposed state except for portions such as the facing portions of the arms 290B and support tongue portions 290E, and accordingly, radiation effects are improved due to presence of the exposed portion.

The magnetic flux leakage prevention material 73 is attached to the lower face of the coil support member 290 so as to become a radiation shape from the center point X1. As illustrated in Fig. 21, when the adjacent sub heating coils SC1 to SC4 are simultaneously energized, in the case where the high-frequency currents IB flowing thereinto has the same direction, the space 273 is provided for preventing the edge portions of the adjacent sub heating coils SC1 to SC4 from magnetic interference. Specifically, for example, after sending a driving current to the annular main heating coil MC in the counter clockwise direction as viewed from the top face, when sending a driving current to the sub heating circuits SC1 to SC4 in the clockwise direction, as illustrated in Fig. 20, the direction of the high-frequency current IA flowing into the main heating coil MC agrees with the direction of the current IB flowing into a side close to the main heating coil MC of the sub heating coils SC1 to SC4, that is, an adjacent side, but of the sub heating coils SC1 to SC4, the directions of the high-frequency currents IB become mutually opposite directions between terminals of adjacent coils, and accordingly, in order to reduce magnetic interference due to this, this contraption has been made.

Note that, an arrangement may be made in which, for example, during a period of time during which sending a driving current the main heating coil MC in the clockwise direction as viewed from the top face, the directions of the currents are alternately switched to the opposite directions at a predetermined time interval such that a driving current is sent to the sub heating coils SC1 to SC4 in the counterclockwise direction, and then, a driving current is sent thereto in the clockwise direction.

It is desirable to set the dimensions of the space 273 between mutual edge portions of the sub heating coils SC1 to SC4 greater than the space 271. It is desirable that the transverse dimension on a straight line passing through the center point X1 of the space (cavity) 272 in the sub heating coils SC1 to SC4, that is, the transverse dimension illustrated with an arrow in Fig. 21 is set greater than the space 271. This is because the directions of the currents flowing into the sub heating coils SC1 to SC4 mutually become the opposite directions, and accordingly, magnetic interference caused due to this has to be reduced. As compared to this, the space 271 is subjected to magnetic coupling and cooperative heating, and accordingly, the interval may be narrow. Note that, with this Embodiment 2, a size ratio between the space 273 and the space 271 is set to 3:1. Accordingly, in the case where the space 271 is 5 mm as described above, the space 273 is 15 mm.

### (Individual Light-emitting Unit)

In Fig. 19, Fig. 21, Fig. 22, and Fig. 27, the individual light-emitting units 276 are four light-emitting members installed so as to be scattered on the same concentric circle as the main heating coil MC. The individual light-emitting units 276 include a light source (not illustrated in the drawing) made up of an electric bulb, organic EL, LED (Light-emitting Diode) or the like, and a light guiding member configured to guide light input from this light source, and are driven by a driving circuit 278 illustrated in Fig. 23.

As the light guiding member, a synthetic resin such as an acrylic resin, polycarbonate, polyamide, or polyimide, or a transparent material such as glass or the like may be employed. The upper edge face of the light guiding member is, as illustrated in Fig. 27, directed toward the lower face of the top plate 21, and light from the light source is radiated from the upper edge face of the light guiding member illustrated with a dashed-dotted line in Fig. 27. Note that such a light-emitting member configured to emit light in a linear manner upwards has been proposed in Japanese Patent No. 3941812, for example. According to light emission or lighting of the individual light-emitting units 276, the user may be informed regarding whether or not the sub heating coils SC1 to SC4 are performing induction heating operation.

### (Wide-area Light-emitting Unit)

Again, in Fig. 19, Fig. 21, Fig. 22, and Fig. 27, a wide-area light-emitting unit 277 surround the outer side of the individual light-emitting units 276 sandwiching predetermined space 275 so as to exist on the same concentric circle as the individual light-emitting units 276, and are toric light-emitting members of which the maximum outer diameter is DC. The wide-area light-emitting unit 277 includes, in the same way as with the individual light-emitting units 276, a light source (not illustrated in the drawing), and a light guiding member configured to guide light input from this light source, and are driven by the driving circuit 278 illustrated in Fig. 23.

The upper edge face of the light guiding member of this wide-area light-emitting unit 277 is, as illustrated in Fig. 27, directed toward the lower face of the top plate 21, and light from the light source is radiated from the upper edge face of the light guiding member illustrated with a dashed-dotted line in Fig. 27, and accordingly, according to light emission or lighting of the wide-area light-emitting unit 277, the user may distinguish the group outer edge portion between the sub heating coils SC1 to SC4 and the main heating coil MC.

The position of a guide mark 6LM which is a circle displayed on the top plate 21 does not agree with the position of the individual light-emitting units 276.

The position of the guide mark 6LM substantially corresponds to the outer diameter DA of the main heating coil MC, but the individual light-emitting units 276 have a size so as to surround the outer side of the sub heating coils SC1 to SC4 with a certain allowance dimension (e.g., 20 mm).

The position of a circular cooperative heated area mark EM displayed on the top plate 21 generally agrees with the position of the wide-area light-emitting unit 277, but the cooperative heated area mark EM is usually formed on the top face of the top plate 21 by printing or the like, the upper edge face of the wide-area light-emitting unit 277 is set by taking a film (a material which hardly transmits visible light is employed) of printing or coating into consideration so as to adjacently face an outer side position by around several millimeters thereof. Note that, in the case where translucency of the cooperative heated area mark EM is secured, these may completely agree. For example, in the case where the outer diameter of the heating coil 6RC of the right-side induction heat portion 6R is 240 mm, the outer diameter of an antimagnetic ring 291 becomes around 244 mm, and the position of the cooperative heated area mark EM becomes above a circle of which the diameter is around 280 mm to 290 mm.

### (Allocation of Infrared Sensor)

The infrared sensor 31 L comprises five of the 31L1 to 31 L5 as illustrated in Fig. 19, of which the a heat-sensitive portion of the infrared sensor 31L1 is installed in the space 270. This temperature sensor 31L1 is for detecting the temperature of the heating target N such as a pan to be disposed above the main heating coil MC. With the outer side of this main heating coil MC, the heat-sensitive portions of the infrared sensors 31 L2 to 31 L5 for the sub heating coils SC1 to SC4 are disposed respectively, and these infrared sensors are all installed in the protrusion 290A for support having a protruding shape formed on the coil support member 290.

Note that, in order to exhibit the function of the heating target placement determining unit 280, that is, function for determining whether the heating target N is placed, the infrared sensors 31 L2 to 31 L5 may not be used, and there is a photo detector (photosensor) as alternative means. This is because the photo detector may distinguish whether or not light in nature, such as light of indoor lighting, sunlight, or the like arrive from above the top plate 21. In the case where the heating target N is not disposed, the photo detector below the heating target N detects disturbance light such as indoor lighting or the like, and accordingly, may take this as determination information to the effect that an object such as a pan or the like is not placed thereupon.

Temperature data from the temperature sensors 31R, 31L, 241, 242, 244, and 245 is transmitted to the energizing control circuit 200 via the temperature detecting circuit 240, but temperature detection data of the infrared sensors (indicates all of five of the 31 L1 to 31 L5) regarding the heating coils 6RC and 6LC is input to the heating target placement determining unit 280.

The metallic antimagnetic ring 291 (see Fig. 27) is a ring-shaped object disposed attached to the outermost side of the coil support member 290. This antimagnetic ring 291 is installed in each of the heating coils 6RC, 6LC, and 6MC of the three induction heat sources 6R, 6M, and 6L, and has a diameter 4 to 5 mm greater than the outer diameter of each of the heating coils 6RC, 6LC, and 6MC. Width when at the time of the antimagnetic ring 291 being viewed from above is around 1 mm. That is to say, this antimagnetic ring 291 is separated around 1 mm to the outer side from the outermost circumferential edge of the heating coils 6RC, 6LC, and 6MC. For example, in Fig. 27, in the case where the maximum outer diameter DB of the left-side heating coil 6LC is around 200 mm, the inner diameter of the antimagnetic ring 291 surrounding this is 202 mm, and the outer diameter is around 204 mm.

A speaker 316 illustrated in Fig. 22 is driven by a signal from an audio synthesizer 315. This audio synthesizer 315 informs various type of information to be displayed on the integrated display means 100 using audio, and may notify of the heating force, the name of the heat source performing the heating operation (e.g., left IH heat source 6L), elapsed time since start of cooking, remaining time set by the timer, various types of detected temperature, reference information in various types of cooking, and information to the effect that abnormal operation has been detected and improper operations have been performed at the time of use, to be displayed on a guide area (100GD), which also includes information by which various types of cooking may be performed in a preferable state of heated position (including the position of the heating target N) as much as possible. Later-described information to the effect that which of the main heating coil MC and sub heating coils SC is actually executing a heating operation is also included.

### (Operation of Heating Cooker)

Next, overview of operation of the heating cooker made up of the above-mentioned configuration will be described with Fig. 23 as the center.

A basic operation program from power-on to start of cooking preparation is stored in the storage unit 203 (see Fig. 23) including the energizing control circuit 200.

The user first connects a power plug to the commercial power source of 200 V, and presses an operation button 63A (see Fig. 12) of a main power switch 63 to turn on power.

Thus, predetermined low power supply voltage is supplied to the energizing control circuit 200 via a constant-voltage circuit (not illustrated in the drawing), and the energizing control circuit 200 is activated. Self-diagnosis is performed by a control program of the energizing control circuit 200 itself, and at the time of normal operation, the motor driving circuit 33 for driving the driving motor 300 of the blowing device 30 is preliminarily driven. Each of the left IH heat source 6L, right IH heat source 6R, and the driving circuit 215 of the liquid crystal display unit of the integrated display means 100 is also preliminarily activated.

The temperature detecting circuit 240 in Fig. 23 reads temperature data detected by each of the temperature detecting elements (temperature sensors) 31 R and 31 L (unless otherwise stated, indicates all of five of the 31L1 to 31 L5 in the following description), and temperature detecting elements 241, 242, 244, and 245, and transmits the data thereof to the energizing control circuit 200.

Thus, data such as circuit current, voltage, temperature of principal components is collected at the energizing control circuit 200, and accordingly, the energizing control circuit 200 performs abnormal heating determination as abnormality monitor control before cooking. For example, in the case where temperature around the liquid crystal board of the integrated display means 100 is higher than heat-resistant temperature (e.g., 70 degrees centigrade), the energizing control circuit 200 determines this as abnormal high temperature.

The current detecting sensor 227 in Fig. 23 detects current flowing into a resonant circuit 225 made up of a parallel circuit of the right-side heating coil 6RC, and resonant capacitor 224, and this detected output is supplied to the input unit 201 of the energizing control circuit 200. The energizing control circuit 200 compares the obtained detected current from the current detecting sensor, and a normal current value serving as determination reference data stored in the storage unit 203, and in the case where insufficient current or eddy current has been detected, the energizing control circuit 200 determines this as abnormality due to a certain accident or conduction failure.

In the case where there has been no abnormal determination by a self-diagnosis step, this results in "completion of cooking start preparation". However, in the case where abnormal determination has been made, predetermined processing at the time of abnormality is performed, and cooking is prevented from being started (detection of abnormality is also performed at the left-side heating coil 6LC in the same way).

In the case where there has been no abnormality determination, display to the effect that heating operation is available is output on the heat source corresponding areas 100L1, 100L2, 100M1, 100M2, 100R1, 100R2, and 100G of the integrated display means 100, a desired heat source is selected, and in the case of induction heating, there is displayed guidance to prompt the user to put the heating target N such as a pan or the like above the guide marks 6LM, 6RM, and 7M of a desired heat source drawn in the top plate 21 (the audio synthesizer 315 prompts the user to operate simultaneously with the integrated display means 100). At the same time, all of the individual light-emitting unit 276 and wide-area light-emitting unit 277 are instructed by the energizing control circuit 200 to perform emission of light or lighting using a predetermined color (e.g., yellow, hereinafter referred to as "mode 1").

Next, as described above, the overall of principal control operation from completion of abnormality determination until completion of cooking preparation will be described with reference to Fig. 32.

First, in the case where after turning on the main power, the user has instructed heating preparation operation at an operating unit (not illustrated in the drawing), estimation is performed by the heating target placement determining unit 280 whether or not the heating target N is placed above each coil of the main heating coil MC and sub heating coils SC1 to SC4, or whether or not the bottom area of the heating target N is greater than a predetermined value, this estimation result is informed to the energizing control circuit 200 serving as a controller, and determination is made whether to perform heating processing suitable for a large-diameter pan, or whether to perform heating processing suitable for an ordinary pan (step MS11).

In the case where the heating target N is a conforming pan but an ordinary sided pan or small pan, nonconforming to heating or the like, processing different from the processing of a large diameter pan is performed.

The energizing control circuit 200 displays display for prompting the user to select a desired cooking menu on the liquid crystal display screen of the integrated display means 100 installed near the operating unit E (MS12).

In the case where the user has selected or input a cooking menu, heating power, cooking time, or the like using the operating unit (MS13), the induction heating operation is started in full scale (MS14).

As cooking menus to be displayed on the display means G, as with Embodiment 1, there are seven menus of the "high-speed heating", "deep-fry", "water heater", "preheating", "rice-cooking", "boiling", and "water heater + hot-keep".

In the case where the user has selected optional one out of these seven cooking menus, the control mode corresponding to the selected menu is automatically selected by a built-in program of the energizing control circuit 200, and whether to be energized, energizing quantity (heating power), energizing time, and so forth of each of the main heating coil MC and sub heating coils SC1 to SC4 are set. Display for prompting the user to set optional heating power or energizing time or the like is performed on the display unit depending on cooking menus (MS15).

With that, preparation for proceeding to a cooking process with a large-diameter pan as an object has been completed, after selection of a cooking menu, induction heating operation is immediately started. Note that, in the case of an "ordinary pan" and a "small pan" as well, basically the same processing as with the steps MS12 to MS15 is performed. In the case of an "ordinary pan" and a "small pan" as well, the seven cooking menus such as Fig. 28 are displayed on the integrated display means 100 as cooking menus, but in the case of an "ordinary pan" and a "small pan", with this Embodiment 2, the heating target N is heated by the main heating coil MC alone of the center portion, and accordingly, control contents (heating power, energizing pattern, etc.) greatly differ. All of or a part of the sub heating coils SC1 to SC4 cannot (individually) be driven in a heating operation, and accordingly, there is no heating pattern using the sub heating coils SC1 to SC4. That is to say, convection promotion control (using the sub heating coils SC1 to SC4) is not implemented.

### (Cooking Process)

Next, with regard to a case of having proceeded to a cooking process, description will be made regarding a case of using the right-side induction heat source 6R with an "ordinary pan or small pan", as an example. Note that "small pan" means, with this Embodiment 2, a pan of which the diameter is less than 10 cm.

As a method using the right-side induction heat source 6R, there are two cased of a case of using the front-face operating unit 60, and a case of using the top-face operating unit 61.

### (Start of Cooking at Front-face Operating Unit)

First, a case of using the front-face operating unit 60 will be described.

The user first turns right or left the right operating dial 64R of the front-face operating unit 60 (heating power is set according to the turned amount).

Though not illustrated in the drawing, three independent timer dials are provided at the lower portion of the front face of the front-face operating frame 62 of the front-face operating unit 60, and accordingly, the user sets the timer of the right-side induction heat source 6R thereof to a predetermined time. Thus, such an operation signal is input to the energizing control circuit 200, and cooking conditions such as heating power level, heating time, and so forth are set by the energizing control circuit 200.

Next, the energizing control circuit 200 drives the driving circuit 228 to drive the right-side heat source circuit 210R (see Fig. 23). The integrated display means 100 are driven by the driving circuit 215, and accordingly, the cooking conditions such as cooking time and so forth are displayed on the display area thereof. The driving circuit 228 applies driving voltage to the gate of the IGBT 225, and accordingly, high-frequency current flows into the right IH heating coil 6RC. However, high heating power energizing heating is not performed from the beginning, suitability detection of the heating target N such as a pan or the like is performed as follows.

The current detecting sensor 227 detects current flowing into a resonant circuit made up of a parallel circuit of the right IH heating coil 6RC and resonant capacitor 224, and detected output is supplied to the input unit of the energizing control circuit 200. In the case where insufficient current or eddy current as compared to a normal current value has been detected due to a certain accident or operation failure, the energizing control circuit 200 determines this as abnormality. The energizing control circuit 200 has a function for determining whether or not the size of a pan to be used (heating target N) is proper in addition to a function for abnormal type determination as described above.

Specifically, an arrangement is made in which predetermined electric power (e.g., 1000 W) is sent to the resonant circuit 225 for the first several seconds instead of heating power (electric power) set by the user, and an input current value at this time is detected at the current detecting sensor 227.

Specifically, when the energizing control circuit 200 drives the IGBT 225 serving as switching means by outputting a driving signal with the same conductive ratio using predetermined electric power, in the case where a pan of which the diameter is smaller than the area of the right-side heating coil 6RC is placed above the top plate 21, it has already been known that current flowing into the portion of the current detecting sensor 227 decreases as compared to current flowing into the portion of the current detecting sensor 227 in a case where a pan (heating target N) of which the diameter is greater than the area of the heating coil 220 (6RC) is placed above the top plate 21.

Accordingly, the value of current flowing into the portion of the current detecting sensor 227 in a case where an excessive small pan (heating target N) is placed is prepared as determination reference data beforehand from experimental results or the like. Thus, when excessively small current is detected at the current detecting sensor 227, it may be estimated by the energizing control circuit 200 side that this is an abnormal use mode, and accordingly, the energizing control circuit 200 proceeds to a processing route for abnormal processing.

Note that the energizing control circuit 200 changes the conductive ratio for the switching means 225 by itself, for example, even with heating power set by the user, in the case where a normal heating state may be kept and secured by decreasing the conductive ratio to an allowable range, electric power adaptive processing is automatically executed, and in the case where a small current value has been detected, the processing does not always proceed to abnormal processing without conditions.

In a state in which determination of a pan (heating target N) is performed as describe above, first, characters of "under pan suitability determination" are displayed on the display area 100R2 of the right-side induction heat source 6R. After several seconds, according to the determination result of the abnormal current detection monitoring processing, in the case of a too small pan (heating target N), there are displayed reminder characters such as "The pan to be used is too small.", "Please use a more large pan (diameter is 10 cm or longer)."

In the case where this pan suitability determination result has been output, with the display areas 100R1 and 100R2 of the right-side induction heat source 6R, the areas thereof are enlarged several times from the state in Fig. 27, and it is displayed on the display areas thereof that the pan (heating target N) is not proper. In the case where both of the left-side induction heat source 6L and central induction heat source 6M have not been used, for example, as illustrated in Fig. 28, the display areas 100R1 and 100R2 of the right-side induction heat source 6R are enlarged up to a size enough for including the display areas 100L1, 100L2, 100M1, and 100M2 of the left-side induction heat source 6L and central induction heat source 6M. Note that Fig. 28 is a case where the right-side induction heat source 6R and central induction heat source 6M are not used, and the left-side induction heat source 6L alone is used.

Thereafter, in the case where the user has not performed any procedure such as replacement of the pan (heating target N), after a certain period of time from point-in-time when displaying that the pan (heating target N) is too small on the display area E, heating operation by the right IH heat source 6R is automatically stopped without stopping the energizing control circuit 200.

In the case where the user replaces the pan (heating target N) with a large one, and performs operations for start of cooking again, the user may resume the cooking again. As described above, a small pan of which the diameter is shorter than 10 cm is detected as a nonconforming pan by the pan suitability determination processing, and use thereof is prohibited.

After performing pan (heating target N) determination operation as described above, in the case where it has been detected that the pan is a conforming pan (heating target N), the energizing control circuit 200 automatically executes suitable energizing control processing so that the right IH heat source 6R exhibits the originally set heating power. Thus, the temperature of the heating target N such as a pan or the like is increased by high-frequency magnetic flux from the right-side heating coil 6RC, the energizing control circuit 200 proceeds to electromagnetic induction heating cooking operation (cooking mode).

DC current obtained by the rectifier bridge circuit 221 and smoothing capacitor 223 is input to the collector of the IGBT 225 which is a switching element. On/off control of the IGBT 225 is performed by the driving signal from the driving circuit 228 being input to the based of the IGBT 225. On/off control of the IGBT 225 and the resonant capacitor 224 are combined to cause the right-side heating coil 6RC to generate high-frequency current, and electromagnetic induction action given from this high-frequency current generates eddy current at the heating target N such as a pan or the like placed above the top plate 21 upward of the right-side heating coil 6RC. Thus, the eddy current generated at the heating target N becomes Joule's heat, the heating target N generates heat, thereby enabling the heating target to be used for cooking.

The driving circuit 228 includes an oscillator circuit, and a driving signal that this oscillator circuit generates is supplied to the base of the IGBT 225, thereby controlling on/off of the IGBT 225. The conductive ratio, conductive timing, current frequency, and so forth of the right-side heating coil 6RC are adjusted by adjusting the oscillating frequency and oscillating timing of the oscillator circuit of the driving circuit 228, thereby enabling heating power adjustment of the right-side heating coil 6RC to be performed. Note that, in the case of having employed a full bridge circuit as the driving circuit of the main heating coil MC, the driving circuits 228A and 228B illustrated in Fig. 23 serve the same role as with the driving circuit 228.

Note that, in the case where an energizing stop command for the right-side induction heat source 6R has been issued, energizing of the heat source 6R thereof is stopped, but the blowing device 30 continues operation for two to five minutes after stopping energizing. Thus, there may be prevented occurrence of an overshoot problem in which the heated air is continuously pooled around the right-side heating coil 6RC of the right-side induction heat source 6R immediately after stopping sending of the air from the blowing device 30, and the temperature rapidly rises. Adverse effect for temperature rise of the integrated display means 100 may be prevented. The energizing control circuit 200 determines this operation duration time from a calculation expression or numeric value table determined beforehand corresponding to conditions such as situations of temperature rise, indoor temperature, magnitude of operation heating power of the heat source until stop of energizing.

However, in the case where failure of the cooling fan itself has been found (e.g., in the case where only the temperature of the cooling fins 43A and 43B rises) such that abnormal current from the blowing device 30 has been detected, energizing for the blowing device 30 is also stopped at the same time.

The liquid crystal display board of the integrated display means 100 is heated by reflected heat from the bottom of the heating target N or radiant heat from the top plate 21, heated at the time of cooking of the left and right induction heat source 6L and 6R. In the case where a used pan (heating target N) for high-temperature tempura has been put above the central portion of the top plate 21 without change as well, the liquid crystal display board receives heat from the high-temperature (near 200 degrees centigrade) pan (heating target N).

Therefore, with this Embodiment 1, in order to suppress temperature rise of the integrated display means 100, the integrated display means 100 is cooled from both sides by the blowing device 30.

In this manner, in the case of the blowing device 30 having been driven under a normal operation environment, the air outside the main unit 1 is, as illustrated in Fig. 15 and Fig. 17, suctioned to the inside of the fan case 37 from the air inlet 37B of the suction cylinder 37A of the fan case 37. The suctioned air is discharge forward in the horizontal direction from the exhaust port (outlet) 37C by the wing portions 30F which rotate at high speed within the fan case 37.

The component case 34 connected to the fan case 37 in an airtight state is in the forward position of the exhaust port 37C, and the air inlet is connected to the exhaust port 37C thereof in an airtight state, and accordingly, the air from the blowing device 30 is sent to the inside of the component case 34 from the exhaust port 37C so as to increase the internal pressure (static pressure) thereof. Part of the sent cooling air is discharged from the first exhaust port 34A on a side close to the exhaust port 37C of the top face portion of the component case 34.

The temperature of this discharged air has not cooled high-temperature heat-generating members, exothermic electric components, and so forth on the way, and accordingly, this temperature is almost the same as the temperature of the air output immediately after the exhaust port 37C, and maintains a state of fresh air.

The cooling air sent to the ventilation space 42F of the cooling duct from the first exhaust port 34A blows out upward from the nozzle holes 42C as illustrated in an arrow Y3 in Fig. 15 and Fig. 17, and collides with the lower face of the right-side heating coil 6RC directly above thereof to effectively cool the coil thereof. Note that, in the case where the shape of the right-side heating coil 6RC has a gap which partially penetrates the air for air cooling, the cooling air from the first exhaust port 34A also flows into the gap thereof so as to penetrate this to cool the coil thereof.

On the other hand, the cooling air sent with pressure to the inside of the component case 34 from the blowing device 30 is not directed to the surface of the circuit board 41, and does not flow near the surface. The cooling air passes through between a great number of heat exchange fin elements with the portion of the radiating fins 43A and 43B serving as structures protruding on the surface (one side face) of the circuit board 41 as the center, and accordingly the radiating fins 43A and 43B are principally cooled.

Further, of the cooling air pushed from the exhaust port 37C (arrow Y2 in Fig. 15), the mainstream which is a portion with the highest speed flows forward in a straight line from the exhaust port 37C as illustrated in arrow Y4, and is ejected from the second exhaust port 34B in the most downstream position of the flow of the cooling air in the component case 34. This second exhaust port 34B has a large opening area greater than that of the first exhaust port 34A, and accordingly, a major portion of the cooling air pushed in the component case 34 from the exhaust port 37C is ejected from this second exhaust port 34B. The cooling air principally cools, as illustrated with the arrow Y4, the radiating fins 43A and 43B before being ejected from the second exhaust port 34B to the outside of the component case 34, and accordingly, heat-generating components such as switching elements for electric control of the two inverter circuits 210R and 210M attached to the radiating fins 43A and 43B, and so forth are cooled.

The ejected cooling air is then guided into the ventilation space 42G and 42H of the cooling duct 42, a majority of the cooling air is, as illustrated with arrows Y4 and Y5 in Fig. 17, ejected from a great number of nozzle holes 42C formed on the top face of the upper case 42A, collides with the lower face of the right-side heating coil 6RC positioned directly above thereof, and effectively cools the coil thereof.

Part of the cooling air guided into the ventilation space 42H of the cooling duct 42 is guided into the component case 46 in which the light-emitting element (LED) of each of the right heating power display lamp 101 R and left heating power display lamp 101 L is stored, which display various electric or electronic components 56 and heating power at the time of induction heating cooking using light. Specifically, the cooling air of the blowing device 30 enters the ventilation space 42H of the cooling duct 42 from the second exhaust port 34B of the component case 34, passes through the ventilation port 42K of the cooling duct 42 formed corresponding to the ventilation space 42H from here, and enters the ventilation ports 46R and 46L (see Fig. 15) of the lower duct 46A positioned directly above the ventilation port 42K in an airtight manner.

Thus, first, the liquid crystal display screens 45R and 45L are cooled from below by the cooling air input to the front component case 46, and also the cooling air then flows into the front component case 46, and finally discharged from the notch 46C to the upper component room 10, according to such a process, the built-in components are sequentially cooled, and accordingly, the liquid crystal display screens 45R and 45L, integrated display means 100, attachment board 56 on which various electric and electronic components are mounted, and light-emitting elements for the right heating power display lamp 101 R and for the display left heating power display lamp 101 L which display heating power at the time of induction heating cooking using light, are sequentially cooled by the cooling air.

In particular, the cooling air guided into the front component case 46 is not the air which cooled the left and right heating coils 6LC and 6RC which become high temperature at the time of induction heating operation, and accordingly, temperature thereof is low, the liquid crystal display screens 45R and 45L and integrated display means 100 and so forth are continuously cooled so as to effectively suppress temperature rise even though the air amount of the cooling air is little.

The cooling air ejected from a large number of nozzle holes 42C of the cooling duct 42 flows, as illustrated in Fig. 12, Fig. 15, and Fig. 16, toward the backward of the upper component room 10, such as arrows Y5 and Y6. The flow of this cooling air also joins the cooling air ejected from the notch 46C to the upper component room 10 also, and flows into the rear exhaust room 12 externally opened at the main unit A, and accordingly, the air is finally discharged from the rear exhaust room 12 such as arrow Y9 (see Fig. 12).

### (Start of Cooking at Top-face Operating Unit)

Next, description will be made regarding a case of using the top-face operating unit 61 (see Fig. 13).

The energizing control circuit 200 has already been activated, and the driving circuit 215 (see Fig. 23) of the liquid crystal display unit of the integrated display means 100 has already preliminarily been activated, and accordingly, input keys for selecting all of the heat sources are displayed on the liquid crystal display unit of the integrated display means 100. Therefore, upon an input key for selecting the right-side induction heat source 6R out thereof (one of 143 to 145 illustrated in Fig. 28 becomes the relevant key) being pressed, the area of the corresponding area 100R (two of 100R1 for heating power, and 100R2 for time) of the right-side induction heat source 6R of the liquid crystal display unit is automatically enlarged, further, in this state, the input function of each of the input keys 142 to 145 is switched and displayed for each scene, and accordingly, upon the displayed input keys being consecutively operated, cooking conditions such as type of cooking (also referred to as cooking menu, e.g., water heat, boiling, hot-keep, etc.), heating power level, heating time, and so forth are set.

Next, in a state where desired cooking conditions have been set, as illustrated in Fig. 28, characters of "determination" are displayed for the input key 146, and accordingly, when touching this, input for the cooking conditions are determined. Note that Fig. 27 is a case where the right-side induction heat source 6R has been selected.

Next, as described above, the energizing control circuit 200 implements the pan suitability determination processing, and in the case where it is determined that the pan (heating target N) is a conforming pan, the energizing control circuit 200 automatically executes the suitable energizing control processing so that the right-side induction heat source 6R exhibits predetermined set heating power set by the user. Thus, the temperature of the pan which is the heating target N becomes high temperature by high-frequency magnetic flux from the right-side heating coil 6RC, and the stage proceeds to electromagnetic induction heating cooking operation (cooking process).

### (One-touch Setting Cooking)

With the operating unit 70 for right heating power, there is provided a one-touch setting key unit 90 of each heating power by which the heating power of the right-side induction heat source 6R may simply be set only by the user pressing this once, which includes three one-touch keys of a low heating power key 91, a middle heating power key 92, and a high heating power key 93, and accordingly, upon the low heating power key 91, middle heating power key 92, high heating power key 93, or a key 94 for 3 kW being pressed without passing through at least one menu screen according to input key operations of the integrated display means 100, heating power may be input one-time operation thereof. Note that cooking using the left IH heat source 6L may be started by the same operations as described above.

### (Start of Cooking at Grille Heating Room)

Next, description will be made regarding a case where the radiation type electric heat sources 22 and 23 (see Fig. 16) of the grille heating room 9 has been energized. This cooking may also be performed during cooking of the right-side induction heat source 6R, left-side induction heat source 6L, or central induction heat source 6M, but a restriction program in which an interlock function has been embedded so as to prevent use exceeding predetermined rated maximum electric power amount from being performed at the same time is stored in the energizing control circuit 200, thereby preventing rated electric power of the entire cooker from exceeding its restriction.

As a method for starting various types of cooking within the grille heating room 9, there are two of a method by using an input key to be displayed on the liquid crystal display on the liquid crystal display unit of the integrated display means 100 out of the top-face operating unit 61, and a method by pressing operating button 95 for the radiation type electric heat sources 22 and 23 (see Fig. 28).

With any of these methods, various types of cooking may be performed within the grille heating room 9 by simultaneously or individually energizing the radiation type electric heat sources 22 and 23. The energizing control circuit 200 receives information from the temperature sensor 242 and temperature control circuit 240, controls energizing for the radiation type electric heat sources 22 and 23 so that the internal atmosphere temperature of the grille room 9 becomes target temperature set beforehand at the energizing control circuit 200, informs that effect at a stage where predetermined time has elapsed from start of cooking (there may be display by the integrated display means 100, and informing by the audio synthesizer 315), and the cooking is ended.

Accompanied with cooking by the radiation type electric heat sources 22 and 23, high-temperature heated air occurs within the grille heating room 9. According to this, the internal pressure of the grille heating room 9 naturally rises, and naturally rises within the exhaust duct 14 from the rear exhaust port 9E. During a process thereof, components under exhaust air is decomposed by the catalyst 121 for deodorization which has high temperature by being energized to the catalyst electric heater 121 H by the heater driving circuit 214 for driving.

On the other hand, the axial flow type blowing device 106 for auxiliary exhaust air is provided in the middle of the exhaust dust 14, and accordingly, for heated air which rises in the exhaust dust 14, as illustrated with arrow Y7 (see Fig. 16), the internal air of the main unit A is taken to the exhaust duct 14 by operating the blowing device 106 thereof, and accordingly, the high-temperature air of the grille heating room 9 is induced by the fresh air thereof, and is discharged from the upper edge opening 14A of the exhaust duct 14 while the temperature drops, as illustrated with arrow Y8.

In this manner, according to the exhaust stream from the upper edge opening 14A (see Fig. 16) of the exhaust duct 14, the air within the rear exhaust room 12 adjacent to the upper edge opening 14A is also induced to be externally discharged. That is to say, the air in the gap 26 between the grille heating room 9 and horizontal partition plate 25 within the main unit, and the air within the upper component room 10 are also discharged via the rear exhaust room 12 together.

Next, operation in the case of performing cooking using the left-side induction heat source 6L will be described. Note that the left-side induction heat source 6R also proceeds, as with the right-side induction heat source 6R, the cooking mode after the abnormal monitoring processing before cooking is ended, and also, as a method using the left-side induction heat source 6L, there are two of a case of using the front-face operating unit 60 (see Fig. 12), and a case of using the top-face operating unit 61 (see Fig. 13), but with the following description, in the case where a large-diameter pan has been employed as the heating target N, description will be made from a stage where energizing for the left-side heating coil 6LC has been started, and cooking has been started.

In the case of employing an ellipse or rectangular pan (heating target N) of which the bottom diameter is infinitely longer than the maximum outer diameter DA (see Fig. 19) of the main heating coil MC, the heating cooker according to Embodiment 2 has an advantage in which the ellipse-shaped heating target N may be not only heated by the main heating coil MC but also cooperatively heated by the sub heating coils SC1 to SC4.

For example, there is assumed a case of an ellipse-shaped pan (heating target N) which straddles above both of the main heating coil MC and one of the sub heating coils SC positioned on the right side thereof.

Upon such an ellipse-shaped pan (heating target N) being placed to start cooking, the temperature of the ellipse-shaped pan (heating target N) rises, but with both of the infrared sensor 31L1 (see Fig. 19) of the main heating coil MC, and the infrared sensor 31 L2 of the sub heating coil SC1, there are few inputs of disturbance light (light of interior illumination, sunlight, etc.) as compared to the amount of received light of the other infrared sensors 31 L3, 31 L4, and 31 L5, and a phenomenon where there is tendency of temperature rise is illustrated, and accordingly, based on such information, the heating target placement determining unit 280 performs determination that there is the ellipse-shaped pan (heating target N).

Basic intelligence to be used for determining whether or not the same heating target N is placed above is also input to the heating target placement determining unit 280 (see Fig. 23 and Fig. 26) by the current sensor 227 of the main heating coil MC and the current sensors 267A to 267D (see Fig. 23) of the sub heating coils SC1 to SC4. The heating target placement determining unit 280 detects change in impedance of the main heating coil MC and sub heating coils SC by detecting change in current, drives the inverter circuit MIV of the main heating coil MC, and the inverter circuits SIV1 to SIV4 of the sub heating coils SC1 to SC4 where the ellipse-shaped pan (heating target N) is placed, sends high-frequency current to some (at least one) where the ellipse-shaped pan (heating target N) is placed of the four sub heating coils SC1 to SC4, and the energizing control circuit 200 issues a command signal to the other sub heating coils where the ellipse-shaped pan (heating target N) is not placed so as to suppress or stop high-frequency current.

For example, when the heating target placement determining unit 280 determines that the same ellipse-shaped pan (heating target N) is placed above the main heating coil MC and the single sub heating coil SC1, the energizing control circuit 200 operates the main heating coil MC and the sub heating coil SC1 alone in an interlocking manner, and supplies high-frequency electric power to these two heating coils using the inverter circuits MIV and SIV1 according to a predetermined heating power ratio respectively (this heating power distribution will be described later in detail).

The "heating power ratio" mentioned here means, for example, in the case where the user has started cooking so as to perform cooking with heating power of 3000 W using the left IH heat source 6L, when the energizing control circuit 200 has distributed 2400 W to the main heating coil MC, and 600 W to the sub heating coil SC1, a ratio between 2.4 kW and 600 W thereof. In the case of this example, the heating power ratio is 4:1. The individual light-emitting units 276 (see Fig. 19 and Fig. 27) alone in an outer side of the sub heating coil SC1 changes from an yellow light-emitting state (mode 1) to a red light-emitting state (hereinafter, referred to as "mode 2"), the driving circuit 278 (see Fig. 23) drives the individual light-emitting units 276, predetermined light sources (red lamp, LED, etc.) in the individual light-emitting units 276 emit light and are lighted, and a light source for yellow which has emitted light and have been lighted so far is turned off. Accordingly, only the sub heating coil SC1 under execution is displayed so that the user may visually recognize this as a red light band from above the top plate 21. The individual light-emitting units 276 corresponding to the other sub heating coils stop emission of light.

An arrangement is made in which induction heating cooking may not be performed by driving this sub heating coil SC1 alone, and also induction heating cooking may not be performed by each of the other three sub heating coils SC2, SC3, and SC4 or by combining these. In other words, it is a feature that for the first time the main heating coil MC is driven, any one or more of the four sub heating coils SC1, SC2, SC3, and SC4 positioned therearound are simultaneously driven in a heating operation. However, in the case where the heating target N of which the outer diameter is longer enough for covering the upper portions of all of the four sub heating coils SC1, SC2, SC3, and SC4 has been placed, when implementing the convection promotion mode, control patterns where the four sub heating coils are driven as follows are prepared within the control program of the energizing control circuit 200.

In the case where the main heating coil MC is being driven in a heating operation, all or a part of the sub heating coils SC1, SC2, SC3, and SC4 are being driven in a heating operation with a predetermined order and heating power at the same time.

During a period of time during which the main heating coil MC is being driven in a heating operation, all or a part of the sub heating coils SC1, SC2, SC3, and SC4 are being driven in a heating operation with a predetermined order and heating power at the same time.

During a predetermined period of time before the heating and driving of the main heating coil MC is ended (e.g., at the end of cooking), all or a part of the sub heating coils SC1, SC2, SC3, and SC4 are being driven in a heating operation with a predetermined order and heating power at the same time.

In the case where such cooperative heating is being performed, the energizing control circuit 200 supplies high-frequency electric power to the main heating coil MC and particular sub heating coil SC1 alone using the dedicated inverter circuits MIV and SIV1 according to a predetermined heating power ratio to execute heating and driving, and accordingly, based on this information, the energizing control circuit 200 issues a driving command to the driving circuit 278 (see Fig. 23), and also, the individual light-emitting units 276 emit light so as to identify the sub heating coil SC1 under execution from the starting time point of the cooperative heating operation as described above.

As means configured to display cooperative heating, with Embodiment 2, the individual light-emitting units 276 performs display by emitting light or lighting. Specifically, at a stage where the individual light-emitting unit 276 changes from the first yellow light-emitting state (mode 1) to the red light-emitting state ("mode 2"), the user may recognize that the heating target N has entered the cooperative heating state.

Note that, instead of such a display mode, display by characters may directly be made on the liquid crystal display screen of the integrated display means 100.

Note that the wide-area light-emitting unit 277 (see Fig. 19, Fig. 21, and Fig. 27) is driven by the driving circuit 278 (see Fig. 23) from a stage where the user has pressed the operating button 63A (see Fig. 12) of the main power switch 63 to turn on power, and abnormality determination has been performed, first, emits light and is lighted in yellow, and accordingly, from a stage where the ellipse-shaped pan (heating target N) is laid above the left IH heat source 6L, the user may be guided to the placement location thereof. With a stage where high-frequency electric power for heating has been supplied to the main heating coil MC, and heating operation has been started, the energizing control circuit 200 changes the emission color of the wide-area light-emitting unit 277 (e.g., changes from yellow to red). For example, an arrangement may be made in which emission and lighting of the yellow light source (lamp, LED, etc.) in the wide-area light-emitting unit 277 is stopped, and emission and lighting of a red light source (lamp, LED, etc.) adjacent to the light source thereof instead, or emission color is changed using a multi-color light source (three-color emission LED, etc.).

When the user temporarily lifts the ellipse-shaped pan (heating target N) for a predetermined period of time t (several seconds to around ten seconds), or moves this to the left or right, the energizing control circuit 200 keeps heating operation, and also continuously displays a place suitable for placing the ellipse-shaped pan (heating target N) for the user without changing the emission or lighted state of this wide-area light-emitting unit 277. Here, in the case where the user continuously lifts the ellipse-shaped pan (heating target N) exceeding the predetermined time t, the heating target placement determining unit 280 performs determination that there is no ellipse-shaped pan (heating target N), and outputs the effect thereof to the energizing control circuit 200. The energizing control circuit 200 issues a command for temporarily decreasing or stopping the heating power of induction heating until a period of time during which the ellipse-shaped pan (heating target N) is placed, based on the establishing a difference of information from the heating target placement determining unit 280. In this case, display of a place suitable for placing the ellipse-shaped pan (heating target N) is kept for the user without change, but the emission and lighted state (emission color or the like) of the wide-area light-emitting unit 277 may be changed in accordance with the state of heating power. For example, in a state in which the heating power decreases, emission and lighting in orange is performed, or when heating power is stopped, emission and lighting in yellow is performed, by which not only display of a place suitable for being placed but also the state of heating power may be informed to the user.

Further, upon the ellipse-shaped pan (heating target N) being moved to the left for example, the heating target placement determining unit 280 determines that the same ellipse-shaped pan (heating target N) is placed above the main heating coil MC and the left-side sub heating coil SC2, the energizing control circuit 200 operates, based on the determination information from the heating target placement determining unit 280, only two of the main heating coil MC and the particular sub heating coil SC2 positioned on the left side thereof in an interlocking manner, and supplies high-frequency electric power from the inverter circuits MIV and SIV2 to these two heating coils according to a predetermined heating power ratio respectively. Next, energizing for the left-side sub heating coil SC2 is stopped, "heating power" under execution (e.g., 3 kW), and a predetermined heating power distribution (e.g., in the case of performing cooking using the left IH heat source 6L at heating power of 3000 W, the main heating coil MC is 2.4 kW and the sub heating coil SC1 is 600 W, so this is 4:1) are kept and the cooking is continued without change. This heating power of 3000 W is continuously being displayed with digits and characters by the integrated display device 100 without change.

The sub heating coil SC1 has not contributed to cooperative heating, and another sub heating coil SC2 has been added to the cooperative heating operation instead, and accordingly, high-frequency electric power is supplied to the dedicated inverter SIV2. Specifically, when detecting that the sub heating coil has been switched from the SC1 to SC2 based on the establishing a difference of information from the heating target placement determining unit 280, the energizing control circuit 200 issues a driving command to the driving circuit 278 so that the individual light-emitting units 276 may identify the sub heating coil SC2 under execution of the cooperative heating operation. Specifically, with the energizing control circuit 200, the driving circuit 278 drives the individual light-emitting units 276 so that the individual light-emitting unit 276 alone positioned on the outer side (left side in Fig. 19) of the sub heating coil SC2 emits light and is lighted. Therefore, a predetermined light source (red lamp, LED, etc.) in the individual light-emitting units 276 emits light and is lighted (in mode 2), the red light source which emits light and is lighted in a position adjacent to the sub heating coil SC2 is turned off.

Note that it is desirable in a viewpoint of heating efficiency to set the directions of high-frequency current IA flowing into the main heating coil MC and the high-frequency current IB flowing into the sub heating coils SC1 to SC4 to the same direction on adjacent sides as illustrated with a solid line arrow in Fig. 21 (Fig. 21 illustrates a case where the direction of the current is counterclockwise at the main heating coil MC, and the directions of the currents agree at the four sub heating coils SC1 to 4). This is because, with a region where the two independent coils adjoin, in the case where the currents flow in the same direction, magnetic fluxes generated by the currents thereof are enhanced by each other, magnetic flux density for interlinking the heating target N is increased, and many eddy currents are generated on the bottom of the heating target, induction heating may be performed efficiently. A loop indicated with a dashed line in Fig. 22 indicates a magnetic flux loop in the case where in the opposite directions of the directions of the high-frequency currents IA and IB illustrated in Fig. 21, these high-frequency currents are sent.

With this magnetic flux loop, an eddy current flowing in the opposite direction of the high-frequency current is generated on the bottom wall face of the heating target N, and Joule's heat is generated. When the currents mutually flow in the opposite directions in the case where the main heating coil MC and sub heating coils SC1 to SC4 are adjacently installed, AC magnetic fields to be generated in both interfere with each other in a certain region range, and consequently, a pan current (current flowing into the heating target N) to be generated at the main heating coil MC and sub heating coils SC1 to SC4 cannot be increased, and the amount of heat which increases in proportion to the square of this pan current cannot be increased. However, this conversely generates another advantage. Specifically, with adjacent regions where magnetic flux density becomes high, the magnetic flux density is suppressed low, and accordingly, there is provided an advantage in which with a wide region enough for including the main heating coil MC, and one or more sub heating coils SC1 to SC4 performing cooperative heating operations in a planar manner, a distribution of magnetic flux for interlinking the heating target N may be averaged, that is, made uniform, and a temperature distribution may be averaged in the case of performing cooking in such a wide heating region.

Accordingly, with this Embodiment 2, with a region where the heating coil MC and sub heating coils SC1 to SC4 adjoin, a method for mutually sending current in the same direction is employed in the case of a particular cooking menu, and switching operation is employed for another cooking menu in which the directions of the currents are conversely changed to the opposite directions. Note that, with a magnetic loop as illustrated in Fig. 27, the direction to be generated is determined according to the directions of the high-frequency currents IA and IB which flow through the heating coils.

Next, Fig. 32 to Fig. 35 illustrate a flowchart of cooking operation according to Embodiment 2 of the present invention.

The control program of this flowchart is stored in the storage unit 203 (see Fig. 23) within the energizing control circuit 200.

Fig. 32 has been described above, and accordingly, Fig. 33 will be described. First, in the case of starting cooking, first, the operating button of the main power switch 63 provided to the front-face operating unit 60 of the cooker main unit A illustrated in Fig. 11 is pressed to be turned on (step 1, hereinafter, step will be omitted as "ST"). Thus, power supply of predetermined voltage is supplied to the energizing control circuit 200, and the energizing control circuit 200 executes abnormality presence check of the entire cooker by itself (ST2). Self-diagnosis is performed by the control program of the energizing control circuit 200 itself, and in the case where there is no abnormality, the motor driving circuit 33 (see Fig. 22) for driving the driving motor 300 of the blowing device 30 is preliminarily driven. Each of the left IH heat source 6L, the driving circuit 215 of the liquid crystal display unit of the integrated display means 100 is also activated (ST3).

As a result of determination processing whether or not there is abnormality (ST2), in the case where no abnormality has been found, the processing proceeds to ST3. On the other hand, in the case where abnormality has been found, the processing proceeds to a predetermined abnormal processing, and finally, the energizing circuit 200 itself turns off power by itself and stops.

Upon proceeding to ST3, the energizing circuit 200 controls the driving circuit 278 to cause all of the individual light-emitting units 276 and wide-area light-emitting unit 277 to emit light and to be lighted all together (yellow light, mode 1). Note that, all of the individual light-emitting units 276 and wide-area light-emitting unit 277 may emit light and be lighted using a method in which any one of the individual light-emitting units 276 or wide-area light-emitting unit 277 previously emits light and is lighted, and next another light-emitting unit emits light and is lighted, and the number of light-emitting units gradually increases. In this manner, in a state in which all of the individual light-emitting units 276 and wide-area light-emitting unit 277 continuously emit light and are lighted (in mode 1), the energizing control circuit 200 is in a state waiting for the next command from the user. Note that, here, all of the individual light-emitting units 276 and wide-area light-emitting unit 277 are in a state consecutively emitting yellow light (ST3A).

Next, as described above, there are the left and right induction heat sources 6L and 6R (see Fig. 12), and accordingly, the user selects either one thereof using the front-face operating unit 60 or top-face operating unit 61 (ST4). When selecting the left-side induction heat source 6L, this selection result is displayed on the corresponding area 100L1 in the integrated display means 100. As illustrated in Fig. 30, the areas of the corresponding areas 100L1 and 100L2 are automatically enlarged, and the areas thereof are kept for a certain period of time (in the case where another heat source such as the right-side induction heat source 6R is not operated, the areas of the enlarged areas 100L1 and 100L2 are kept without change until completion of cooking). It is detected whether or not there is a pan (heating target N) above the selected heating coil 6LC. This detection is performed by the heating target placement determining unit 280.

Upon determining that there is a pan (heating target N) based on the detection information from the heating target placement determining unit 280 (ST5), the energizing control circuit 200 determines whether or not the pan (heating target N) thereof is suitable for induction heating (ST6). This determination is performed based on the determination information from the heating target placement determining unit 280. The heating target placement determining unit 280 distinguishes too small a pan (heating target N) such that the diameter is several centimeters or the like, a pan (heating target N) of which the bottom is greatly deformed or curved or the like depending on difference in electrical properties, and outputs the establishing a difference of result as establishing a difference of information.

Next, the energizing control circuit 200 performs determination processing in ST6 regarding whether or not the pan (heating target N) is proper based on the establishing a difference of information from the heating target placement determining unit 280, and in the case where it is determined that the pan is proper, the processing proceeds to step ST7 of start of heating operation. The set heating power (e.g., any one of 9 levels of 150 W of "heating power 1" serving as the minimum heating power through 2500 W of "heating power 8", 3000 W serving as "maximum heating power") is displayed on the corresponding area 100L1 of the left-side induction heat source 6L in the integrated display means 100, and is 1000 W for example. Note that an arrangement may be made in which heating power is first set to a predetermined heating power, for example, set to middle heating power (e.g., 1000 W at heating power 5) as a default setting, and even if the user does not perform setting of power heating, the user may start cooking using the initial setting heating power.

In the case where the pan is improper, display means such as the integrated display means 100 have already operated in this stage, and accordingly, the energizing control circuit 200 displays information to the effect that the pan (heating target N) is improper on the integrated display means 100, and also outputs message information to the effect that to the audio synthesizer 315 at the same time to inform the user of this from the speaker 316 by audio.

In this manner, in the case of having selected either of the left and right induction heat sources 6L and 6R, cooking is automatically started based on predetermined heating power (e.g., 1000 W as described above), and accordingly, there may not have to newly issue a cooking start command using an input key, dial, operating button, or the like. It goes without saying that the user may arbitrally change heating power after start of induction heating as needed.

Upon induction heating operation being started at the left-side induction heat source 6L in ST7A, induction heating by the main heating coil MC and sub heating coils SC1 to SC4 which make up its heat source is performed, but detection has already been made in ST5 regarding whether or not the pan (heating target N) is placed above the main heating coil MC alone, or in addition to this, detection has been made regarding which of the sub heating coils SC1 to SC4 the pan (heating target N) is placed above, and accordingly, in the case where the pan (heating target N) is placed above the main heating coil MC alone, this induction heating becomes induction heating with the main heating coil MC alone thereof, and also, in the case where the same pan (heating target N) is also placed above at least one of the sub heating coils SC, this induction heating becomes cooperative heating by the main heating coil MC and sub heating coils SC. In ST8, such determination processing is performed.

In the case where of cooperative heating, a high-frequency current is supplied to the relevant sub heating coils SC1 to SC4 and main heating coil MC from the inverter circuits MIV, and SIV1 to SIV4 under the control of the energizing control circuit 200 respectively, and cooperative heating is started (ST9). Next, according to a control command from the energizing control circuit 200, the wide-area light-emitting unit 277 changes the emission state from the yellow emission and lighting state (mode 1) to the red emission and lighting state (mode 2) (ST10). Note that, an arrangement may be made in which in a state in which the same yellow as with ST3A is being emitted and lighted, its emission and lighting is intermittently performed, thereby assuming a false appearance for the user as if blinking, or change according to increase in brightness of emission and lighting may be made, either becomes change or switching of the mode according to the present invention.

The energizing control circuit 200 outputs, for example, information to the effect that cooperative heating operation by the main heating coil MC and sub heating coil SC1 is being performed, to the integrated display means 100 along with heating power information. Thus, it is displayed on the corresponding areas 100L1 and L2 of the integrated display means 100 using characters or a figure that the sub heating coil which has started heating operation is the SC1. Fig. 30 illustrates a display example with characters of "under simultaneous heating by main coil and left-side sub coil". Note that a display portion thereof is in the corresponding area L1, and accordingly, this is adjacent to display of heating information of "heating power: 3 kW". That is to say, the positions of the display of heating power, and the display of information indicating cooperative heating operation adjoin. Here, CM corresponds to information indicating that the operation is cooperative heating operation. The energizing control circuit 200 creates audio information such that "similar-side sub coil is also being heated" or the like, and outputs to the speaker 316, and the message is informed by audio from the speaker 316 simultaneously with the display.

Note that apart from continuity of emission and lighting state of the wide-area light-emitting unit 277, for example, as illustrated in Fig. 21, the individual light-emitting units 276 provided for each of the sub heating coils SC1 to SC4 may be caused to emit light and to be lighted so that the user may visibly identify the sub heating coils SC1 to SC4 involved in cooperative heating.

Next, the processing in ST8 to ST10 is repeated at a short cycle of an interval of several seconds until a cooking stop command from the user comes. Even if the right-side sub heating coil SC1 is involved in cooperative heating once, the user may unintentionally or intentionally slightly moves the pan (heating target N) back and forth and sideways in the middle of cooking, and accordingly, the placed position of the pan (heating target N) changes after the movement thereof. Therefore, in determination step ST8 of cooperative heating, information of the heating target placement determining unit 280 is also output to the audio synthesizer 315. Thus, in the case where the energizing control circuit 200 has performed the processing for identifying the sub heating coils SC1 to SC4 to be driven in a heating operation based on the information of the heating target placement determining unit 280 and temperature sensors 31L1 to 31 L5, the audio synthesizer 315 informs the result thereof in real time.

On the other hand, in the case where determination is made in ST8 that the type of heating is not cooperative heating (equivalent to step MS11 in Fig. 32), the energizing control circuit 200 controls the main inverter circuit MIV to drive the main heating coil MC alone. Thus, a high-frequency current is supplied to the main heating coil MC from the inverter circuit MIV, and individual heating is started (ST11). The emission mode of the individual light-emitting unit 276 which radiates light on the outer circumferential edge portion of an area to be heated thereof corresponding to the main heating coil MC involved in individual heating thereof, is changed from the yellow emission and lighting state (mode 1) to the red emission and lighting state (mode 2) (ST12).

Note that in a state in which the same yellow as with ST3 is being emitted and lighted, its emission and lighting is intermittently performed, thereby assuming a false appearance for the user as if blinking, or change according to increase in brightness of emission and lighting may be made, and either is a kind of change or switching of the mode. Note that apart from the continuity of the emission and lighting states of the individual light emitting units 276, emission and lighting of the wide-area light-emitting unit 277 may be continued without change, but may be turned off. The processing then proceeds to step 13.

In the case where a heating cooking stop command has come from the user, or in the case where determination is made at the energizing control circuit 200 that predetermined setup time has elapsed (time is up) while performing timer cooking, the energizing control circuit 200 controls the main inverter circuit MIV and sub inverter circuits SIV1 to SIV4 to stop energizing of the main heating coil MC and all of the sub heating coils SC1 to SC4 which have been driven in a heating operation so far. The energizing control circuit 200 starts, in order to perform calling for attention to the effect that the temperature of the top plate 21 is high temperature, high-temperature informing operation using a method for blinking all of the wide-area light-emitting unit 277 and individual light-emitting unit 276 in red, or the like (ST14).

The high-temperature informing operation continues until a predetermined period of time (e.g., 20 minutes) or until the temperature of the top plate 21 decreases to, for example, 50 degrees centigrade (it takes usually 20 minutes or longer due to natural heat radiation) according to temperature detected data from the temperature detecting circuit 240 since energizing for the main heating coil MC and all of the sub heating coils SC1 to SC4 was stopped. Such determination of reduction in temperature or time course is performed in ST15, and in the case where a high-temperature informing condition is satisfied, the energizing control circuit 200 ends high-temperature informing, and ends the operation of the heating cooker (after this, the power switch is automatically turned off. Specifically, when the power switch is turned on, power supply to a relay for holding power switch on is disconnected, and accordingly, this relay is turned off, by which the power switch is also automatically turned off).

Note that synchronously with the high-temperature informing operation start ST14, the energizing control circuit 200 displays a cautions sentence of "Top plate is still high in temperature, so don't touch this" or a figure that such a situation may be understand, or the like on the liquid crystal screen of the integrated display means 100. Note that an arrangement may be made in which a display unit where characters of "high temperature cautions" are popped up and displayed on the top plate 21 using LEDs is separately provided around the integrated display means 100 in the vicinity thereof, thereby further performing high-temperature informing.

According to a configuration as described above, with this Embodiment 2, a large-diameter pan which has not heretofore been able to be heated may also be able to be subjected to induction heating, and moreover, after energizing to the heating coils is started, and before substantial induction heating operation, the user may be informed of all of the regions to be heated by emission and lighting of the individual light-emitting units 276 and wide-area light-emitting unit 277. Moreover, after the user selects a heat source, and starts heating operation, the user may visually recognize the emission and lighting state of the individual light-emitting units 276 and wide-area light-emitting unit 277, and accordingly, in a preparation stage before putting the pan (heating target N), the user may understand a place most suitable for placing the pan (heating target N), and this is user-friendly for the user.

High-temperature informing is also performed using the individual light-emitting units 276 and wide-area light-emitting unit 277, and accordingly, the cooker with high safety may be provided without increasing the number of components.

Next, description will be made regarding operation in the case where after the emission mode of the wide-area light-emitting unit 277 changes from the yellow emission and lighting state (mode 1) to the red emission and lighting state (mode 2) (ST10), the sub heating coil which performs cooperative heating operation is changed from the SC1 to SC2, with reference to Fig. 34.

As described above, upon the user moving the ellipse-shaped pan (heating target N) to the left on the top plate 21, the heating target placement determining unit 280 determines that the same ellipse-shaped pan (heating target N) is placed above the main heating coil MC and left-side sub heating coil SC2, and outputs the establishing a difference of information to the effect that to the energizing control circuit 200.

In Fig. 34, upon detecting this based on the establishing a difference of information from the heating target placement determining unit 280 (ST10A), the energizing control circuit 200 stops control of the sub inverter circuit SIV1 corresponding to the sub heating coil SC1, and controls the main inverter circuit MIV and sub inverter circuit SIV2 to operate the main heating coil MC and the particular sub heating coil SC2 alone positioned on the left side thereof in an interlocking manner. Thus, high-frequency electric power is supplied to these two heating coils MC and SC2 from the inverter circuits MIV and SIV2 according to a predetermined heating power ratio, respectively. Energizing to the right-side sub heating coil SC1 is then stopped, "heating power" under execution (e.g., 3000 W) and a predetermined heating power distribution (e.g., in the case of cooking being performed using the left IH heat source 6L with heating power of 3 kW, the main heating coil MC is 2.4 kW, and the sub heating coil SC1 is 600 W, and accordingly, 4:1) are maintained, and the cooking is continued without change. This heating power of 3000 W is continuously displayed with digits and characters by the integrated display device 100 without change (ST10B).

Further, it is displayed on the corresponding area 100L1 of the integrated display means 100 using characters and a figure or the like that the sub heating coil which is driven in a heating operation has been switched from the SC1 to the SC2. Note that this may be displayed on the corresponding area 100L2.

In the next step ST10C, unless the user changes heating power setting, the processing in ST8 to ST10 is repeated until a cooking stop command from the user comes, and in the case where a cooking stop command from the user has come, or in the case where it has been determined by the energizing control circuit 200 that predetermined set-up time has elapsed while timer cooking has been being performed (time up), the processing skips to ST14 in Fig. 33, where the energizing control circuit 200 stops energizing of the main heating coil MC and all of the sub heating coils SC1 to SC4 which is driven in a heating operation at that time, and ends the processing (ST14 to ST16).

The completion of this heating operation is displayed on the corresponding area 100L1 of the integrated display means 100. Unless the user has not turned off the audio synthesizer 315 using a switch (not illustrated in the drawing), completion of the operation is informed by audio at the same time as with ST10. Note that, in Fig. 32 to Fig. 35, the control program has been described with a series of flowcharts, but determination processing (ST2) regarding whether or not there is abnormality, placed pan presence determination processing (ST5), pan suitability determination processing (ST6), and so forth are prepared as sub routines. The sub routines are processed by interrupting the main routine for determining heating control operation at an optional timing, and during execution of actual induction heating cooking, abnormality detection, pan presence detection, or the like executed numeral times.

On the other hand, description will be made regarding a case where the user has changed heating power setting at the time of heating a "large-diameter pan" in step ST10C.

The induction heating cooker according to this Embodiment 2 includes a main heating coil MC configured to heat a heating target N placed above a top plate 21, a sub heating coil group SC made up of multiple sub heating coils SC1 to SC4 each installed adjacent to the outer side of this main heating coil, a main inverter circuit MIV configured to supply a high-frequency current to the main heating coil MC, sub inverter circuit groups SIV1 to SIV4 configured to independently supply a high-frequency current to each of the sub heating coils of the sub heating coil group, a heating target placement determining unit 280 configured to determined whether or not the same heating target N is placed above the main heating coil and first and/or sub heating coil, input units 64R, 64L, 70, 71, 72, 90, 94, and 142 to 145 configured to set heating power at the time of induction heating which are operation by the user, an integrated display means 100 where the setting information of the input units are displayed, and an energizing control circuit 200 configured to independently control outputs of the main inverter circuit MIV and the sub inverter circuit groups SIV1 to SIV4 based on setting information of the input unit, and also controlling the integrated display means 100, with the energizing control circuit 200 controlling, in the case where cooperative heating operation by the main heating coil MC and sub heating coil group SC has been started based on information from the heating target placement determining unit 280, the output of the main inverter circuit MIV, and the outputs of the sub inverter circuit groups SIV1 to SIV4 with a predetermined distribution, so as to achieve the predetermined heating power which the user has set, and in a state in which the number of the sub heating coils SC performing cooperative heating is increased or decreased thereafter, or in a state of switching to another sub heating coil, maintains an output distribution before change, and with the display means 100 performing display by which the predetermined heating power may be viewed regardless of increase or decrease of the number of sub heating coils under the cooperative heating operation, or switching to another sub heating coil.

In the case where determination is made in ST10C in Fig. 34 that there has been a heating power change command, the processing proceeds to ST17 in Fig. 35. In ST17, determination is made whether the heating power after change thereof is greater or smaller than a predetermined heating power level (e.g., 501 W), and in the case of changing to heating power greater than the predetermined heating power, the processing proceeds to ST18, where a predetermined heating power distribution is maintained by the control of the energizing control circuit 200. Specifically, with the example of 3000 W, in the case where the heating power under execution is 3000 W, the predetermined heating power distribution is 4:1 where the main heating coil is 2400 W, and the sub heating coil SC2 is 600 W, and accordingly, this distribution is maintained. The set-up heating power after change is displayed by the energizing control circuit 200 on the corresponding area 100L1 of the integrated display means 100 such as "under heating power 1 kW".

On the other hand, in the case where the heating power is changed to heating power (there are three of 150 W, 300 W, and 500W) smaller than the predetermined heating power level (501 W), after the processing in step 17, the processing proceeds to step 19, where the energizing control circuit 200 outputs a control command signal to the main inverter circuit MIV and sub inverter circuits SIV1 to SIV4 so as to have another heating power distribution. Therefore, even when the number of sub heating coils is one, and also even when the number of sub heating coils is two or more, difference between the main heating coil MC and sub heating coils SC is maintained in a fixed ratio. The heating power after this change, the set-up heating power after change is display on the corresponding area 100L1 of the integrated display means 100 such as "heating power: small 500W".

Specifically, examples of representative heating power and main-sub heating power ratio are illustrated in Fig. 36 and Fig. 37.
(A) in Fig. 36 is the heating power values (W) of the main heating coil MC and sub heating coils SC1 to SC4 in the case of the maximum heating power 3 kW, the heating power ratio between the main heating coil and all of the sub heating coils is fixed to 4:1.
(B) in Fig. 36 is the heating power values (W) of the main heating coil MC and sub heating coils SC1 to SC4 in the case of heating power 6 (1.5 kW), the heating power ratio between the main heating coil and all of the sub heating coils is fixed to 4:1.

(A) in Fig. 37 is the heating power values (W) of the main heating coil MC and sub heating coils SC1 to SC4 in the case of heating power 3 (500 W), the heating power ratio between the main heating coil and all of the sub heating coils is changed to 3:2.

On the other hand, in the case of changing to heating power (thee of 150 W, 300 W, and 500 W) smaller than a predetermined heating power level (501 W), when the heating power ratio is 4:1, the sub heating coils SC are driven with the minimum driving heating power of 50 W or less, which is a problem. For example, as illustrated in (B) in Fig. 37, upon attempting to obtain heating power of 500 W with a heating power ratio of 4:1, this results in driving the sub heating coils SC with small heating power such as 25 W or 33 W.

Specifically, with actual products, impedance of each of metallic pans serving as the heating target N differs, even when applying a greater high-frequency electric power equal to or greater than a predetermined value, a ratio to be converted into heat to be applied to the pan is not fixed, and accordingly, as described in Embodiment 2, the current detecting sensor 227 detects a current flowing into a resonant circuit made up of a parallel circuit of the left IH heating coil 6LC and resonant capacitor 224L, and this current is used for determination such as determination regarding whether or not there is the heating target N, determination regarding whether or not the pan is a pan (heating target N) improper for induction heating, and further determination regarding whether or not insufficient current or eddy current of difference of equal to or greater than a predetermined value as compared to a regular current value has been detected. Thus, current to be applied to the induction heating coils is finely controlled so as to exhibit the specified heating power. Accordingly, in the case of setting heating power small, current to flow is minute, and accordingly, detection thereof may not accurately be able to be detected. In other words, in the case where heating power is great, detection of a current component to flow into a resonant circuit is comparatively easy, but in the case where heating power is small, unless measures such as improvement in sensitivity of the current sensor are implemented, change in heating power may not accurately be handled, and accurate heating power restricting operation serving as a target may not be executed.

Though not illustrated in the drawing, as described above, in reality, there is provided an input-side current sensor configured to also detect the input current value of the power supply for the inverter circuits MIV and SIV1 to SIV4, and accordingly, suitable control may be performed by employing both of this current value and a current value on the output side of a coil according to the (output-side) current sensor.

Note that the sub heating coils SC are also formed of a group wire made up of thin wires of around 0.1 mm to 0.3 mm in a whorl-like form in the same way as with the main heating coil of the left IH heating coil 6LC, a cross-sectional area itself into which a current which generates induction heating is small, and accordingly, great driving electric power may not be applied as compared to as the main heating coil MC, and the maximum heating probability is also relatively small. However, as described above, in the case where the wire diameter of a thin wire of a coil stand alone is further thinned, and also many more wires are coiled around the coil to increase the surface area of the coil conductor, the driving frequency of the inverter circuits SIV1 to SIV4 are increased, and skin resistance thereof may be reduced, and further small heating power may consecutively be controlled while suppressing loss and temperature rise.
(B) in Fig. 37 is the heating power values (W) of the main heating coil MC and sub heating coils SC1 to SC4 in the case of heating power 3 (500 W), the heating power ratio between the main heating coil and all of the sub heating coils is fixed to 4:1.

Therefore, with this Embodiment 2, control for changing the heating power distribution to 3:2 is performed.

Note that, in the case where heating power is 120 W or 300 W, the minimum driving heating power of 50 W or more may not be maintained even with a heating power ratio of 3:2, in this case, a message for prompting change in heating power such as "Heating power set is too small to perform cooking. Please set heating power to 500 W or more." is displayed on the corresponding area 100L1 of the integrated display means 100, or control for restricting to the main heating coil MC alone, or the like is performed. In reality, a scene where a pan large enough for straddling both of the main heating coil MC and sub heating coils SC is heated at 120 W or 300 W is hardly assumed, and accordingly, there is no concern for interfering with actual usability even when performing control described above.

At the time of cooperative heating operation, so that the heating power ratio between the main heating coil MC and the sub heating coil group SC1 to SC4, that is, the main-sub heating power ratio becomes a generally fixed range, the energizing control circuit 200 controls the amount of electric power to be supplied to each, but it is difficult to suppress the amount of electric power to be applied low in the case of small heating power setup as described above, and accordingly, control may be performed in which the amount of electric power per unit time is lowered by restricting actual electric power supply time. For example, in the case where electric power applying time from the sub inverter circuits SIV1 to SIV4 to the sub heating cols SC1 to SC4 is reduced to 50% by energizing ratio control, the amount of electric power per unit time actually contributes to heating may be reduced to 50%. Specifically, in the case where it is difficult to reduce heating power only by restricting the frequency of electric power to be applied, electric power to be substantially affected may be narrowed down to a smaller value by reducing a ratio between time for supplying electric power and time for not supplying electric power using energizing control, and accordingly, such control may be employed.

Note that, with Embodiment 2 of the present invention, at the time of cooperative heating, the heating power ratio between the main heating coil MC and sub heating coil group SC1 to SC4 is maintained in generally fixed, but it is not assured to constantly maintain the heating power ratio in a "predetermined ratio" in all scenes. For example, control is performed in which during heating driving, difference between currents which flow into the input side and output side of an inverter circuit is detected, and a result thereof is fed back to the energizing control circuit 200, and in the case where the user has changed heating power set-up, there may be a case where control is transiently unstable immediately after change thereof, the heating ratio may temporarily deviates from the target heating power ratio.

In the case where the user has laterally moved the pan or have lifted the pan for a short period of time, such behavior is detected by the current sensors 227, and 267A to 267D, and it has to be identified whether or not such behavior is not an improper use method or the like has to be identified, and time for selecting a suitable control method has to be prepared.

The heating ratio may temporarily deviates from the target heating power ratio until this identification, execution of adapted control are established. Instead of knowing momentary change in applied current or the like, if the user can confirm that heating power set by him or her has not unintentionally been changed, he or she does not feel uneasy while cooking.

Note that, even in the case where the user has not changed heating power set-up, in the case where the user has selected another cooking, the heating power ratio between the main heating coil MC and the sub heating coil group SC1 to SC4 may change. For example, in the case where the user uses a large-sized frying pan of which the outer shape is a rectangle, and puts this above the top plate 21 in a position closer to the left side than the center point X1 so that the frying pan becomes long in the front-to-back direction, and is frying four hamburgers, the frying pan is heated by the main heating coil MC and a second sub heating coil SC2 positioned diagonally left front, and a fourth sub heating coil SC4 positioned diagonally left rear.

So that temperature averagely rises on the entire bottom of the frying pan, for example, heating power of 1.5 kW or 2 kW is recommended, a control target value for the amount of supply power for the main heating coil MC and sub heating coils SC2 and SC4 is set with a predetermined heating power ratio, but this time, in the case of putting the same frying pan in the same position, and cooking fried eggs using several or more eggs at 2 kW or 1.5 kW, the cooking ingredient (beaten egg) is thinly extended in the entire bottom of the frying pan, and accordingly, good results of cooking may be obtained by accelerating temperature rise on the periphery than the central portion at the bottom of the frying pan, and slightly increasing heating power on the periphery.

Therefore, in the case of such cooking, the heating power of all of the two sub heating coils SC2 and SC4 is set greater than the heating power of the main heating coil MC. In this manner, depending on actual cooking contents, it is desirable to change the heating power ratio (even with the same heating power level) between the heating coil MC and sub heating coils SC1 to SC4.

As described in Embodiment 1, in the case of a cooking menu where emphasis is put on such temperature uniformity, for example, during a predetermined period of time since start of cooking, the main heating coil MC positioned in the center is driven at the final heating power, and simultaneously, the sub heating coils SC1 to SC4 which participate in cooperative heating are driven at greater heating power than that (set to an on state), by which cooking may be realized such that only the pan surface (side face of a pan) such as a frying pan or the like.

Note that, with this Embodiment 2, the main heating coil MC side is set so as to exhibit greater heating power than heating power of the entire sub heating coil group SC1 to SC4, but the present invention is not restricted to this. Various modifications may be made depending on conditions such as the configuration and size of the main heating coil MC side and each of the sub heating coils SC1 to SC4, or the number of installed sub heating coils SC, and for example, the heating power of the entire sub heating coil group SC1 to SC4 may be set greater than the heating power of the main heating coil MC, or both may be set to the same.

However, in the case of considering use at an ordinary home, frequency to use a circular pan with an ordinary size, for example, a pan of which the diameter is around 20 cm to 24 cm is high, and accordingly, in the case of employing such a general pan, induction heating is performed with the main heating coil MC stand alone, and accordingly, it is desirable to take the lowest heating power necessary for such cooking into consideration so as to exhibit the lowest heating power. In the case of use at an ordinary home, it is assumed that the use frequency for an ordinary-sized pan is high, and the use frequency for a large-diameter pan is low, and according to this as a premise, it is assumed that coils to be used at ordinary homes is principally the main heating coil, and the central heating coil is referred to as main heating coil MC.

At the time of cooperative heating, specifically, in the case where during a certain period of time, two or more independent induction heating coils are driven together to be magnetically interlocked, it is desirable from a viewpoint stable reliable control to harmonize the operation timing between the main inverter circuit MIV and sub inverter circuits SIV1 to SIV4. For example, it is desirable to harmonize with at least any one of heating start timing, heating stop timing, and heating power change timing according to the main inverter circuit MIV and first sub inverter circuit SIV1. As an example of this, it may be conceived that at the time of the operation is switched to the second sub inverter circuit SIV2 from a state in which the main inverter circuit MIV and first sub inverter circuit SIV1 are driven at the same time, the operations of the main inverter circuit MIV and first sub inverter circuit SIV1 are stopped in a synchronized manner, and two of the main inverter circuit MIV and second sub inverter circuit SIV2 are then simultaneously driven and started.

Note that the main inverter circuit MIV and the sub inverter circuits SIV are restricted to a predetermined low heating power only for a predetermined time of period (e.g., 10 seconds) immediately after being driven, and within this predetermined period of time, as illustrated in Fig. 33 in Embodiment 1, a portion or all of the determination processing (ST2) regarding whether or not there is abnormality, placed pan presence determination processing (ST5), pan suitability determination processing (ST6), and so forth are interrupt-processed, and when there is no problem, control may be made such that thereafter, heating power is automatically increased the heating power set by the user, and the cooking is continued.

Note that, with the above example, description has been made using a resonant circuit made up of a parallel circuit of a heating coil and a resonant capacitor as an example, but a resonant circuit made up of a series circuit of a heating coil and a resonant capacitor.

With this Embodiment 2, description has been made with a premise in which in the case where the left-side heating coil 6LC is in under induction heating, only the blowing device 30 of the left cooling room 8L is operated, and the blowing 30 of the right cooling room 8R is not operated, but depending on an environment such as the use state of the heating cooker (a case of, e.g., the left and right heating coils 6LC and 6RC have been driven at the same time, and another cooking has been performed immediately before, or the central induction heat source 6M and grille heating room 9 are used), the temperature of the upper component room 10, and so forth, the blowing devices 30 of the left and right cooling rooms 8L and 8R may be operated at the same time, and also, the operating speed (blowing capability) of the blowing devices of the left and right may not always be the same, and one or both may be changed according to cooker use situations as appropriate.

The outer dimensions of the left and right cooling units CU are not necessarily the same, the dimensions of parts of the wing 30F of the blowing device 30, motor 300, fan case 37, and component case 34 may be modified as appropriate according to the heat amount or size or the like of an object to be cooled (induction heating coil or the like), but in the case where the maximum heating power of the left and right induction heat sources 6L and 6R are the same, it is desirable to realize reduction in manufacturing cost and improvement in assembling by standardizing the dimensions and specifications of the components of the two cooling units CU as much as possible. It is not relevant to the essence of the present invention to changing the cooling units CU such that the cooling units CU are installed on either single side.

With Embodiment 2 described above, the integrated display means 100 may individually or simultaneously display the operation conditions of four heat sources of the left-side induction heat source 6L, right-side induction heat source 6R, central heat source 6M and radiation type electric heat sources (heaters) 22 and 23, and moreover, may command start or stop of heating operation and set energizing conditions by the input keys 141 to 145 being touch-operated, the integrated display means 100 may be restricted to a simple display function alone without including such an input function for the energizing control circuit 200.

Further, the heating target placement determining unit 280 which determines whether or not the same pan (heating target N) is placed above the main heating coil MC and sub heating coils SC1 to SC4 may employ means configured to optically detect whether or not there is a pan (heating target N) above the sensors in addition to means configured to detect temperature such as the infrared sensor 31 described in the above Embodiment 2, or means configured to detect current flowing into a heating coil such as the current detecting sensor 227. For example, in the case where there is a pan (heating target N) above the top plate 21, lighting apparatuses of the ceiling of the kitchen, sunlight, and so forth are not input thereto, but in the case where there is no pan (heating target N), disturbance light such as illumination light or sunlight or the like is input thereto, and accordingly, the heating target placement determining unit 280 may be configured to detect change in these.

As other than a method for determining the material of a pan (heating target N) based on current flowing into a heating coil and current flowing into an inverter circuit, there may be conceived a method for taking advantage of other electrical properties, such as a method for determining the material of a pan (heating target N) based on voltage flowing into a heating coil and voltage flowing into an inverter circuit. For example, with Japanese Unexamined Patent Application Publication No. 2007-294439, there has been introduced a technique for establishing a difference of the material and size of a heating target based on an input current value to an inverter circuit and a current value flowing into a heating coil in such a manner.

Note that, with Embodiment 2 of the present invention, description has been made in which the heating target placement determining unit 280 "determines" that the same pan (heating target N) is placed above the main heating coil MC and one or more sub heating coils SC1 to SC4, but does not determine that the number of pans is actually one by itself. That is to say, processing for counting the number of pans actually placed is not employed, with this type of induction heating cooker, it is hardly assumed that cooking is performed in a state in which multiple heating targets N are placed above one induction heating coil at the same time, and accordingly, the present inventor and others have regarded a case as "the same pan (heating target N) is placed" in which the magnitude of impedance regarding the main heating coil MC and one or more sub heating coils SC1 to SC4 using the current sensors 227, and 267A to 267D, and there is no great difference in impedance thereof.

In other words, the heating target placement determining unit 280 may understand, as illustrated in Fig. 23, the magnitude of current flowing into the main heating coil MC and one or more sub heating coils SC1 to SC4, and accordingly, understand the magnitude of impedance of each. Therefore, in the case where the value of this impedance is included in a predetermined range, the heating target placement determining unit 280 transmits a determination signal to the effect that the same pan (heating target N) is placed to the energizing control circuit 200. Similarly, in the case of detecting temperature at the infrared sensor 31 as well, the heating target placement determining unit 280 determines that the same pan (heating target N) is placed, from a comparison result regarding whether or not the detected temperature of each infrared sensor 31 corresponding to multiple heating coils is the same, and in the case of employing means of an optical sensor which takes advantage of a fact that the amount of received light changes depending on whether or not there is a pan as well, it is realistic to determine that a pan is placed above the main heating coil MC and one or more sub heating coils SC1 to SC4, from magnitude comparison of the amount of received light.

As described above, in the case where the heating target placement determining unit 280 has determined that a heating target N having a size enough for straddling above the main heating coil MC and above the four sub heating coils SC1 to SC4 therearound, is placed, at the first stage before starting induction heating (after the abnormality detection processing), as illustrated in Fig. 30, there are displayed, as with Embodiment 1, seven of "high-speed heating", " deep-fry", "water heater", "preheating", "cooking rice", and "water heater + hot-keep" as selectable cooking menus.

Therefore, of the portion of seven keys E1A, E1B, E1C, E2A, E2B, E3A, and key E3B for cooking menu selection, for example, upon a key portion for high-speed heating being touched, as illustrated in Fig. 26, the cooking menu for high-speed heating is selected, and it is displayed by characters that "high-speed heating" has been selected. Fig. 30 illustrates execution of high-speed heating by the selection key E1A itself continuously being displayed without change.

With this Embodiment 2, in the case of having selected this high-speed heating, heating power to be applied to the heating target N may manually be set, and total heating power of the main heating coil MC and sub heating coils may arbitrally be set by the user out of a range from 120 W to 3000 W in the same way as with Embodiment 1.

The main-sub heating power ratio between the main heating coil MC and sub heating coils SC1 to SC4 is automatically determined by the energizing control circuit 200 so as not to exceed the total heating power selected by the user and also so as to be included in the range of a predetermined heating power ratio, and may not arbitrally be set by the user. Control is performed so as to standardize the directions of high-frequency currents in a region where the main heating coil MC and sub heating coils SC1 to SC4 adjoin.

Of the seven keys for cooking menu selection, upon the selection key E1 C of "boiling" being touched, the cooking menu of "boiling" may be performed. For example, even in the case of employing a deep pan called a "pasta pan" which has a large diameter and is deep to be used for principally boiling pasta, with this Embodiment 2, water is heated at high speed to proceed to boiling cooking.

For example, the default value of heating power is 2000 W, it is desirable that the user sets heating power to 3000 W from the beginning to start heating. In this case, the main-sub heating ratio is automatically determined by the controller 100, the user does not arbitrally have to set this, for example, the heating power of the main heating coil MC is set to 1000 W, and the total heating power of the four sub heating coils is set to 2000 W. When water is boiling, the energizing control circuit 200 outputs an informing signal, performs display for prompting the user to put pasta or noodles into the pan, on a predetermined guide area 100GD of the integrated display means 100, and simultaneously informs the user of that effect using the audio synthesizer 315. At this time, in the case where heating power is not set again, the energizing control circuit 200 informs the user that heating power will automatically be decreased.

In the case where the user has not performed any operation, as with Embodiment 1, when a boiling state is reached, the energizing control circuit 200 outputs a command signal for decreasing heating power to the main inverter circuit MIV and sub inverter circuits SIV1 to SIV4. In the case where the user has set heating power again, or upon touching an input key called "start boiling" appearing on a predetermined display area 100L2 of the integrated display means 100, heating at 3000 W is started again, the adjacent four sub heating coils are, for example, divided into a group of two of the SC1 and SC2, and a group of two of the SC3 and SC4, and these two groups are alternately driven in a heating operation for every 15 seconds with the heating power of each of the sets being set 1500 W each.

In this manner, at the time of boiling and thereafter, control for promoting convection of hot water is automatically performed. Note that, even when the user decreases heating power to less than 3.0 kW, for example, 2.0 kW or 1.0 kW, immediately after boiling, heating operation according to similar convection promotion control is executed in a range not exceeding total sum of the amount of heating power thereof.

As described above, with Embodiment 2, the seven cooking menus E1A, E1B, E1C, E2A, E2B, E3A, and key for E3B selection are displayed on the integrated display means 100 configured to display heating conditions in a state selectable and operable by the user. Therefore, according to selection of a target cooking menu, a conforming heating driving pattern is automatically determined by the controller, in addition to entering a heating coil driving mode according to the user's purpose and hope such as heating time-critical, temperature uniformity-critical, or the like, a selection key of the cooking menu thereof may be operated on the display unit, thereby providing advantages such as resolving user misuse, alleviation of mental burden, and so forth.

As described above, the induction heating cooker according Embodiment 2 includes the configuration of a first invention. Specifically, the induction heating cooker according to Embodiment 1 includes: a main unit A having a top plate 21 on a top face thereof on which a heating target N such as a pan into which a cooking target is put, or the like is placed; a first induction heating source 6L and a second induction heating source 6R which are adjacently disposed below the top plate 21; an inverter circuit configured to supply induction heating electric power to the induction heating coils 6RC and 6LC of these induction heating sources; an energizing control circuit 200 configured to control output of this inverter circuit; and an operating unit E configured to instruct this energizing control circuit 200 to start heating and perform setting of heating power, and so forth; with an oblong rectangular storage space 10 configured to store the respective induction heating coils of the first and second induction heating sources 6L and 6R being provided to the inner portion of the main unit A below the top plate 21; with the first induction heating source 6L including a circular central coil (main heating coil) MC, and multiple elongated side heating coils SC1 to SC4 disposed therearound; with the circular heating coil 6RC of the second induction heating source 6R having a diameter (twice of R2, around 180 mm), which is smaller than the diameter (twice of R3, DB: around 200 mm) of a circle including the side coil and greater than the outer diameter (twice of R1, around 130 mm) of the central coil MC thereof; and with the first induction heating source 6L being configured to automatically or manually switch induction heating at the central coil MC alone, and cooperative heating of the central coil MC and the side heating coils SC1 to SC4 according to the size of the heating target N. Thus, there may be selected three types of heating means of the central coil MC alone, cooperative heating of the central coil MC and side coils SC1 to SC4, and the second induction heating source 6R alone on the top plate 21 having a limited area, a wider heating target N than a conventional two-burner type cooker simply having two types of circular heating coils may be handled, and user-friendliness may be improved.

The induction heating cooker according to Embodiment 2 includes the configuration of a second invention. Specifically, the induction heating cooker according to Embodiment 2 includes: a main unit A having a top plate 21 on a top face thereof on which a heating target N such as a pan into which a cooking target is put, or the like is placed; a first induction heating unit 6L, a second induction heating unit 6R, and a third induction heating unit 6M which are adjacently disposed below the top plate 21; an inverter circuit configured to supply induction heating electric power to the induction heating coils of these heating units; a controller 200 configured to control output of this inverter circuit; and an operating unit configured to instruct this controller to start heating and perform setting of heating power, and so forth; with an oblong rectangular storage space 10 configured to store the respective induction heating coils of the first, second, and third heating units 6L, 6R, and 6M being provided to the inner portion of the main unit A below the top plate 21; with the first heating unit 6R including a circular central coil MC, and multiple elongated side coils SC1 to SC4 disposed therearound; with a circular heating coil 6RC of the second induction heating unit 6R having a diameter smaller than the diameter (twice of R3, DB: around 200 mm) of the first heating unit 6L and also greater (180 mm) than the outer diameter (around 130 mm) of the central coil MC; with the third heating unit including a circular coil 6MC having a smaller diameter (around 130 mm) than the outer diameter (180 mm) of the heating coil 6RC of the second heating unit 6R; and with the first induction heating unit 6R being configured to automatically or manually switch induction heating at the central coil MC alone, and cooperative heating of the central coil MC and the side coils SC1 to SC4 according to the size of the heating target N. Thus, there may be selected four types of heating means of the central coil MC alone of the first induction heating unit 6L, cooperative heating of the central coil MC and side coils SC1 to SC4, the second heating unit 6R alone, and the third heating unit 6M alone on the top plate 21 having a limited area, a wider heating target N than a conventional two-burner type cooker simply having three types of circular heating coils may be handled, and user-friendliness may be improved.

The induction heating cooker according to Embodiment 2 includes the configuration of a third invention. Specifically, the induction heating cooker according to Embodiment 3 includes: a main unit A having a top plate 21 on a top face thereof on which a heating target N such as a pan into which a cooking target is put, or the like is placed; a first induction heating unit 6L and a second induction heating unit 6R which are disposed adjacently arrayed in the lateral direction below the top plate 21; an inverter circuit configured to supply induction heating electric power to the induction heating coils of the induction heating units; a controller 200 configured to control output of this inverter circuit; and an operating unit configured to instruct this controller to start heating and perform setting of heating power, and so forth; with an oblong rectangular storage space 10 configured to store induction heating coils 6RL and 6RM of the first and second induction heating units 6L and 6R being provided to the inner portion of the main unit A below the top plate 21; with the first induction heating unit 6R including a circular central coil MC, and multiple elongated side coils SC1 to SC4 disposed therearound; with a circular heating coil 6RC of the second heating unit 6R having a diameter smaller than the diameter (twice of R3, DB: around 200 mm) of the first induction heating unit 6R and also greater (around 180 mm) than the outer diameter (around 130 mm) of the central coil MC; with the first induction heating unit 6R being configured to automatically or manually switch induction heating at the central coil MC alone, and cooperative heating of the central coil MC and the side coils SC1 to SC4 according to the size of the heating target N; and with the first and second distance W5 (100 mm) being set greater than the distances W8 (30 mm or less, preferably 22 mm) and W10 (30 mm) between both wall faces of the storage space and the heating coils of the first and second heating units. Thus, there may be selected three types of heating means of the central coil MC alone heating, cooperative heating of the central coil MC and side coils SC1 to SC4, and the second heating unit 6R alone heating on the top plate 21 having a limited area, a wider heating target N than a conventional two-burner type cooker simply having two types of circular heating coils may be handled, and user-friendliness may be improved. Even in the case where the first and second heating units have been driven at the same time, space distance between both heating units is set longer, and accordingly, it may be expected to suppress occurrence of interference noise.

The induction heating cooker according to Embodiment 2 includes the configuration of a fourth invention. Specifically, the induction heating cooker according to Embodiment 2 includes: a main unit A having a top plate 21 on a top face thereof on which a heating target N such as a pan into which a cooking target is put, or the like is placed; a first induction heating unit 6L, a second induction heating unit 6R, and a third induction heating unit 6M which are adjacently disposed below the top plate 21; an inverter circuit configured to supply induction heating electric power to the induction heating coils 6LC, 6RC, and 6MC of the induction heating units; a controller 200 configured to control output of this inverter circuit; and an operating unit configured to instruct this controller to start heating and perform setting of heating power, and so forth; with an oblong rectangular storage space 10 configured to store the respective induction heating coils of the first, second, and third heating units being provided to the inner portion of the main unit below the top plate 21; with the first heating unit 6R including a circular central coil MC, and multiple elongated side coils SC1 to SC4 disposed therearound; with the heating coil 6RC of the second heating unit 6R having a diameter smaller than the diameter (around 200 mm) of the first induction heating unit 6R and also greater (180 mm)than the outer diameter (around 130 mm) of the central coil MC; with the third heating unit 6M including a circular coil 6MC having a smaller diameter (around 130 mm) than the outer diameter (180 mm) of the heating coil 6RC of the second induction heating unit 6R; with the first induction heating unit 6R being configured to automatically or manually switch induction heating at the central coil MC alone, and cooperative heating of the central coil MC and the side coils according to the size of the heating target N; with the maximum heating power of the third heating unit 6M being set smaller than the maximum heating power (3000 W) of the first and second induction heating units 6L and 6R, being set to 1500 W; and with the mutual distance W5 between the heating coils of the first and second heating units being set greater than the distances W11 and W12 between the heating coil 6MC of the third induction heating unit 6M and the heating coils of the first and second heating units. Thus, there may be selected four types of heating of the central coil alone, cooperative heating of the central coil and side coils, the second heating unit alone, and the third heating unit alone on the top plate having a limited area, a wider heating target N than a conventional two-burner type cooker simply having three types of circular heating coils may be handled, and user-friendliness may be improved. Even in the case where greater heating power than the third heating unit having entered the first and second induction heating units to heat-drive these at the same time, space distance between the first and second heating units is set longer, and accordingly, it may be expected to suppress occurrence of interference noise.

The induction heating cooker according to Embodiment 2 includes the configuration of a fifth invention. Specifically, the induction heating cooker according to Embodiment 2 includes: a main unit A having a top plate 21 with a predetermined lateral width W2 where a heating target N such as a pan into which a cooking target is put, or the like is placed, on the top face; a first induction heating unit 6L and a second induction heating unit 6R which are adjacently disposed below the top plate 21; an inverter circuit configured to supply induction heating electric power to the induction heating coils of the induction heating units; a controller 200 configured to control output of this inverter circuit; and an operating unit configured to instruct this controller to start heating and perform setting of heating power, and so forth; with an oblong rectangular storage space 10 configured to store the induction heating coils 6LC and 6RC of the first and second induction heating units 6L and 6R being provided to the inner portion of the main unit A below the top plate 21; with the first heating unit including a circular central coil, and multiple elongated side coils disposed therearound; with a circular heating coil of the second induction heating unit 6R having a diameter smaller than the diameter (around 200 mm) of the first induction heating unit and greater than the outer diameter (around 130 mm) of the central coil MC; with the first induction heating unit 6R being configured to automatically or manually switch induction heating at the central coil MC alone, and cooperative heating of the central coil MC and the side coils SC1 to SC4 according to the size of the heating target N; and with the lateral width W2 of the top plate 21 being set greater than the maximum lateral width W3 of the storage space 10 so as to protrude in the horizontal directions longer than the lateral width W3 of the storage space 10. Thus, even with the storage space of the limited lateral width W3, on the top plate 21 protruding in both sides as compared thereto, there may be selected three types of heating of the central coil MC alone, cooperative heating of the central coil MC and side coils SC1 to SC4, and the second induction heating unit 6R alone, a wider heating target N than a conventional two-burner type cooker simply having two types of circular heating coils may be handled, and user-friendliness may be improved.

### Embodiment 3

Fig. 38 to Fig. 42 illustrate an induction heating cooker according to Embodiment 3 of the present invention, and Fig. 38 is a perspective plan view so as to find the positions and sizes of the induction heat sources 6L, 6R, and 6M below the top plate 21.

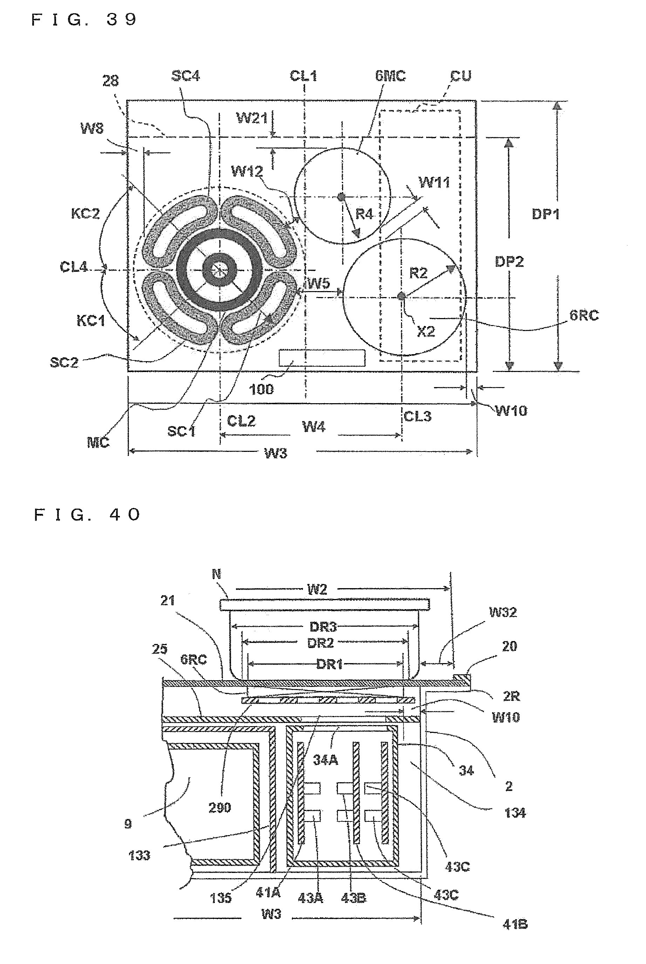

Fig. 39 is a plan view where the top plate 21 has been removed, and the entire component storage room 10 in which the induction heat sources 6L, 6R, and 6M are stored have been described.

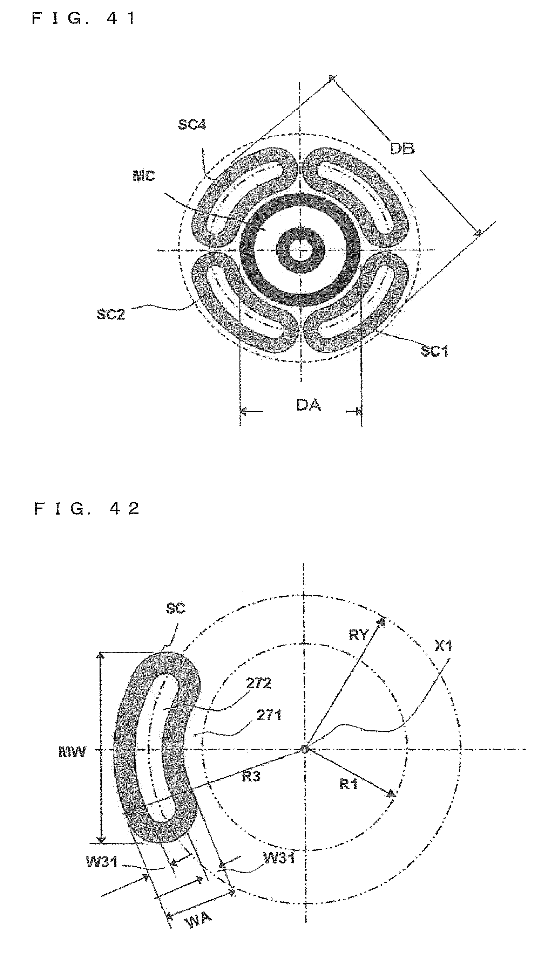

Fig. 40 is a cross-sectional view taken along a line D3-D3 in Fig. 38. Fig. 41 is an explanatory diagram illustrating dimension of the heating coil 6LC of the left-side induction heat source 6L of the main unit A. Fig. 42 is an explanatory enlarged view illustrating dimension of the side heating coil (sub heating coil) SC thereof.

The feature points of this Embodiment 3 are in that the installation position of the right-side induction heat source 6R equivalent to the second induction heating unit are moved to the front side as compared to the Embodiments 1 and 2 so as not to be located in a line just beside, and also in that the cooling unit CU is not stored in each of the both sides of the main unit A but stored in the right side alone.

With the main unit case 2 made of a metallic plate which makes up the shell of the cooker, the entire opening of the top face thereof is sealed with the top plate 21. 2R is a flat flange portion formed by the upper edge portion of the main unit case 2 being horizontally bent to the right. 20 is a frame-shaped frame member which covers the circumference of the top plate 21, and fixes the top plate 21 to the main unit case 2.

The interior of the main unit case 2 is vertically partitioned by a metallic horizontal partition plate 25, and between the horizontal partition plate 25 and top plate 21 makes up the component storage room 10. The metallic box-shaped grille heating room 9 is installed below the horizontal partition plate 25. 133 is a heat-insulating partition plate installed so as to obstruct between the grille oven 9 and horizontal partition plate 25.

With the interior of the main unit case 2, the right side of the partition plate 133 becomes cooling space 134. This cooling space is equivalent to the right-side cooling room 8R illustrated in Fig. 12. CU is a cooling unit installed by being inserted into this cooling space from above.

The cooling units CU include a cylindrical component case 34 of which the vertical cross-sectional shape has a rectangle or regular square as illustrated in Fig. 38, and the blowing device 30 (not illustrated in the drawing) stored in the rear opening of this case. The front opening of this case 34 is closed.

With the cooling units CU, cold air within the room is absorbed from the outside of the main unit A using the blowing machine 30, and the heating coil 6RC of the right-side induction heat source 6R, the heating coil 6LC of the left-side induction heat source 6L, and the heating coil 6MC of the central induction heat source 6M are cooled by the air thereof.

With the horizontal partition plate 25, a ventilation hole 135 is formed directly below the heating coil 6RC of the right-side induction heat source 6R. With the ceiling face of the component case 34, the exhaust port 34A is formed in a position corresponding to the ventilation hole 135. This ventilation hole is equivalent to the first exhaust port 34A in Fig. 17. Note that, with an air trunk from the exhaust port 34A to the ventilation hole 135, a packing (not illustrated in the drawing) is provided thereto so that air does not leak on the way.

41 A, 41 B, and 41C are three circuit boards vertically installed within the component case 34 mutually with a predetermined interval, and are provided as only for the inverter circuit 210L of the left-side induction heat source 6L, only for the inverter circuit 210R of the right-side induction heat source 6R, and only for the inverter circuit 210M of the central induction heat source 6M, respectively.

The radiating fins 43A, 43B, and 43C with which a heat-generating electric or electronic component such as a semiconductor switching element for electric power or the like is attached, which make up an inverter circuit, are attached to the surfaces of the three circuit boards 41 A, 41 B, and 41C, respectively. These radiating fins are cooled by cooling air which flows from the interior of the component case 34 to the exhaust port 34A.

290 is a circular support member (coil support member) made of a high-temperature resin to which the heating coil 6RC of the right-side induction heat source 6R is attached. This support member is formed of a great number of ventilation holes so as expose the lower face of the heating coil 6RC from place to place, and is formed in a lattice shape so that the entirety has predetermined air permeability.

Space W10 of 30 mm or wider is secured between the outermost circumferential face of the heating coil 6RC and the right side face of the component storage room 10 of the main unit case 2. This space is for securing electrical insulation properties between the heating coil 6LC and the main unit case 2, and for preventing the main unit case 2 from being abnormally heated.

Fig. 40 illustrates a state in which an available largest heating target N is put above the heating coil 6RC of the right-side induction heat source 6R. DR1 indicates the outer dimension of the heating coil 6RC, DR2 indicates the diameter of the flat bottom of a metallic pan serving as the heating target N, and DR3 indicates the diameter of the body portion of the metallic pan thereof. In the case where the diameter DR1 of the heating coil 6RC is 180 mm for example, it is desirable that the diameter DR2 of the flat bottom of the metallic pan is 220 mm or less.

Fig. 40 is a state in which a metallic pan is used in which the diameter DR2 of the bottom face is 220 mm, and the diameter DR3 of the body portion is 240 mm, and this is assumed to be a largest heating target N to be suitably used at the time of induction heating in this heating cooker. With the top face of the top plate 21, as described in Embodiment 2, a guide mark 6RM is displayed in the same concentric circle as with the heating coil 6RC. Wit the right-side heating coil 6RC, the outer diameter DR1 is 180 mm, and accordingly, the diameter of the guide mark 6RM is generally the same as with the diameter DR3 of the body portion, becomes 240 mm.

Even in the case of employing the largest heating target N, the top plate 21 protrudes to the right side in the upper portion of the flange 2R so as to secure predetermined distance W22 up to the frame member 20. In other words, the top plate 21 extends around 90 to 95 mm in the right-side direction than the right wall of the component storage room 10, and accordingly, even in the case of employing the largest heating target N, the heating target N does not run on the frame member 20. If the high-temperature heating target N runs on the frame member 20, or becomes a state around thereto, for example, in the case where the heating target N is a pan into which high-temperature oil is put, there is concern that the heating target N heats the frame member 20 at high temperature, kitchen furniture therebelow (not illustrated in the drawing) such as a sink or the like is excessively heated, and trouble is induced such as causing deformation thereof.

Note that an arrangement is made in which part of cooling air has headed from the cooling unit CU to the heating coil 6RC branches in front of the coil 6RC thereof and is guided to the left-side induction heat source 6L by a duct (not illustrated in the drawing). An arrangement is made in which the air passed through the heating coil 6RC of the right-side induction heat source 6R is guided to the heating coil 6MC of the central induction heat source 6M by another duct (not illustrated in the drawing), and accordingly, the heating coil 6MC is also cooled.

In this manner, in the case where the cooling units CU are disposed below the component storage room 10, as with Embodiment 2 (in particular, see Fig. 18), there is an advantage in which the horizontal space of the component storage room 10 is not narrowed by installation of the cooling units CU. Specifically, the heating coils of the left and right induction heat sources 6L and 6R may be installed closer to the both side faces of the component storage room 10, and accordingly, the diameter of the heating coil 6LC of the left-side induction heat source 6R may be increased as compared to Embodiment 2.

Even if the diameter of the heating coil 6LC is not increased, when assuming a case where the size of the component storage room is the same as that in Embodiment 2, distances W12 and W5 for other heating coils 6MC and 6RC, or distances W7, W8, W9, and W10 for the wall face of the component storage room 10 may further greatly be secured. Unless such distances have been secured, there is concern that a metal portion which makes up the main unit A is improperly heated by the heating coils 6LC, 6MC, and 6RC, or one of the heating coils adversely affects on the operation of the other heating coil.

Note that, with actual products, the antimagnetic ring (see Fig. 27) as illustrated in Embodiment 2 is installed or the wide-area light-emitting unit 277 is installed in the outermost circumferential edge portion of the heating coils 6LC, 6MC, and 6RC, and accordingly, it is an advantage for providing design margin of a cooker to secure great distances W7, W8, W9, and W10 between the heating coils 6LC, 6MC, and 6RC and the wall face of the component storage room 10.

Reduction in size of the component storage room 10 may readily be realized by employing a switching element or diode element formed of wine band gap semiconductor as compared to the related art. Specifically, wine band gap semiconductor is also high in thermal resistance, and accordingly, reduction in size of the radiating fins 43A, 43B, and 43C may be realized, and consequently, installation space for the three circuit boards 41 A, 41 B, and 41C may be reduced, and the cooling units CU may be installed in the cooling space 134 of the main unit case 2.

Note that, of the circuit boards 41 A, 41 B, and 41C, it is desirable that both of various types of semiconductor elements and diode elements are formed of wine band gap semiconductor, but any one of the elements may be formed of wine band gap semiconductor, advantages as described above may be obtained.

In Fig. 38 and Fig. 39, KA indicates an angle made up of a straight line which connects the center point of the central induction heat source 6M and the center point X1 of the left-side induction heat source 6L, and a center line CL2 in the front-to-back direction, and is around 55 degrees.

KB indicates an angle made up of a straight line which connects the center point X2 of the right-side induction heat source 6R and the center point X1 of the left-side induction heat source 6L, and the center line CL2 in the front-to-back direction, and is around 85 degrees. KC1 indicates the arrangement angle of the sub heating coil SC2 of the left-side induction heat source 6L, and is 45 degrees with a lateral center line CL4 as a reference. KC2 is similarly the arrangement angle of the SC4, and is 45 degrees. The other two sub heating coils SC1 and SC3 are in a position apart from the lateral center line CL4 45 degrees each, and the four sub heating coils SC1 to SC4 are disposed around the main heating coil MC with a 90-degree interval.

W32 is an interval from the center point of the central induction heating unit 6M to the center point X2 of the right-side induction heat source 6R, and is around 193 mm.

W33 is an interval from the center point of the central induction heat source 6M to the center point X1 of the left-side induction heat source 6L, and is selected from a range of around 227 to 230 mm. Note that with regard to the diameter of the heating coil 6MC of the central induction heating unit 6M, one diameter is selected from a range of 128 mm to 130 mm.

With regard to the four sub heating coils SC1 to SC4 of the left-side induction heat source 6L, as illustrated in Fig. 40, the lateral width WA is 48 mm, and the dimension of a longer axis MW is 130 mm. That is to say, a ratio between the longer axis and the shorter axis is 2.7:1. Note that coil width W31 is 15 mm, and the width of a space portion 272 thereof is 18 mm. The main heating coil radius R1 of the left-side induction heat coil 6LC is 64 mm, and accordingly, outer diameter DA is 128 mm, width of space 271 is 10 mm, and the maximum outer diameter DB is 244 mm (see Fig. 40 and Fig. 41).

The induction heating cooker of Embodiment 3 has a configuration according to the first to fourth inventions. Therefore, the same advantages as with Embodiment 2 may be yielded. Further, with Embodiment 3, the cooling units CU are disposed below the component storage room 10, and accordingly, the entire space of the component storage room 10 may be maximally utilized as the installation space of the heating coils 6LC, 6MC, and 6RC.

### Embodiment 4

Fig. 43 to Fig. 44 illustrate an induction heating cooker according to Embodiment 4 of the present invention, Fig. 43 is a plan view of the main unit A in a state in which the top plate 21 has been removed, and Fig. 44 is an explanatory diagram illustrating a relation between the heating coil 6RCs of the right induction heat source 6R and the inverter circuits.

A feature point of Embodiment 4 is in that the arrangement angle of the sub heating coils SC of the left-side induction heat source 6L equivalent to the first induction heating unit is changed, and is moved 45 degrees counterclockwise from the arrangement in Embodiments 1 to 3. Therefore, the sub heating coil SC3 is, as illustrated in Fig. 42, moved to a right position directly from the center point X1, which is a position facing the left-side face of the right-side induction heat source 6R.

A feature point of Embodiment 4 is in that the heating coil 6RC of the right-side induction heat source 6R equivalent to the second induction heating unit comprises two portions of an inner-side toroidal coil 6RC1 as with the main heating coil, and an outer-side toroidal coil 6RC2 surrounding this outer side. However, this heating coil 6RC differs from the main heating coil MC of Embodiments 1 to 3, the two toroidal coils 6RC1 and 6RC2 are connected to the dedicated inverter circuits 210R1 and 210R2 respectively, and the two toroidal coils 6RC1 and 6RC2 are mutually independently driven in a heating operation. Therefore, for example, induction heating may be performed on a small-diameter (e.g., around 80 mm to 120 mm) heating target N by driving the inner-side toroidal coil 6RC1 alone.

Note that, though not illustrated in the drawing, with Embodiment 3, the lateral width W3 of the component storage room 10 is around 540 mm, and the lateral width W2 of the top plate 21 is around 730 mm. Therefore, in a state in which the upper portion of the component storage room 10 is covered with the top plate 21, the top plate 21 protrudes around 95 mm each from both sides of the component storage room 10.

Hereinafter, description will specifically be made. The maximum outer shape DG of the right-side heating coil 6RC is, as with Embodiment 3, 180 mm, and this is the outer diameter of the outer-side toroidal coil 6RC2.

The maximum outer shape DF of the inner-side toroidal coil 6RC1 is around 100 mm. The coil width of the inner-side toroidal coil 6RC is around 10 mm. With the left-side induction heat source 6L, the main heating coil radius R1 of the heating coil 6LC thereof is 65 mm, and accordingly, the outer diameter DA is 130 mm, the width of the space 271 between the main heating coil MC and the four sub heating coils SC1 to SC4 of the circumference thereof is 10 mm, and the maximum outer diameter DB is around 246 mm.

31 R is an infrared sensor for temperature detection as described in Embodiment 2, not only in a case where induction heating is performed on a small diameter heating target N which covers the upper portion of the inner-side toroidal coil 6RC1 alone but also in a case where induction heating is performed on a large diameter heating target N which covers up to the upper portion of the outer-side toroidal coil 6RC2, the bottom temperature of the heating target N is detected, and the temperature detected data is transmitted to a temperature detecting circuit (not illustrated in the drawing). Therefore, the temperature detected data of the infrared sensor 31 R is used for control operation such as increase, decrease, or stop of heating power at the time of induction heating.

With Embodiment 4, the configuration and size of the left-side induction heat source 6L are the same as with Embodiment 3, and also, the mutual distance and positions within the component room 10 of the three induction heat sources 6L, 6R, and 6M are set to generally the same as with Embodiment 3.

The maximum outer diameter of the heating coil 6MC of the central induction heat source 6M is 130 mm, and this is the same as the maximum outer diameter 130 mm of the main heating coil MC. The number and thickness and so forth of group wires which make up the heating coil 6MC thereof are set to the same as with the main heating coil MC.

When the heating coil 6MC of the central induction heat source 6M, and the main heating coil MC so as to have the same size, material, configuration, and so forth in this manner, there is a merit that this is advantageous for manufacturing cost and in respect of management.

100 is integrated display means, which includes a liquid crystal screen where the operation of the three induction heat sources 6L, 6R, and 6M, cooking conditions set by the user, abnormal contents at the time of occurrence of abnormality, and so forth are displayed with characters, symbols, simple symbols, or the like. With the liquid crystal screen, a ratio between the width in the front-to-back direction (vertical width) and lateral width is either of 42 mm : 80 mm or 44 mm : 122 mm. In order to install such a relatively great screen, the mutual distance W5 of the left and right induction heat sources 6L and 6R is secured at least 100 mm or more. Further, it is taken into consideration that there are fittings such as an antimagnetic ring and so forth on the outermost sides of the left and right heating coils 6LC and 6RC, the liquid crystal screen has been installed in space positioned between the left and right heating coils 6LC and 6RC and also close to the front side (top-face operating unit 72).

Note that the rear edge of the liquid crystal screen is positioned more backward than a straight line which connects the front edges of the left and right heating coils 6LC and 6RC. As illustrated in Fig. 42, a rear position from generally a half of the liquid crystal screen protrudes more backward than the straight line of the left and right heating coils 6LC and 6RC.

Accordingly, with Embodiment 4, the liquid crystal screen of the integrated display means 100 is installed between the two induction heat sources 6L and 6R and also in a position on the front side, which is advantageous in that when the user operates the top-face operating units 70, 71, and 72, the liquid crystal screen allows the user to visually confirm cooking conditions, abnormal contents, and so forth with ease.

122 is a high-temperature informing unit configured to display that the temperature of the top plate 21 is equal to or higher than predetermined temperature using multiple light-emitting elements such as LEDs or the like. 123 is a component support plate made of plastics similar to the front component case 46 according to Embodiment 2, and the liquid crystal screen of the integrated display means 100, and electronic components such as the light-emitting elements of the high-temperature informing unit 122 and so forth are attached onto this support plate.

3R and 3L are, as illustrated in Embodiment 1 (Fig. 2) and Embodiment 2 (Fig. 12), flange portions of the main unit case 2 which makes up the shell of the main unit A, and greatly protrude in the left and right several centimeters each, and these portions support the main unit A of the cooker against the cooking furniture KT.

The induction heating cooker of Embodiment 4 also has a configuration according to the first to fourth inventions. Accordingly, the same advantages as those in Embodiments 2 and 3 may be yielded.

The induction heating cooker according to Embodiment 4 includes the configuration of the fifth invention. Specifically, the induction heating cooker according to Embodiment 4 includes: a main unit A having a top plate 21 with a predetermined lateral width W2 where a heating target N such as a pan into which a cooking target is put, or the like is placed, on the top face; a first induction heating unit 6L and a second induction heating unit 6R which are adjacently disposed below the top plate 21; inverter circuit 210L and 210R configured to supply induction heating electric power to induction heating coils 6LC and 6RC of the induction heating units; a controller 200 configured to control output of the inverter circuits; and operating units E and 61 configured to instruct this controller to start heating and perform setting of heating power, and so forth; with an oblong rectangular storage space 10 configured to store the induction heating coils 6LC and 6RC of the first and second induction heating units 6L and 6R being provided to the inner portion of the main unit A below the top plate 21; with the first heating unit 6L including a circular central (main heating) coil MC, and multiple elongated lateral (sub heating) coils SC1 to SC4 disposed therearound; with a circular heating coil 6RC2 of the second induction heating unit 6R having a diameter smaller than the diameter DB (around 200 mm) of the first induction heating unit 6L and also greater (180 mm) than the outer diameter (around 130 mm) of the central coil; with the first induction heating unit 6L being configured to automatically or manually switch induction heating at the central (main heating) coil alone, and cooperative heating of the central (main heating) coil and the lateral (sub heating) coils according to the size of the heating target N; and with the lateral width W2 of the top plate 21 being set greater than the maximum lateral width W3 of the storage space so as to protrude in the horizontal directions (around 95 mm) longer than the lateral width W3 of the storage space 10. Thus, even with the storage space 10 of the limited lateral width, on the top plate 21 protruding in both sides as compared thereto, there may be selected three types of heating of the central coil alone, cooperative heating of the central coil and side coils, and the second induction heating unit alone, a wider heating portion than a conventional two-burner type cooker simply having two types of circular heating coils may be handled, and user-friendliness may be improved.

Further, the induction heating cooker according to Embodiment 4 includes the configuration of a sixth invention. Specifically, the induction heating cooker according to Embodiment 4 includes: a main unit A having a top plate 1 where a heating target N such as a pan into which a cooking target is put, or the like is placed, on the top face; a first induction heating unit 6L, a second induction heating unit 6R, and a third induction heating unit 6M which are adjacently disposed below the top plate 21; inverter circuits 210L, 210R, and 210M configured to supply induction heating electric power to the induction heating coils of the induction heating units; a controller 200 configured to control output of the inverter circuits; and operating units E and 61 configured to instruct this controller to start heating and perform setting of heating power, and so forth; with an oblong rectangular storage space 10 configured to store the induction heating coils 6LC, 6RC, and 6MC of the first, second, and third heating units being provided to the inner portion of the main unit A below the top plate; with the first heating unit 6R including a circular central coil (main heating coil) MC, and multiple elongated lateral (sub heating) coils SC1 to SC4 disposed therearound; with the second heating unit 6R including a circular coil 6RC2 having a diameter smaller than the diameter DB (around 200 mm) of the first heating unit 6L and also greater (DG: 180 mm) than the outer diameter DA (130 mm) of the central coil; with the heating coil 6MC of the third heating unit having the same outer diameter (130mm as DA) as with the central coil MC of the first heating unit; with the heating coil 6MC having a smaller diameter (130 mm) than the outer diameter DG (180 mm) of the heating coil of the second heating unit; and with the first heating unit 6L being configured to automatically or manually switch induction heating at the central coil MC alone, and cooperative heating of the central coil MC and the side coils SC1 to SC4 according to the size of a heating target N. Thus, there may be selected four types of heating of the central coil MC alone, cooperative heating of the central coil MC and side coils SC1 to SC4, the second induction heating unit 6R alone, and the third induction heating unit 6M alone on the top plate 21 having a limited area, a wider heating portion than a conventional two-burner type cooker simply having three types of circular heating coils may be handled, and user-friendliness may be improved. The size (diameter) of the heating coil 6MC of the third heating unit 6M is set equal (130 mm) to the central coil MC of the first heating unit 6R, and accordingly, coils having a different outer diameter do not have to be increased in vain, which is advantageous for manufacturing costs and in respect of management, and also for suppression of manufacturing costs.

According to this Embodiment 4, the heating coil 6RC of the right-side induction heat source 6R equivalent to the second induction heating unit comprises two portions of an inner-side toroidal coil 6RC1 with an outer diameter of 100 mm, and an outer-side toroidal coil 6RC2 with an outer diameter of 180 mm surrounding this outer side, and also, a high-frequency current is individually supplied to this heating coils 6RC from the inverter circuits 210R1 and 210R2 respectively, and the two toroidal coils 6RC1 and 6RC2 are mutually independently driven in a heating operation. Therefore, for example, induction heating may be performed on a small-diameter (e.g., around 80 mm to 120 mm) heating target N by driving the inner-side toroidal coil 6RC1 alone, and on the other hand, a greater-diameter, for example, an around 200-mm heating target N may be heated by simultaneously driving (or alternately rapidly energizing) the outer-side toroidal coil 6RC2 and inner-side toroidal coil 6RC1.

Further, with the left-side induction heat source 6R, according to the main heating coil MC alone or cooperative heating of the main heating coil MC and any one or all of the four sub heating coils SC1 to SC4, induction heating may be performed, and moreover, the left-side induction heat source 6L has the largest outer diameter greater than the outer-side toroidal coil 6RC2 of the right-side heating coil 6RC, and accordingly, with the left-side induction heat source 6R, a greater-diameter (e.g., 240 mm) heating target N which may not be handled at the right-side heating coil 6RC may be handled, and two or more heating targets N with a different diameter may be heated, and accordingly, an induction heating cooker which handles multiple types of pans having different diameters or different shapes may be provided by selective use of the left-side induction heat source 6R and right-side induction heat source 6R.

### Embodiment 5

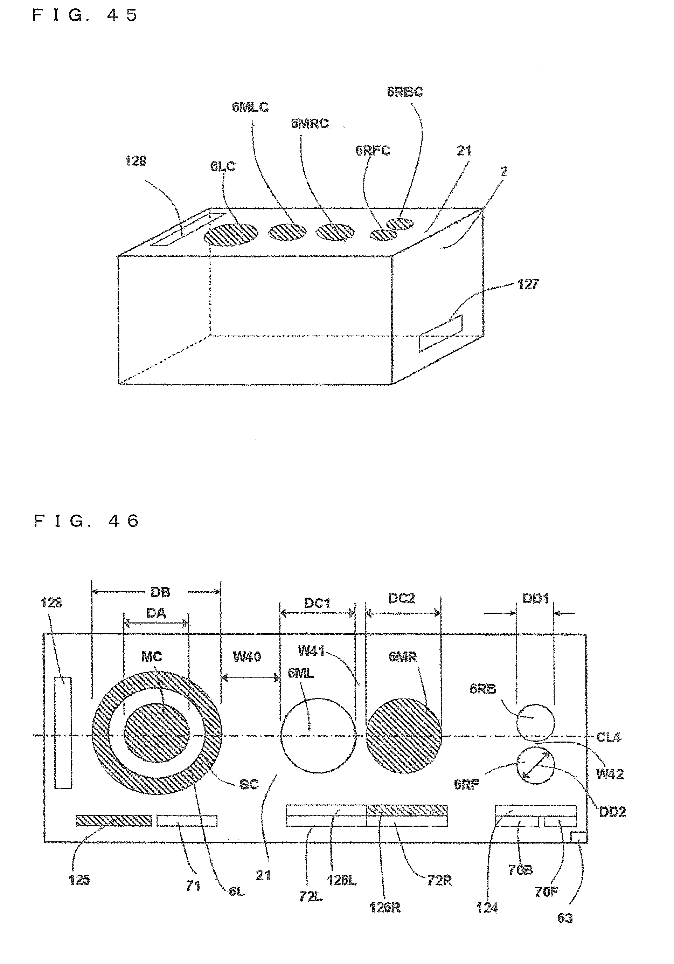

Fig. 45 to Fig. 49 illustrate an induction heating cooker according to Embodiment 5 of the present invention, and relates to a cooker of a type also referred to as "island-type kitchen".

Fig. 45 is a simplified perspective view of the whole of the cooker, and Fig. 46 is a plan view where the whole of the top plate is viewed from above.

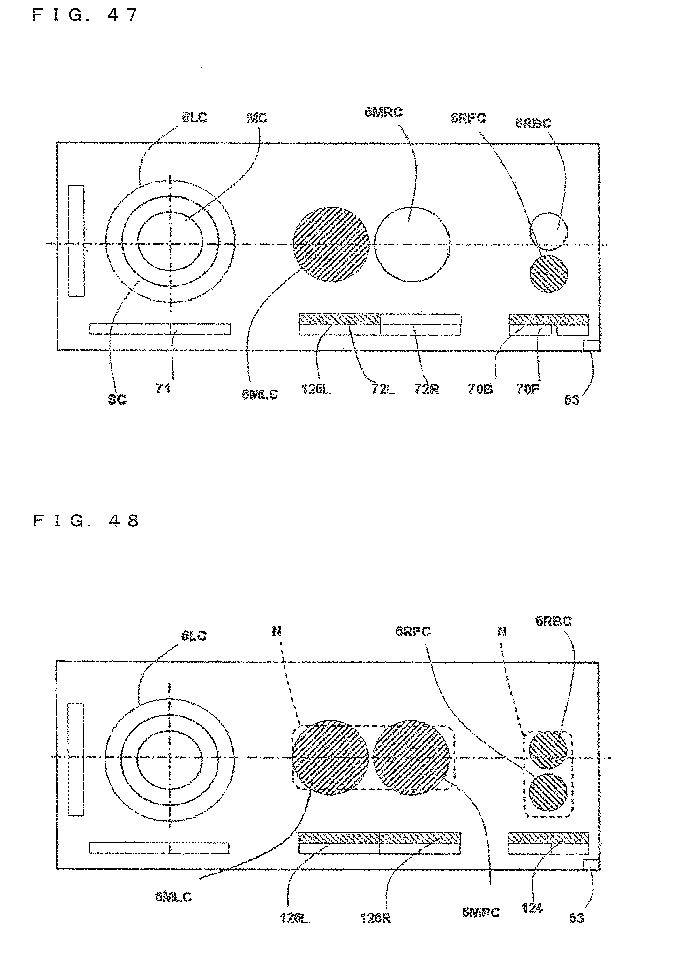

Fig. 47 is a plan view illustrating an example of induction heating operation.

Fig. 48 is a plan view illustrating another example of induction heating operation.

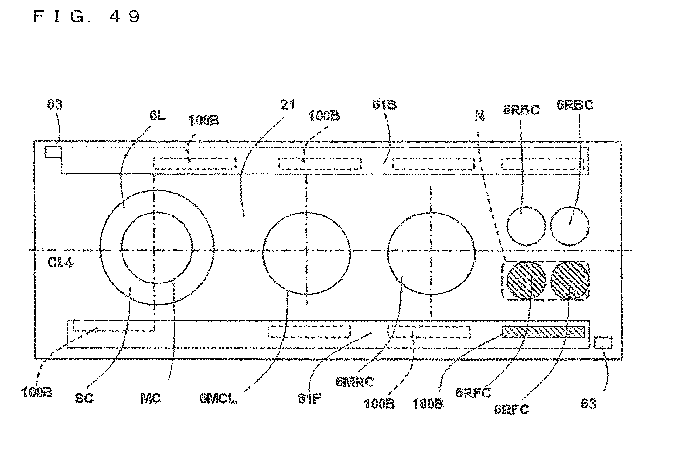

Fig. 49 illustrates a modification of an operating unit and a display unit, and is a plan view where the whole of the top plate is viewed from above. Note that, of island-type kitchens, there is a type where kitchen furniture such as a sink including a faucet, or the like is provided together, but with this Embodiment 5, an example in which an induction heating cooker alone is provided is illustrated.

A feature point of this Embodiment 5 is in that, as with the left-side induction heat source 6L equivalent to the first induction heating unit, cooperative heating driving may be performed on two or more heating coils also adjacent to another induction heating unit.

As may be apparent from Fig. 46 to Fig. 48, with this Embodiment 5, there is provided an induction heating cooker also called island-type kitchen, including five induction heating units in total, which is an induction heating cooker having five burners.

This type of cooker is a cooker which is independently installed such as literally "island" in the center of a kitchen, where the user may face the ten plate 21 not only from the front side but also from the opposite side, the main unit case 2 thereof is further laterally long as compared to a built-in type illustrated in Embodiments 1 to 4, and accordingly, three or more heating units may be installed. The lateral width of the main unit case 2 is around 700 mm to 800 mm, and the front-to-back width (depth) is around 500 mm, but in order to secure space where a pan or the like is temporarily put by increasing the width of the top plate 21, the depth dimension may further be increased.

In Fig. 46 to Fig. 48, 21 is a top plate which covers the entire top face of the main unit case 2, and five induction heat sources 6L, 6ML, 6MR, 6RB, and 6RF are provided therebelow so that the diameters thereof becomes smaller sequentially from the left side to the right. Of the heating coils of the five induction heat sources, the leftmost side is the heating coil 6LC of the induction heat source 6L, two middle-sized heating coils 6MLC and 6MRC of which the diameters are smaller than that of the heating coil 6LC, and two small-sized heating coils 6RBC and 6RFC of which the diameters are smaller than those of the heating coils 6MLC and 6MRC.

The left-side heat source 6L includes a main heating coil MC alone, and four sub heating coils SC1 to SC4 disposed around this main heating coil MC with a predetermined interval, and may perform heating by the main heating coil MC alone, and cooperative heating.

In Fig. 45, W40 is a distance between the left-side induction heat source 6L and the middle-sized heating coil 6ML right-adjacent thereto.

The two middle-sized heating coils 6MLC and 6MRC are configured so as to mutually independently perform heating and driving, and also so as to perform cooperative heating on the one heating target N at the same time. Therefore, these two heating coils 6MLC and 6MRC are arrayed in near positions as much as possible. In Fig. 46, W41 is a distance between the two heating coils 6MLC and 6MRC.

The rightmost-side two small-sized heating coils 6RBC and 6RFC of the induction heat source 6R are also configured so as to mutually independently perform heating and driving, and also so as to perform cooperative heating on the one heating target N at the same time. Therefore, these two heating coils 6RBC and 6RFC are arrayed in near positions as much as possible. In Fig. 46, W42 is a distance between the two heating coils 6RBC and 6RFC.

The diameter and distance of each heating coil is as follows.
Diameter DB of heating coil 6LC of left-side induction heat source 6L: 260 mm
Diameter DA of main heating coil MC: 150 mm
Diameter DC1 of middle-sized heating coil 6MLC of central-left-side induction heating unit 6ML: 180 mm
Diameter DC2 of middle-sized heating coil 6MRC of central-right-side induction heating unit 6MR: 180 mm
Diameter DD1 of small-sized coil 6RFC of front-side induction heating unit 6RF: 100 mm
Diameter DD2 of small-sized coil 6MBC of deep-side induction heating unit 6RB: 100 mm
W40: 100 mm
W41: 30 mm
W42: 20 mm

63 is a main power switch, 70, 71, and 72 are upper-face operating units, 70F is an operating unit of the right-side induction heating coil 6RCF, 70B is an operating unit (right operating unit) of the right-side induction heating coil 6RCB, 71 is an operating unit (left operating unit) of the left-side induction heating coil 6LC, 72L is an operating unit (central operating unit) of the middle-sized induction heating coil 6MLC, and 72R is an operating unit (central operating unit) of the middle-sized induction heating coil 6MRC.

124 is a display unit for common use of the operating units 70B and 70F of the right-side induction heating coil 6RFC, which comprises a liquid crystal screen.

125 is a display unit for the operating unit 71 of the left-side induction heating coil 6LC, which comprises a liquid crystal screen. 126L is a display unit for the operating unit 72L of the middle-sized induction heating coil 6MLC, which comprises a liquid crystal screen. 126R is a display unit for the operating unit 72R of the middle-sized induction heating coil 6MRC, which comprises a liquid crystal screen.

127 is an air inlet provided to the right-side face of the main unit case 2, and 128 is an exhaust port provided to the left edge portion of the top plate 21. With internal space of the main unit case 2, a blowing device (not illustrated in the drawing) which introduce indoor air from the air inlet 127 is installed, and according to the introduced air, the five induction heat sources 6L, 6ML, 6MR, 6RB, and 6RF and an inverter circuit board thereof are cooled, and is discharged from the exhaust port.

According to the induction heating cooker thus configured, as illustrated in Fig. 46 to Fig. 48, first, in order to use one of the induction heat sources 6L, 6ML, 6MR, 6RB, and 6RF, upon the main power switch 63 being turned on, all of the operating units 70B, 70F, 71, 72R, and 72L are irradiated by a light source (not illustrated in the drawing) positioned below the top plate 21, and an operating key group is displayed. Therefore, upon a desired operating key being touched, according to the operation thereof, any one of the display units 124, 125, 126R, and 126L positioned adjacent to the particular operating key thereof is irradiated by backlight, display operation is started. For example, upon the operating unit 72R being operated, only the backlight of the display 126 is turned on. Upon operations being further performed, the operation results thereof are displayed on the display unit each time, and necessary information is displayed. Upon a heating start command being provided from the user, the energizing control circuit 200 performs heating drive on a particular heat source. Note that, in Fig. 46 to Fig. 48, a hatched portion indicates a state in which heating drive or display operation is being performed. In the case where the corresponding heat source has not been heating-driven, and a certain period of time has elapsed since the backlight was turned on, the display units 124, 125, 126R, and 126L automatically turns off the backlight, and automatically returns to a state in which nothing is displayed.

In the case where a pan (heating target) N is a large pan of which the bottom shape is a rectangle or ellipse or the like, in the same way as with the induction heating unit 6L illustrated in Embodiments 1 to 4, with this Embodiment 5 as well, at the left-side induction heating unit 6L, the main heating coil MC and one or more sub heating coils SC1 to SC4 are combined, and cooking may be performed by cooperative heating of these.

Further, with this Embodiment 5, as illustrated in Fig. 48, in the case of a deformed heating target N of which the diameter is larger than the diameter of the left-side induction heating unit 6L, this may be handled by performing cooperative heating drive on the adjacent two middle-sized heating coils 6MLC and 6MRC. Conversely, in the case of employing a heating target N of which the diameter is smaller than the diameter of the main heating coil MC, this may be handled by performing cooperative heating drive on the adjacent two small-sized heating coils 6RBC and 6RFC. Of course, in the case of a heating target N having a circular bottom, this may be handled, according to the size thereof, by performing heating drive on any one of the two middle-sized heating coils 6MLC and 6MRC, or by performing heating drive on any one of the two small-sized heating coils 6RBC and 6RFC.

That is to say, with this Embodiment 5, as compared to Embodiments 1 to 4 described above, cooking may be performed on further many kinds of sized and shaped heating targets N, convenience further improves.

Fig. 49 illustrates a modification of the operating unit and display unit of the induction heating cooker according to Embodiment 5 of the present invention. In this Fig. 49, the top-face operating unit 61 comprises a top-face operating unit 61 F on the front side, and a top-face operating unit 61 B on the opposite side (rear side). With such an operating unit, the entire surface is covered with a glass plate (may be top plate 21 itself) which does not transmit visible rays, and multiple touch-type input keys with an electrostatic capacity method are disposed on the surface thereof. After turning on the main power switch 63, upon the user touching the front of a desired induction heat source, an input key necessary for the next input operation is irradiated by light and is displayed in a visible form in the vicinity thereof. Simultaneously therewith, liquid crystal display screens 100B also appears in the vicinity thereof. Thus, sense to perform operation after confirming the position of an input key at the time of use is not necessary, the use may easily perform operations. The same operating unit and display unit also appear on the opposite side, and accordingly, convenience further improves as an island-type cooker.

Note that the four liquid crystal display screen 100B of vertically around 50 mm horizontally around 100 to 120 mm are arrayed in a serial state with a predetermined interval beside the top-face operating unit 61 F and rear-side top-face operating unit 61 B. Here, the four liquid crystal screens having the same specifications are employed, and reduction in costs is realized by standardizing the four liquid crystal screens and enabling these to be converted into modules.

Note that the modification in Fig. 49 is configured to handle a case where four small-sized heating coils are installed, a heating target is put horizontally long, and cooperative heating is performed (as illustrated in Fig. 49), a case where a heating target is put vertically long, and cooperative heating is performed, and further, a case where heating drive is performed on the four at the same time to heat one pan or the like.

As described above, the induction heating cooker of Embodiment 5 also has the configuration according to the first invention. Therefore, the same advantages as advantages of Embodiment 1 may be yielded. Further, with Embodiment 5, cooking may be performed corresponding to further various kinds of sized and shaped heating targets, and convenience may further be improved.

With Embodiments 1 to 5 described above, the total number of sub heating coils which make up the sub heating coil group SC1 to SC4, and the total number of the sub inverter circuits SVI1 to SIV4 configured to supply high-frequency current thereto are both four, the same number, but the present invention is not restricted to this.

An arrangement may be made in which the first sub inverter circuit SIV1 drives the first heating coil SC1 and fourth sub heating coil SC4, and also, the second sub inverter circuit SIV2 drives the third heating coil SC3 and second sub heating coil SC2.

In this case, it is desirable for reducing unnecessary magnetic leakage and improving heating efficiency that the first sub inverter circuit SIV1 does not drive the first heating coil SC1 and fourth sub heating coil SC4 at the same time, but drives either one thereof, and also, the second sub inverter circuit SIV2 does not drive the third heating coil SC3 and second sub heating coil SC2 at the same time, but drives either one thereof.

According to such a configuration, the number of expensive inverter circuits may be reduced, and accordingly, costs may be reduced, and also, the circuit board installation volume may be reduced as advantages. In reality, as with the example in Fig. 19, in the case where the four sub heating coils SC1 to SC4 are disposed, in the case where the user cooks using a non-circular pan such as an oval or ellipse shape, when the pan is put horizontally long in the front, this may be handled by driving the first heating coil SC1 and second sub heating coil SC2 positioned in the front side thereof with the center point X1 as a boundary, and when the pan is put to the left side from the center point X1 so as to become long in the front-to-back direction, this may be handed by driving the second heating coil SC2 and rear fourth sub heating coil SC4, and when the pan is put to the right side from the center point X1 so as to become long in the front-to-back direction, this may be handed by driving the first heating coil SC1 and third sub heating coil SC3, and accordingly, either of these three patterns may be handled without any obstructions by switching one sub inverter circuit, and selectively using either one of one group (two) of sub heating coils.

Note that, in this manner, in the case of using two sub heating coils by being switched by one common inverter circuit, when the connection destination of one common inverter circuit is switched according to a temporal condition, for example, connection is alternately switched from one of the sub heating coil to the other sub heating coil for a short time interval, and consequently, the two sub heating coils may be driven, for example, when two sub inverter circuits are used to drive two sub heating coils at a time, the four sub heating coils in total may be used for cooking. Accordingly, in the case of providing five or more sub heating coils, the number of sub inverter circuits may be suppressed to the minimum according to this way of thinking.

In this manner, in the case of using two sub heating coils serving as double purpose by one common sub inverter circuit at the same time, for example, in the case of a full bride circuit, as illustrated in Fig. 24, it is sufficient for the sub heating coil SC3 to be connected (to the SC1 in serial or in parallel) within a series resonant circuit made up of the sub heating coil SC1 and resonant capacitor 110B. Thus, even when the SC1 and SC3 are driven at the same time, substantial difference does not occur on the driving frequency, and accordingly, beats sound does not occur.

When the connection destination of one common inverter circuit is switched according to a temporal condition, for example, connection is alternately switched from one of the sub heating coil to the other sub heating coil for a short time interval, and consequently, the two sub heating coils may be driven, for example, when two sub inverter circuits are used to drive two sub heating coils at a time, the four sub heating coils in total may be used for cooking. Accordingly, in the case of providing five or more sub heating coils, the number of sub inverter circuits may be suppressed to the minimum according to this way of thinking.

Further, as described in detail in Embodiment 1, a control method for heating-driving adjacent two sub heating coils at the same time may also be realized by a method for driving non-adjacent two sub heating coils using one inverter circuit as described above. That is to say, the convection promotion mode illustrated in Embodiment 1 may be executed.

In the case of implementing control in which energizing for the first sub heating coil and for the second sub heating coil is sequentially switched or driving these in an intermittent manner, the user is not informed of what kind of induction heating is being performed, and may have a sense of uncertainty, and in the case where the convection promotion function as described above is being exhibited, it is further desirable that the current situation is displayed in real time on the integrated display means 100 or liquid crystal display screens 45R and 45L as described above using characters and symbols or the like.

Further, with Embodiment 2, there have been provided seven keys of a selection key E1A for high-speed heating, a selection key E1B for water heater, a selection key E1C for boiling, a selection key E2A for preheating, a rice-cooking selection key E2B, and so forth, but it is assumed that the user has selected such a cooking menu, convection promotion control may not be implemented at suitable timing. Therefore, it is desirable that a selection key of cooking recipe necessary for convection promotion control is prepared, and the user selects this key as needed. For example, with regard to a key of curry as one cooking recipe, convection hardly occurs due to thick fluid, and the bottom of a pan may readily be burned. Curry has conventionally been cooked by a method of adding curry roux after vegetables fully boil, and after putting in the curry roux, stopping induction heating or boiling by driving the induction heating coil with the minimum heating power.

Therefore, in the case where the user has selected the selection key of "Curry" before or immediately after start of cooking, or on the way, it is desirable to prompt the user to implement convection promotion control of the present invention when putting in curry roux. Specifically, as illustrated in Fig. 28 in Embodiment 2, there may be conceived a method for performing display to prompt the user to press the convection promotion control selection switch 350 using the guide area 100GD of the integrated display means 100 which informs the user of reference information in various types of cooking, or announcing this using the audio synthesizer 315. In the case where the convection promotion control selection switch 350 has been selected, change in energizing conditions for the sub heating coils SC and main heating coil M, and so forth are automatically performed at the energizing control circuit 200, determination regarding whether or not this is suitable timing such as after boiling or the like is automatically performed at the energizing control circuit 200, and in the case of suitable timing, convection promotion heating is continuously performed.

With the heating cooker described in Embodiment 1, the rated minimum heating power of the left-side induction heat source 6L and the rated minimum heating power of right-side induction heat source 6R are both 150 W, but in this manner, in the case where there are multiple induction heat sources, it is advantageous for improving ease-of-use of a cooker to standardize the minimum heating power. For example, in the case where rated maximum heating power is, as with Embodiment 1, set to 3000 W for both of the left-side induction heat source 6L and right-side induction heat source 6R, there is a merit in that water heating or the like may rapidly be performed, and for foods to be boiled, the process up to boiling may be finished in a short time, but in the case where there are ingredients such as vegetables or meat within cooking liquid, and a delicious dish may be obtained by being gradually boiled, the pan is heated for long time by reducing heating power, but in this case, in the case where there is a disadvantage for the next cooking when putting the pan above the heating unit without change, the pan has to be moved to an adjacent induction heating unit. In this case, when the heat is changed at a heating unit serving as the move destination, the expected cooking may not be realized, and accordingly, as with Embodiment 1, in the case where heating power may be set in multiple stages, the same heating power level is set to two heat sources, and further the minimum heating power is set to both, which is advantageous to the user setting heating power after moving the pan.

The induction heating cooker according to the present invention includes multiple heating units where a first induction heating unit and a second induction heating unit are disposed on the lower space of a top plate in a row, and may heat three or more pans having different diameters, and may widely be applied to a stationary type, built-in type, other type induction heating method heat source dedicated cooker, and a compound type induction heating cooker with another radiation type heat source, and so forth.

### Reference Signs List

A main unit, B top plate, C casing, D heating means, E operating means, F control means, G display means, W1 lateral width of main unit A, W2 lateral width of top plate, W3 lateral width of component storage room, AM active mark, CL, CL1 lateral center line of main unit A, CL2 lateral center line of left-side induction heat source, CL3 lateral center line of right-side induction heat source, CL4 lateral center line of main unit A, CU cooling unit, DA left-side coil outer diameter, DB arrangement outer diameter of sub heating coil, DC maximum outer diameter of wide-area display member, DF outer diameter of inner-side heating coil of right-side induction heating unit, DG outer diameter of outer-side heating coil of right-side induction heating unit, DR1 diameter of heating coil, DR2 bottom diameter of metal pan, DR3 body diameter of metal pan, R1 radius of main heating coil of left-side induction heating unit, R2 radius of heating coil of right-side induction heating unit, R3 radius of entire heating coil of left-side induction heating unit, E1A selection key for high-speed heating, E1B selection key for water heater, E1C boiling selection key, E2A selection key for preheating, E2B rice-cooking selection key, E3A deep-fry selection key, E3B selection key of water heater + hot-keep, FH1 left flange protrusion dimension of main unit case, FH2 right flange protrusion dimension of main unit case, KA arrangement angle, KB arrangement angle, KC arrangement angle, KC1 arrangement angle, KC2 arrangement angle, KT cooking furniture, K1 installation opening, KTK opening, N heating target (pan), SC sub heating coil (group), SC1 to SC4 sub heating coil, MC main heating coil, MIV inverter circuit for main heating coil, SIV1 to SIV4 inverter circuit for sub heating coil, SX space, STC central light-emitting unit (main heating coil light-emitting unit), W5 distance of heating coil of left and right induction heating unit, W7 to W10 space distance from heating coil to component storage room inner wall face, W12 distance between heating coil of left-side induction heating unit and heating coil of central induction heating unit, X1 center point, X2 center point, 2 main unit case, 2A body portion, 2B front flange plate, 2S inclined portion, 2U body portion rear face wall, 3B rear flange, 3L left-side flange, 3R right-side flange, 6L left-side induction heat source, 6LC left-side induction heating coil, 6LM guide mark, 6M central induction heat source, 6R right-side induction heat source, 6RC right-side heating coil, 6RC1 inner-side toroidal coil, 6RC2 outer-side toroidal coil, 6RM guide mark, 7 radiation type central electric heat source (heater), 7M guide mark, 8L left-side cooling room, 8R right-side cooling room, 9 grille heating room, 9A front face opening, 9B rear face opening, 9C inner frame, 9D outer frame, 9E exhaust port, 10 upper component room (storage space, component storage room), 12 rear exhaust room, 13 door, 13A central opening, 13B knob, 14 exhaust duct, 14A upper edge opening, 14B cylindrical bottom, 14C ventilation hole, 20 upper frame (frame member), 20B right-mouth ventilation, 20C center-mouth ventilation, 20D left-mouth ventilation, 21 top plate, 22 radiation type electric heat source (heater), 23 radiation type electric heat source (heater), 24A notched portion, 24L left-side vertical partition plate, 24R right-side vertical partition plate, 25 horizontal partition plate, 26 gap, 28 rear partition plate, 28A exhaust port, 30 blowing device, 30F wing portion, 31 R infrared sensor, 31L, 31 L1 to 31 L5 infrared sensor, 32 rotation axis, 33 motor driving circuit, 34 component case, 34A first exhaust port, 34B second exhaust port, 37 fan case, 37A suction cylinder, 37B air inlet, 37C exhaust port (exit), 37D case, 37E case, 39 blowing room, 41 circuit board, 42 cooling duct, 42A upper case, 42B lower case, 42C nozzle hole, 42D partition wall, 42E partition wall, 42F ventilation space, 42G ventilation space, 42H ventilation space, 42J communication port (hole), 42K ventilation port, 43A radiating fin, 43B radiating fin, 45R liquid crystal display screen, 45L liquid crystal display screen, 46 front component case, 46A lower duct, 46B upper duct, 46C notch, 50 container cover, 56 attachment board, 57 electric and electronic component, 60 front-face operating unit, 61 top-face operating unit, 62L left-side front-face operating frame, 62R right-side front-face operating frame, 63 main power switch, 63A operating button, 64R right operating dial, 64L left operating dial, 66R right indicator light, 66L left indicator light, 70 operating unit for setting of right heating power, 71 operating unit for setting of left heating power, 72 central operating unit, 73 magnetic flux leakage prevention material, 75 AC power source, 76 rectifier circuit, 77A switching element, 77B switching element, 78A switching element, 78B switching element, 79A switching element, 79B switching element, 80 DC power supply unit, 81A switching element, 82B switching element, 86 smoothing capacitor, 88A switching element, 89A switching element, 90 one-touch setting key unit, 91 low heating power key, 92 middle heating power key, 93 high heating power key, 94 key for 3 kW, 95 operating button for radiation type electric heat sources 22, 23 96 operating button for stop operating switch, 97A operating button for temperature adjustment switch, 97B operating button for temperature adjustment switch, 98 power on/off switch button, 99A setting switch, 99B setting switch, 100 integrated display means, 100L1 corresponding area of left IH heat source 6L, 100L2 corresponding area of left IH heat source 6L, 100M1 corresponding area of radiation type central electric heat source 7, 100M2 corresponding area of radiation type central electric heat source 7, 100R1 corresponding area of right IH heat source 6R, 100R2 corresponding area of right IH heat source 6R, 100G area for cooking of grille heating room 9, 100GD guide area, 100F key display area, 100N optional display area, 100LX display unit, 101 R right heating power display lamp, 101 L left heating power display lamp, 102B switching element, 103B switching element, 104B switching element, 105B switching element, 106 blowing device, 106A rotary wing, 106B driving motor, 108 pan, 109 metallic gridiron, 110A resonant capacitor, 110B resonant capacitor, 113 gap, 114 gap, 115 gap, 116 gap, 121 catalyst for deodorization, 121 H catalyst electric heater, 124 display unit for common use, 125 display unit for left operating unit, 126L display unit for left operating unit of central heating coil, 126R display unit for right operating unit of central heating coil, 130 convenient menu key, 131 R right IH convenient menu button, 132 cover, 133 partition plate, 134 cooling space, 135 ventilation hole, 141 input key, 142 input key, 143 input key, 144 input key, 145 input key, 146 input key, 200 energizing control circuit, 201 input unit, 202 output unit, 203 storage unit, 204 arithmetic controller (CPU), 210R right IH heat source inverter circuit, 210L left IH heat source inverter circuit, 210M central induction heat source 6M inverter circuit, 212 heater driving circuit for driving radiation type electric heat source for heating of grille heating room 9, 213 heater driving circuit for driving radiation type electric heat source 23 for heating of internal temperature of grille heating room 9, 214 heater driving circuit for driving catalyst heater 121 H, 215 liquid crystal screen driving circuit of integrated display means 100, 221 rectifier bridge circuit, 222 coil, 223 smoothing capacitor, 224 resonant capacitor, 225 switching means (IGBT), 226 flywheel diode, 227 current detecting sensor, 228 driving circuit, 228A driving circuit, 228B driving circuit, 231 driving circuit, 240 temperature detecting circuit, 241 temperature detecting element (temperature sensor), 242 temperature detecting element (internal temperature sensor), 243 temperature detecting element (temperature sensor), 244 temperature detecting element (temperature sensor), 245 temperature detecting element (temperature sensor), 250 pan dedicated key, 251 compound cooking key, 260 to 264 driving circuit, 267A current sensor, 267B current sensor, 267C current sensor, 267D current sensor, 270 to 275 space, 276 individual light-emitting unit, 277 wide-area light-emitting unit, 278 driving circuit, 280 heating target placement determining unit, 290 coil support member, 290A protrusion for support, 290Y coil support member, 291 antimagnetic ring, 300 driving motor, 307 gap, 310 through hole, 311 main heating coil figure, 312 sub heating coil figure, 313L left-side display unit, 313M central display unit, 313R right-side display unit, 314 display window, 315 audio synthesizer, 316 speaker

## Claims

1. An induction heating cooker comprising:
a main unit (A) having, on a top face thereof, a top plate (21) on which a heating target (N) such as a pan into which a cooking target is put, is placed;
a first induction heating unit and a second induction heating unit which are adjacently disposed below the top plate (21);
an inverter circuit (MIV, SIV1-SIV4) configured to supply induction heating electric power to an induction heating coil of each of the induction heating units;
a controller (F) configured to control output of the inverter circuit (MIV, SIV1-SIV4); and
an operating unit (60) configured to instruct the controller (F) to start heating or perform setting of heating power, and so forth;
wherein an oblong rectangular storage space configured to store the respective induction heating coils of the first and second heating units is provided inside the main unit (A) below the top plate (21);
and wherein the first heating unit includes
a circular central heating coil (MC), and
a plurality of elongated side heating coils (SC1-SC4) disposed around the central heating coil (MC);
and wherein the second heating unit includes
a circular heating coil (6RC) having a diameter smaller than a diameter of the first heating unit and greater than an outer diameter of the central heating coil (MC);
and wherein the first heating unit is configured to allow automatic or manual switching of its operation between induction heating by the central heating coil (MC) alone, and cooperative heating by the central heating coil (MC) and the side heating coils, depending on a size of the heating target (N);
and wherein the side heating coils (SC1-SC4) of the first induction heating unit includes four or more sub heating coils each having a flat shape, disposed close to both sides of the central heating coil (MC) and having a lateral width smaller than a radius of the central heating coil (MC);
and wherein the sub heating coils are divided into a first group made up of adjacent sub heating coils of which number is equal to or greater than a half and less than the total, and a second group made up of the remainder of the sub heating coils;
and wherein the controller (F) supplies, to the second group of the sub heating coils, a total sum of the power being greater than a total sum of induction heating electric power supplied from the inverter circuit (MIV, SIV1 - SIV4) to the first group of the sub heating coils then reduces the total sum of the induction heating electric power supplied to the second group of the sub heating coils, and supplies, from the inverter circuit (MIV, SIV1 - SIV4) to the first group of the sub heating coils, a total sum of power being greater than the said total sum;
and wherein the controller (F) repeats the energizing switching operation for the first and second groups of the sub heating coils a plurality of number of times.

2. The induction heating cooker of claim 1, further comprising:
a third induction heating unit which is adjacently disposed below the top plate (21),
wherein the storage space is configured to store the respective induction heating coils of the first, second, and third heating units inside the main unit (A) below the top plate (21);
and wherein the third heating unit includes
a circular heating coil (7) having a diameter smaller than the outer diameter of the heating coil of the second heating unit.

3. The induction heating cooker of claim 1, wherein
the first induction heating unit and second induction heating unit are disposed adjacently arrayed in a lateral direction below the top plate (21)
and wherein a distance between the heating coils of the first and second heating units is set greater than distances between both left and right wall faces of the storage space and the heating coils of the first and second heating units.

4. The induction heating cooker of claim 1, further comprising:
a third induction heating unit which is adjacently disposed below the top plate (21),
wherein the storage space is configured to store the respective induction heating coils of the first, second, and third heating units inside the main unit (A) below the top plate (21);
and wherein the third heating unit includes
a circular heating coil (7) having a diameter smaller than the outer diameter of the heating coil of the second heating unit;
and wherein a maximum heating power of the third heating unit is set smaller than maximum heating powers of the first and second heating units;
and wherein a mutual distance between the heating coils of the first and second heating units is set greater than distances between the heating coil of the third heating unit and the heating coils of the first and second heating units.

5. The induction heating cooker of claim 1,
wherein the lateral width of the top plate (21) is set greater than a maximum lateral width of the storage space so as to protrude in the left and right directions further than the lateral width of the storage space.

6. The induction heating cooker of claim 1, further comprising:
a third induction heating unit which is adjacently disposed below the top plate (21),
wherein the storage space is configured to store the respective induction heating coils of the first, second, and third heating units is provided inside the main unit (A) below the top plate (21);
and wherein a heating coil of the third heating unit has the same outer diameter as that of the central heating coil (MC) of the first heating unit,
and wherein the third heating unit includes
a circular coil having a diameter smaller than the outer diameter of the heating coil of the second heating unit.

7. The induction heating cooker of any one of claims 1 to 6, wherein the heating coil of the second induction heating unit comprises two portions of
an inner toroidal coil, and
an outer toroidal coil surrounding the inner troidal coil;
and wherein the inverter circuit (MIV, SIV1-SIV4) is configured to drive each of the two toroidal coils independently from one another.

8. The induction heating cooker of any one of claims 1 to 6, wherein the operating unit (60) includes
a first selection unit (E1) for a cooking menu that prioritizes heating speed, and
a second selection unit (E2) for a cooking menu that prioritizes uniformity of heating;
and wherein the controller (F) sets, in a case where the first selection unit (E1) has been selected, directions of high-frequency currents in adjacent regions of the central heating coil (MC) and the first and second sub heating coils disposed on both sides of the central heating coil (MC) to be the same, and in a case where the second selection unit (E2) has been selected, switches the directions of the high-frequency currents thereof so that their directions are inverse to one another.

9. The induction heating cooker of any one of claims 1 to 6, wherein substantially equal values of rated minimum heating power are set for the first induction heating unit and the second induction heating unit.

10. The induction heating cooker of any one of claims 1 to 6, wherein the operating unit (60) includes
a convection promotion control selection unit by which a user is allowed to select a control mode for promoting the convection of a cooking target;
and wherein the controller (F) controls, in a case where the selection operation is performed on the selection unit, the directions of the high-frequency currents in adjacent regions of the central heating coil (MC) and the first and second sub heating coils disposed on both sides of the central heating coil (MC), and also changes an operation condition for the plurality of sub heating coils to drive heating.

11. The induction heating cooker of any one of claims 1 to 6, wherein the inverter circuit (MIV, SIV1-SIV4) includes a semiconductor switching element;
and wherein the switching element is formed of wide bandgap semiconductor.

12. The induction heating cooker of claims 11, wherein the wide bandgap semiconductor is made up of silicon carbide, gallium nitride-based material, diamond, or gallium nitride.

## Patentansprüche

1. Ein Induktionskochfeld umfassend:
eine Haupteinheit (A) aufweisend, auf einer Oberseite davon, eine Kopfplatte (21), auf der ein zu heizendes Objekt (N) wie beispielsweise ein Topf, in das ein zu kochendes Objekt gelegt ist, positioniert ist;
eine erste Induktionsheizeinheit und eine zweite Induktionsheizeinheit, die benachbart unterhalb der Kopfplatte (21) angeordnet sind;
einen Wechselrichterkreis (MIV, SIV1 - SIV4), der ausgebildet ist zum Versorgen einer Induktionsheizspule von jeder der Induktionsheizeinheiten mit elektrischer Induktionsheizleistung;
eine Steuereinheit (F), die ausgebildet ist zum Steuern einer Leistung des Wechselrichterkreises (MIV, SIV1- SIV4); und
eine Betriebseinheit (60), die ausgebildet ist zum Anweisen der Steuereinheit (F) zum Starten des Heizens oder zum Durchführen eines Festlegens einer Heizleistung usw.;
wobei ein länglicher eckiger Speicherraum, der ausgebildet ist zum Unterbringen der zugehörigen Induktionsheizspulen der ersten und der zweiten Heizeinheit, innerhalb der Haupteinheit (A) unterhalb der Kopfplatte (21) vorgesehen ist; und
wobei die erste Heizeinheit eine kreisförmige zentrale Heizspule (MC) und mehrere längliche Seitenheizspulen (SC1- SC4), die um die zentrale Heizspule (MC) herum angeordnet sind, umfasst; und
wobei die zweite Heizeinheit eine kreisförmige Heizspule (6RC) umfasst, die einen Durchmesser aufweist, der kleiner ist, als ein Durchmesser der ersten Heizeinheit und größer ist, als ein äußerer Durchmesser der zentralen Heizspule (MC); und
wobei die erste Heizeinheit ausgebildet ist, um ein automatisches oder ein manuelles Schalten ihres Betriebs zwischen einem Induktionsheizen vermittels der zentralen Heizspule (MC) alleine und einem zusammenwirkenden Heizen vermittels der zentralen Heizspule (MC) und der Seitenheizspulen zu erlauben, abhängig von einer Größe des zu heizenden Objekts (N); und
wobei die Seitenheizspulen (SC1 - SC4) der ersten Induktionsheizeinheit vier oder mehr Unterheizspulen von jeweils flacher Form umfassen, angeordnet in der Nähe von beiden Seiten der zentralen Heizspule (MC) und aufweisend eine laterale Weite, die kleiner ist, als ein Radius der zentralen Heizspule (MC); und
wobei die Unterheizspulen sich gliedern in eine erste Gruppe aus benachbarten Unterheizspulen, deren Zahl gleich oder größer ist als eine Hälfte und geringer ist als die Gesamtzahl, und in eine zweite Gruppe aus dem Rest der Unterheizspulen; und
wobei die Steuereinheit (F) die zweite Gruppe der Unterheizspulen versorgt mit einer Gesamtsumme der Leistung, die größer ist als eine Gesamtsumme an elektrischer Induktionsheizleistung, mit der die erste Gruppe der Unterheizspulen von dem Wechselrichterkreis (MIV, SIV1 - SIV4) versorgt wird, dann die Gesamtsumme der elektrischen Induktionsheizleistung, mit der die zweite Gruppe der Unterheizspulen versorgt wird, reduziert, und von dem Wechselrichterkreis (MIV, SIV1-SIV4) an die erste Gruppe der Unterheizspulen eine Gesamtsumme an Leistung liefert, die größer ist als die besagte Gesamtsumme; und
wobei die Steuereinheit (F) den energiezuführenden Schaltbetrieb für die erste und zweite Gruppe der Unterheizspulen mehrmals wiederholt.

2. Das Induktionskochfeld gemäß Anspruch 1, darüber hinaus umfassend:
Eine dritte Induktionsheizeinheit, die benachbart unterhalb der Kopfplatte (21) angeordnet ist, wobei der Speicherraum ausgebildet ist zum Unterbringen der zugehörigen Induktionsheizspulen der ersten, der zweiten und der dritten Heizeinheit innerhalb der Haupteinheit (A) unterhalb der Kopfplatte (21); und
wobei die dritte Heizeinheit eine kreisförmige Heizspule (7) umfasst, die einen Durchmesser aufweist, der kleiner ist als der äußere Durchmesser der Heizspule der zweiten Heizeinheit.

3. Das Induktionskochfeld gemäß Anspruch 1,
wobei die erste Induktionsheizeinheit und die zweite Induktionsheizeinheit benachbart aufgestellt angeordnet sind in einer Lateralrichtung unter der Kopfplatte (21), und
wobei ein Abstand zwischen den Heizspulen der ersten und der zweiten Heizeinheit größer festgelegt ist als Abstände zwischen sowohl linken und rechten Wandflächen des Speicherraums als auch den Heizspulen der ersten und zweiten Heizeinheit.

4. Das Induktionskochfeld nach Anspruch 1, darüber hinaus umfassend:
eine dritte Induktionsheizeinheit, die benachbart unterhalb der Kopfplatte (21) angeordnet ist, wobei der Speicherraum ausgebildet ist zum Unterbringen der zugehörigen Induktionsheizspulen der ersten, der zweiten und der dritten Heizeinheit innerhalb der Haupteinheit (A) unterhalb der Kopfplatte (21); und
wobei die dritte Heizeinheit eine kreisförmige Heizspule (7) umfasst, die einen Durchmesser aufweist, der kleiner ist als der äußere Durchmesser der Heizspule der zweiten Heizeinheit; und
wobei eine maximale Heizleistung der dritten Heizeinheit kleiner eingestellt ist als maximale Heizleistungen der ersten und der zweiten Heizeinheit; und
wobei ein wechselseitiger Abstand zwischen den Heizspulen der ersten und der zweiten Heizeinheit größer eingestellt ist als Abstände zwischen der Heizspule der dritten Heizeinheit und den Heizspulen der ersten und der zweiten Heizeinheit.

5. Das Induktionskochfeld gemäß Anspruch 1,
wobei die laterale Weite der Kopfplatte (21) größer eingestellt ist als eine maximale laterale Weite des Speicherraums, um in die linke und in die rechte Richtung weiter vorzustehen, als die laterale Weite des Speicherraums.

6. Das Induktionskochfeld gemäß Anspruch 1, darüber hinaus umfassend:
eine dritte Induktionsheizeinheit, die benachbart unterhalb der Kopfplatte (21) angeordnet ist, wobei der Speicherraum ausgebildet ist zum Unterbringen der zugehörigen Induktionsheizspulen der ersten, der zweiten und der dritten Heizeinheit innerhalb der Haupteinheit (A) unterhalb der Kopfplatte (21); und
wobei eine Heizspule der dritten Heizeinheit denselben äußeren Durchmesser aufweist wie derjenige der zentralen Heizspule (MC) der ersten Heizeinheit, und
wobei die dritte Heizeinheit eine kreisförmige Spule, die einen kleineren Durchmesser als der äußere Durchmesser der Heizspule der zweiten Heizeinheit aufweist, umfasst.

7. Das Induktionskochfeld gemäß einem der Ansprüche 1 bis 6, wobei die Heizspule der zweiten Induktionsheizeinheit zwei Teile wie folgt umfasst: eine innere Ringspule und eine äußere Ringspule, die die innere Ringspule umgibt; und
wobei der Wechselrichterkreis (MIV, SIV1 - SIV4) ausgebildet ist zum Treiben jeder der beiden Ringspulen unabhängig voneinander.

8. Das Induktionskochfeld gemäß einem der Ansprüche 1 - 6, wobei die Betriebseinheit (60) eine erste Auswahleinheit (E1) für ein Kochmenü, das eine Heizgeschwindigkeit priorisiert, und eine zweite Auswahleinheit (E2) für ein Kochmenü, das eine Gleichmäßigkeit des Heizens priorisiert, umfasst; und
wobei die Steuereinheit (F), in einem Fall, bei dem die erste Auswahleinheit (E1) ausgewählt worden ist, Richtungen von Hochfrequenzströmen in benachbarten Regionen von der zentralen Heizspule (MC) und der ersten und zweiten Unterheizspulen, die auf beiden Seiten der zentralen Heizspule (MC) angeordnet sind, so setzt, dass sie dieselben sind, und, in einem Fall, bei dem die zweite Auswahleinheit (E2) ausgewählt worden ist, die Richtungen der Hochfrequenzströme davon so schaltet, dass ihre Richtungen zueinander invers sind.

9. Das Induktionskochfeld gemäß einem der Ansprüche 1 bis 6, wobei im Wesentlichen gleiche Werte von minimalen Heizleistungen für die erste Induktionsheizeinheit und die zweite Induktionseinheit festgelegt sind.

10. Das Induktionskochfeld gemäß einem der Ansprüche 1 bis 6,
wobei die Betriebseinheit (60) eine Konvektionsaufstiegssteuerauswahleinheit beinhaltet, durch die es einem Benutzer ermöglicht ist, einen Steuermodus auszuwählen, um die Konvektion von einem zu kochenden Objekt voranzutreiben; und
wobei die Steuereinheit (F), in einem Fall, bei dem der Auswahlbetrieb in der Auswahleinheit durchgeführt wird, die Richtungen der Hochfrequenzströme in benachbarten Regionen von der zentralen Heizspule (MC) und der ersten und der zweiten Unterheizspulen, die auf beiden Seiten der zentralen Heizspule (MC) angeordnet sind, steuert und auch eine Betriebsbedingung für die mehreren Unterheizspulen zum Antrieb des Heizens ändert.

11. Das Induktionskochfeld gemäß einem der Ansprüche 1 bis 6, wobei der Wechselrichterkreis (MIV, SIV1- SIV4) ein Halbleiterschaltelement umfasst; und
wobei das Schaltelement ausgebildet ist mittels eines Halbleiters mit weiter Bandlücke.

12. Das Induktionskochfeld nach Anspruch 11, wobei der Halbleiter mit weiter Bandlücke gebildet ist aus Siliziumcarbid, einem galliumnitridbasierten Material, Diamant oder Galliumnitrid.

## Revendications

1. Dispositif de cuisson à chauffage par induction comprenant :
- une unité principale (A) ayant, sur une face supérieure de celle-ci, une plaque supérieure (21) sur laquelle est placée une cible de chauffage (N) telle qu'une casserole dans laquelle se trouve une cible de cuisson ;
- une première unité de chauffage par induction et une deuxième unité de chauffage par induction qui sont disposées de manière adjacente en dessous de la plaque supérieure (21) ;
- un circuit inverseur (MIV, SIV1-SIV4) configuré pour fournir une puissance électrique de chauffage par induction à une bobine de chauffage par induction de chacune des unités de chauffage par induction ;
- un contrôleur (F) configuré pour contrôler la sortie du circuit inverseur (MIV, SIV1-SIV4) ; et
- une unité opérationnelle (60) configurée pour donner l'instruction au contrôleur (F) de commencer le chauffage ou de procéder au réglage de la puissance de chauffage, etc. ;
- dans lequel un espace de stockage rectangulaire oblong configuré pour stocker les bobines de chauffage par induction respectives des première et deuxième unités de chauffage est prévu à l'intérieur de l'unité principale (A) en dessous de la plaque supérieure (21) ;
- et dans lequel la première unité de chauffage comprend :
- une bobine de chauffage centrale circulaire (MC), et
- une pluralité de bobines de chauffage latérales allongées (SC1-SC4) disposées autour de la bobine de chauffage centrale (MC) ;
- et dans lequel la deuxième unité de chauffage comprend
- une bobine de chauffage circulaire (6RC) ayant un diamètre inférieur à un diamètre de la première unité de chauffage et supérieur à un diamètre externe de la bobine de chauffage centrale (MC) ;
- et dans lequel la première unité de chauffage est configurée pour permettre une commutation automatique ou manuelle de son fonctionnement entre le chauffage par induction par la bobine de chauffage centrale (MC) seule, et le chauffage en coopération par la bobine de chauffage centrale (MC) et les bobines de chauffage latérales, en fonction d'une taille de la cible de chauffage (N) ;
- et dans lequel les bobines de chauffage latérales (SC1-SC4) de la première unité de chauffage par induction comprennent quatre bobines de chauffage secondaires ou plus ayant chacune une forme plate, disposées à proximité des deux côtés de la bobine de chauffage centrale (MC) et ayant une largeur latérale inférieure à un rayon de la bobine de chauffage centrale (MC) ;
- et dans lequel les bobines de chauffage secondaires sont divisées en un premier groupe constitué de bobines de chauffage secondaires adjacentes dont le nombre est supérieur ou égal à une moitié et moins du total, et un second groupe constitué du reste des bobines de chauffage secondaires ;
- et dans lequel le contrôleur (F) fournit, au second groupe des bobines de chauffage secondaires, une somme totale de la puissance supérieure à une somme totale de la puissance électrique de chauffage par induction fournie à partir du circuit inverseur (MIV, SIV1 - SIV4) au premier groupe des bobines de chauffage secondaires, puis réduit la somme totale de la puissance électrique de chauffage par induction fournie au second groupe des bobines de chauffage secondaires, et fournit, à partir du circuit inverseur (MIV, SIV1 - SIV4) au premier groupe des bobines de chauffage secondaires, une somme totale de puissance supérieure à ladite somme totale ;
- et dans lequel le contrôleur (F) répète l'opération de commutation d'excitation pour les premier et second groupes des bobines de chauffage secondaires une pluralité de nombre de fois.

2. Dispositif de cuisson à chauffage par induction selon la revendication 1, comprenant en outre :
- une troisième unité de chauffage par induction qui est disposée de manière adjacente en dessous de la plaque supérieure (21),
- dans lequel l'espace de stockage est configuré pour stocker les bobines de chauffage par induction respectives des première, deuxième et troisième unités de chauffage à l'intérieur de l'unité principale (A) en dessous de la plaque supérieure (21) ;
- et dans lequel la troisième unité de chauffage inclut
- une bobine de chauffage circulaire (7) ayant un diamètre inférieur au diamètre externe de la bobine de chauffage de la deuxième unité de chauffage.

3. Dispositif de cuisson à chauffage par induction selon la revendication 1, dans lequel :
- la première unité de chauffage par induction et la deuxième unité de chauffage par induction sont disposées en réseau de manière adjacente dans une direction latérale en dessous de la plaque supérieure (21),
- et dans lequel une distance entre les bobines de chauffage des première et deuxième unités de chauffage est définie comme étant supérieure aux distances entre les faces de paroi gauche et droite de l'espace de stockage et les bobines de chauffage des première et deuxième unités de chauffage.

4. Dispositif de cuisson à chauffage par induction selon la revendication 1, comprenant en outre :
- une troisième unité de chauffage par induction qui est disposée de manière adjacente en dessous de la plaque supérieure (21),
- dans lequel l'espace de stockage est configuré pour stocker les bobines de chauffage par induction respectives des première, deuxième et troisième unités de chauffage à l'intérieur de l'unité principale (A) en dessous de la plaque supérieure (21) ;
- et dans lequel la troisième unité de chauffage inclut :
- une bobine de chauffage circulaire (7) ayant un diamètre inférieur au diamètre externe de la bobine de chauffage de la deuxième unité de chauffage;
- et dans lequel une puissance de chauffage maximale de la troisième unité de chauffage est définie à une valeur inférieure aux puissances de chauffage maximales des première et deuxième unités de chauffage ;
- et dans lequel une distance mutuelle entre les bobines de chauffage des première et deuxième unités de chauffage est définie à une valeur supérieure aux distances entre la bobine de chauffage de la troisième unité de chauffage et les bobines de chauffage des première et deuxième unités de chauffage.

5. Dispositif de cuisson à chauffage par induction selon la revendication 1,
- dans lequel la largeur latérale de la plaque supérieure (21) est définie à une valeur supérieure à une largeur latérale maximale de l'espace de stockage de sorte à faire saillie dans les directions gauche et droite plus loin que la largeur latérale de l'espace de stockage.

6. Dispositif de cuisson à chauffage par induction selon la revendication 1, comprenant en outre :
- une troisième unité de chauffage par induction qui est disposée de manière adjacente en dessous de la plaque supérieure (21),
- dans lequel l'espace de stockage configuré pour stocker les bobines de chauffage par induction respectives des première, deuxième et troisième unités de chauffage est prévu à l'intérieur de l'unité principale (A) en dessous de la plaque supérieure (21) ;
- et dans lequel une bobine de chauffage de la troisième unité de chauffage a le même diamètre externe que celui de la bobine de chauffage centrale (MC) de la première unité de chauffage,
- et dans lequel la troisième unité de chauffage inclut
- une bobine circulaire ayant un diamètre inférieur au diamètre externe de la bobine de chauffage de la deuxième unité de chauffage.

7. Dispositif de cuisson à chauffage par induction selon l'une quelconque des revendications 1 à 6, dans lequel la bobine de chauffage de la deuxième unité de chauffage par induction comprend deux parties :
- une bobine toroïdale interne, et
- une bobine toroïdale externe entourant la bobine toroïdale interne ;
- et dans lequel le circuit inverseur (MIV, SIV1-SIV4) est configuré pour entraîner chacune des deux bobines toroïdales indépendamment l'une de l'autre.

8. Dispositif de cuisson à chauffage par induction selon l'une quelconque des revendications 1 à 6, dans lequel l'unité opérationnelle (60) inclut :
- une première unité de sélection (E1) pour un menu de cuisson qui donne la priorité à la vitesse de chauffage, et
- une seconde unité de sélection (E2) pour un menu de cuisson qui donne la priorité à l'uniformité de chauffage ;
- et dans lequel le contrôleur (F) définit, dans un cas où la première unité de sélection (E1) a été sélectionnée, des directions de courants haute fréquence dans des régions adjacentes de la bobine de chauffage centrale (MC) et des première et seconde bobines de chauffage secondaires disposées sur les deux côtés de la bobine de chauffage centrale (MC) comme étant identiques, et dans un cas où la seconde unité de sélection (E2) a été sélectionnée, commute les directions des courants haute fréquence de celles-ci de sorte que leurs directions soient inverses l'une par rapport à l'autre.

9. Dispositif de cuisson à chauffage par induction selon l'une quelconque des revendications 1 à 6, dans lequel des valeurs sensiblement égales de puissance de chauffage minimale nominale sont définies pour la première unité de chauffage par induction et la deuxième unité de chauffage par induction.

10. Dispositif de cuisson à chauffage par induction selon l'une quelconque des revendications 1 à 6, dans lequel l'unité opérationnelle (60) inclut :
- une unité de sélection de contrôle de stimulation de convection au moyen de laquelle un utilisateur est autorisé à sélectionner un mode de contrôle pour favoriser la convection d'une cible de cuisson ;
- et dans lequel le contrôleur (F) contrôle, dans un cas où l'opération de sélection est effectuée sur l'unité de sélection, les directions des courants haute fréquence dans des régions adjacentes de la bobine de chauffage centrale (MC) et des première et seconde bobines de chauffage secondaires disposées sur les deux côtés de la bobine de chauffage centrale (MC), et change également une condition de fonctionnement pour la pluralité des bobines de chauffage secondaire pour entraîner le chauffage.

11. Dispositif de cuisson à chauffage par induction selon l'une quelconque des revendications 1 à 6, dans lequel le circuit inverseur (MIV, SIV1-SIV4) inclut un élément de commutation semi-conducteur ;
- et dans lequel l'élément de commutation est formé d'un semi-conducteur à large bande interdite.

12. Dispositif de cuisson à chauffage par induction selon la revendication 11, dans lequel le semi-conducteur à large bande interdite est constitué de carbure de silicium, d'un matériau à base de nitrure de gallium, de diamant ou de nitrure de gallium.
